(19) Europäisches Patentamt
European Patent Office
Office européen des brevets

(11) **EP 4 219 251 B1**

(12) **EUROPÄISCHE PATENTSCHRIFT**

(45) Veröffentlichungstag und Bekanntmachung des Hinweises auf die Patenterteilung:
**12.03.2025 Patentblatt 2025/11**

(21) Anmeldenummer: **23153930.5**

(22) Anmeldetag: **30.01.2023**

(51) Internationale Patentklassifikation (IPC):
**B60S 3/06** (2006.01)

(52) Gemeinsame Patentklassifikation (CPC):
**B60S 3/066; B60S 3/063**

(54) **STEUERVERFAHREN FÜR EINE FAHRZEUG-BEHANDLUNGSANLAGE**

CONTROL METHOD FOR A VEHICLE TREATMENT SYSTEM

PROCÉDÉ DE COMMANDE POUR UNE INSTALLATION DE TRAITEMENT DE VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **31.01.2022 DE 102022102175**
**31.01.2022 DE 202022100533 U**

(43) Veröffentlichungstag der Anmeldung:
**02.08.2023 Patentblatt 2023/31**

(60) Teilanmeldung:
**24178456.0 / 4 446 178**

(73) Patentinhaber: **Otto Christ AG**
**87734 Benningen (DE)**

(72) Erfinder:
• **Spieß, Jonas**
**87734 Benningen (DE)**

• **Christ, Markus**
**87700 Memmingen (DE)**

(74) Vertreter: **ERNICKE Patent- und Rechtsanwälte PartmbB**
**Beim Glaspalast 1**
**86153 Augsburg (DE)**

(56) Entgegenhaltungen:
**EP-A1- 3 936 392      US-A1- 2008 300 724**

• **OLOMSKI J: "Bahnführung von Industrierobotern", 30 November 1988 (1988-11-30), XP009542653, ISBN: 978-3-528-06364-1, Retrieved from the Internet <URL:https://ebookcentral.proquest.com/lib/epo-ebooks/detail.action?docID=6873167& query=9783663142249> [retrieved on 20221019]**

# EP 4 219 251 B1

**Beschreibung**

Die vorliegende Erfindung betrifft ein Steuerverfahren für eine Fahrzeug-Behandlungsanlage mit ein, zwei oder mehr Behandlungsaggregaten, die durch steuerbare Aktoren bewegbar sind, um eine Oberflächenbehandlung eines Fahrzeugs auszuführen. Die Erfindung betrifft weiterhin ein zugehöriges Softwareprodukt, ein Steuergerät und eine zugehörige Fahrzeug-Behandlungsanlage.

In der Praxis bekannte Fahrzeug-Behandlungsanlagen zeigen ein Bewegungsverhalten für die Stellbewegungen der Behandlungsaggregate relativ zum Fahrzeug, das zumindest in zahlreichen Bewegungsphasen ungelenk und abgehackt erscheint. An der Bewegung eines Behandlungsaggregats sind oft mehrere Aktoren beteiligt, deren Ansteuerung oft vollkommen separat erfolgt. Das gilt insbesondere dann, wenn ein Aktor eine Mehrfach-Antriebsfunktion hat und zu einer Teil-Bewegung von zwei oder mehr Behandlungsaggregaten beiträgt.

Aus EP 3 936 392 A1 ist eine konventionelle Fahrzeug-Behandlungsanlage bekannt, bei der vorbekannte Behandlungsprogramme zur Anpassung an ein konkret zu waschendes Fahrzeug parametrisiert und angepasst werden. Das Fahrzeug wird lokal über eine Kamera erfasst und es wird eine Anfrage an ein cloudbasiertes System übermittelt. Für die Verbesserung des lokal ausgeführten Behandlungsprogramms wird die leistungsfähigere Verarbeitung der zentralen und cloudbasierten Erkennung von Bildinformationen genutzt. Die cloudbasierte Erkennung hat Zugriff auf Bilddaten, die von einer Vielzahl von Fahrzeug-Behandlungsanlagen übermittelt werden, und weitere Datenbankinhalte über bekannte Fahrzeug-Typen, sodass in dem Cloudsystem eine bessere Datenbasis für vergleichende Analysen gegeben ist als bei einer rein lokalen Verarbeitung. In die Anpassung und Parametrisierung des Behandlungsprogramms an der lokalen Fahrzeug-Behandlungsanlage gehen Geometrie-Informationen oder Steueranweisungen ein, die als Inhalt einer Steuerparameter-Nachricht empfangen werden, wobei diese Steuerparameter-Nachricht von dem cloudbasierten Datenverarbeitungsdienst erstellt und versendet wird.

Aus US 2008/300724 A1 ist ein Steuerverfahren für die Bewegung der Horizontalbürste einer Fahrzeugwaschanlage bekannt, die einen ersten und einen zweiten Vektor-Geschwindigkeitssteuermodus für die Bürste bereitstellt sowie eine Wechsellogik zwischen diesen Steuermodi. Der erste Steuermodus basiert auf einer Messung des Aufnahmestroms des Drehantriebs der Bürste, der zweite Steuermodus basiert auf einer geometrischen Begrenzung der Bürsten Eintauchtiefe.

Im technischen Gebiet der Steuerung von Industrierobotern sind weitere Roboter-Steuerverfahren für die Bahnführung bekannt.

Bisher bekannte Steuerverfahren und Fahrzeug-Behandlungsanlagen sind nicht optimal ausgebildet. Es ist Aufgabe der vorliegenden Erfindung, ein verbessertes Steuerverfahren aufzuzeigen. Es ist ferner Aufgabe der vorliegenden Erfindung, eine Behandlungsanlage mit einem verbesserten Bewegungsverhalten aufzuzeigen.

Die Fahrzeug-Behandlungsanlage umfasst ein, zwei oder mehr Behandlungsaggregate, die über steuerbare Aktoren bewegbar sind. Unter der Bewegung eines Behandlungsaggregats wird nachfolgend eine Stellbewegung relativ zum Fahrzeug verstanden. Die Stellbewegung kann insbesondere - relativ zum Fahrzeug - multidimensional sein, d.h. mehrere translatorische und/oder rotatorische Anteile umfassen bzw. durch eine Kombination von mehreren Teilbewegungen von rotatorischen und/oder translatorischen Aktoren hervorgerufen sein.

Die Behandlungsaggregate können beliebig ausgebildet sein und eine berührende oder berührungslose Oberflächenbehandlung des Fahrzeugs ausführen. Es kann sich beispielsweise um ein- oder mehrteilige Bürsten (Waschbürsten, Polierbürsten, Dachbürsten, Seitenbürsten, Radwaschbürsten etc.), Gebläse (Dachtrockner, Seitentrockner) und/oder bewegliche Applikatoren von Schäumen und/oder Fluiden (Hochdruck-Düsen, Schaum-Düsen) handeln. Zwei oder mehr Behandlungsaggregate können teilweise oder vollständig eine gemeinsame Stützstruktur aufweisen. Beispielsweise können zwei oder mehr Behandlungsaggregate gemeinsam an einem bewegbaren Portal oder einem fahrbaren Träger der Behandlungsanlage gelagert sein.

Es ist möglich, dass ein Behandlungsaggregat durch eine Gruppe von zwei oder mehr Aktoren bewegt wird. Ferner ist es möglich, dass mindestens ein Aktor an der Bewegung von zwei oder mehr Behandlungsaggregaten beteiligt ist. Die Behandlungsaggregate sind über Stützglieder mit den Aktoren verbunden. Die Geometrie der Stützglieder ist bekannt.

Die Aktoren sind dazu ausgebildet, die ein, zwei oder mehr Behandlungsaggregate relativ zu einem zu behandelnden Fahrzeug zu bewegen. Die Aktoren können somit als Stell-Aktoren bezeichnet werden.

Nachfolgend wird ein Steuerverfahren beschrieben, das einen ersten eigenständigen Aspekt der vorliegenden Offenbarung darstellt.

Weiter unten wird zusätzlich eine Fahrzeug-Behandlungsanlage als ein zweiter eigenständiger Aspekt der Offenbarung erläutert, der in Kombination mit dem ersten Aspekt nutzbar ist oder unabhängig davon.

Die Aspekte können von unterschiedlichen Personen oder Unternehmen sowie zu unterschiedlichen Zeitpunkten und/oder an unterschiedlichen Orten eingesetzt werden und sind somit vollständig unabhängig voneinander nutzbar. Andererseits bilden die Aspekte ein gemeinsames Konzept, da sie jeweils allein oder in Kombination einen Beitrag dazu leisten, ein verbessertes Bewegungsverhalten für eine Fahrzeugbehandlungsanlage zu ermöglichen, das insbesondere synchronisierte Beschleunigungen für eine Gruppe von Aktoren umfasst, die gemeinsam ein, zwei oder mehrere Behandlungsaggregate bewegen. Ein solches Bewegungsverhalten ist geschmeidig und führt zu einem verringerten Energieverbrauch und Verschleiß. Es ermöglicht weiterhin eine besonders zügige Durchführung eines Behandlungsvorgangs. Für die Vorgabe des Bewegungsverhaltens wird bevorzugt ein Dynamikplan eingesetzt, der in einer geordneten Datenstruktur eine Mehrzahl von Soll-Werten für die Bewegungen der mehreren Aktoren umfasst, wobei die Soll-Werte mindestens eine Bewegungsgröße des jeweiligen Aktors über die Dauer eines Behandlungs-Abschnitts definieren. Der Dynamikplan löst sich somit von einer reinen Momentanbetrachtung und ebenfalls von einem singulären Aktorbezug.

Nachfolgend wird zunächst ein Steuerverfahren behandelt, aus dem die Entstehung des Dynamikplans und des Bewegungsverhaltens nachvollziehbar sind. Weiter unten wird die Behandlungsanlage mit dem neuartigen Bewegungsverhalten erläutert. Die Merkmale der Behandlungsanlage können sich direkt oder mittelbar aus der Anwendung des Steuerverfahrens ergeben. Es ist alternativ möglich, dass die offenbarte Behandlungsanlage unabhängig von der Ausführung des Steuerverfahrens gebildet wird.

Das Steuerverfahren gemäß dem ersten Aspekt der vorliegenden Offenbarung umfasst zumindest die folgenden Schritte:

- Erstellen oder Einlesen eines Ablaufplans für eine Fahrzeugbehandlung, wobei der Ablaufplan Stellpositionen für eine Mehrzahl von Aktoren als Stellwerte (Zustandswerte) in einer vorgegebenen Reihenfolge aufweist;
- Erstellen eines Bewegungsplans für die Fahrzeugbehandlung, wobei der Bewegungsplan einen Soll-Pfad, eine Soll-Stellrate und bevorzugt eine Soll-Stellratenänderung für die Mehrzahl der Aktoren umfasst und zwar als (mathematische) Funktionen in Bezug auf eine Ablaufvariable;
- Erstellen eines Dynamikplans für die Fahrzeugbehandlung, wobei der Dynamikplan Soll-Werte für die Bewegungen der Aktoren in Bezug auf eine Zeitvariable umfasst;
- und wobei der Dynamikplan aus dem Bewegungsplan durch eine lokale Streckung und/oder Stauchung mittels einer Zeitskalierung erzeugt wird.

Die Soll-Werte für die Bewegungen der Aktoren können im Dynamikplan in einer beliebigen Form vorliegen. Besonders bevorzugt können die Soll-Werte in Form von zumindest einer der folgenden Bewegungsgrößen vorliegen:

- Als eine Soll-Trajektorie für die Mehrzahl der Aktoren in Bezug auf die Zeitvariable, UND/ODER
- Als eine Soll-Geschwindigkeit für die Mehrzahl der Aktoren in Bezug auf die Zeitvariable, UND/ODER
- Als eine Soll-Beschleunigung für die Mehrzahl der Aktoren in Bezug auf die Zeitvariable, UND/ODER
- Als ein Soll-Ruck für die Mehrzahl der Aktoren in Bezug auf die Zeitvariable.

Die Bewegungsgrößen können in einer beliebigen Abbildungsform vorliegen, beispielsweise in Form einer mathematisch definierten Funktion oder in Form von Werte-Tupeln oder in Form einer Liste oder Tabelle. Sie schaffen jeweils eine Vielzahl von Zuordnungen je eines Soll-Werts zu einem Wert der Zeitvariablen.

Das Steuerverfahren umfasst bevorzugt weiterhin ein Ansteuern der Aktoren während der Durchführung der Fahrzeugbehandlung mit einer Regelung, insbesondere mit einer Zustandsregelung, auf Basis der Soll-Werte des Dynamikplans.

Ein solches Steuerverfahren hat verschiedene Vorteile. Es überwindet eine strikte Verbindung zwischen räumlichen und zeitlichen Einflüssen bei der Planung eines Behandlungsvorgangs.

Der Ablaufplan kann auf beliebige Weise erzeugt sein oder werden. Besonders bevorzugt kann er auf Basis von Konturerkennungsdaten des Fahrzeugs erzeugt sein. Für die Erzeugung des Ablaufplans kann ein separates Planungsverfahren vorliegen. Es kann unabhängig von oder in Kombination mit dem Steuerverfahren ausgeführt werden. Weiterhin kann ein Ablaufplan, der durch das Planungsverfahren erzeugt ist, auf einem Datenträger gespeichert werden. Im Steuerverfahren kann ein gespeicherter Ablaufplan eingelesen und weiterverarbeitet werden.

Durch die getrennte Erstellung von Bewegungsplan und Dynamikplan sowie die Trennung von Ablaufvariable und Zeitvariable gestattet das Steuerverfahren somit eine größere Freiheit in der Planung eines Behandlungsverfahrens. Insbesondere können physikalische Grenzen und vorgegebene Betriebsgrenzen der Aktoren sowie Interdependenzen zwischen den Bewegungen der mehreren Behandlungsaggregate in separaten Vorgangs-Schritten berücksichtigt werden, sodass keine Widersprüche in den Planungsvorgaben für die Bewegungen der einzelnen Behandlungsaggregate entstehen oder auflösbar sind.

Das Überwinden solcher Widersprüche führt dazu, dass die Einzel-Bewegungen der Aktoren in vollständig aufeinander abgestimmter Weise in einem gemeinsamen Ablauf geplant und in einem Behandlungsvorgang umgesetzt werden können.

In dem Steuerverfahren gemäß der vorliegenden Offenbarung werden zunächst (ideale oder tolerierte) Soll-Raumlagen der Behandlungsaggregate in einer bestimmten Reihenfolge geplant. Dies kann voll-automatisch, teil-automatisch oder manuell erfolgen.

Für diese Soll-Raumlagen kann dann (noch) zeitunabhängig eine Kinematik geplant werden, mit welcher eine gute Ansteuerbarkeit der Aktoren unterstützt wird. Diese Kinematik wird auf Basis von parametrierbaren Funktionen geschaffen, die allerdings in Bezug auf eine Ablaufvariable definiert werden. Die Ablaufvariable kann als eine Quasi-Zeit verstanden werden, die nicht mit der Real-Zeit übereinstimmt. Die Ablaufvariable ist dazu geeignet, Stellpositionen und sich daraus ergebende Werte eines Soll-Pfads einer gemeinsamen Variable (Hilfsvariable) zuzuordnen. Ein Wert dieser Ablaufvariable kann dabei für einen geplanten Soll-Zustand stehen und der Verlauf der Werte der Ablaufvariable kann definieren, in welcher Reihenfolge diese Soll-Zustände eintreten sollen. Die Ablaufvariable definiert ferner auf einer Skala einen "Abstand" zwischen diesen Soll-Zuständen. Dies ist jedoch noch kein in Sekunden messbarer Zeitabstand, sondern eine reine rechnerische Zwischen-Bezugsgröße. Die Ablaufvariable wird erst durch eine Zeitskalierung auf die Real-Zeit abgebildet.

Die Zeitskalierung zur Abbildung auf die Real-Zeit führt zu einem wesentlichen Planungs-Freiheitsgrad, der bei der direkten Verwendung einer Zeitvariable nicht zur Verfügung steht: Im Rahmen der Zeitskalierung kann die Ablaufvariable und damit die Reihenfolge der zugeordneten Soll-Werte in positiver UND zumindest abschnittsweise in negativer Richtung durchlaufen werden. Die Steigung der Zeitskalierung $ds/dt$ kann also abschnittweise negativ sein. Mit anderen Worten können bestimmte Folgen oder Posen in Rückwärtsrichtung durchlaufen werden, um Widersprüche aufzulösen, die bei einer Planung rein auf Basis einer Zeitvariablen ohne Lösungsoption sind. Die dafür notwendigen Schritte können vollständig automatisiert ablaufen und ermöglichen insbesondere eine automatisierte Planung und Steuerung bei Vorliegen einer einfach oder mehrfach verketteten Kinematik. Hierauf wird weiter unten noch eingegangen.

Durch die Erstellung eines Dynamikplans per Zeitskalierung wird die bezogen auf die Ablaufvariable geplante Kinematik also auf eine Zeitvariable adaptiert, die der Real-Zeit entspricht. Dadurch werden die geplanten Bewegungen mit einer solchen Dynamik ausführbar, dass bestimmte vorgebbare Kriterien sicher eingehalten werden, und zwar unabhängig von der Komplexität und Anzahl der Behandlungsaggregate. Solche Kriterien können beispielsweise eine Minimierung der Gesamt-Behandlungsdauer, eine Minimierung des Energieverbrauchs, die Einhaltung vordefinierter maximaler oder minimaler Geschwindigkeiten für die Bewegung eines Behandlungsaggregats entlang einer Fahrzeugkontur sein. Eine maximale Geschwindigkeit kann dabei eine (betragsmäßig) höchste Geschwindigkeit in einer ersten Bewegungsrichtung sein. Eine minimale Geschwindigkeit kann eine (betragsmäßig) höchste Geschwindigkeit in der Gegenrichtung sein.

Durch die Trennung der Erstellung des Bewegungsplans von der Erstellung des Dynamikplans wird der Planungsvorgang robuster und es werden bessere Ergebnisse erzielt.

Die mittels des Steuerverfahrens gemäß der vorliegenden Offenbarung erzielten Bewegungen der Aktoren können teilsynchronisiert oder vollsynchronisiert sein. Eine teilsynchronisierte Bewegung der Aktoren in Bezug auf ein einzelnes Behandlungsaggregat liegt vor, wenn die für eine mehrdimensionale Stellbewegung eines Behandlungsaggregats beteiligten Aktoren (Gruppe von beteiligten Aktoren) zu gleichen Zeitphasen Beschleunigungen ausführen. Die Bewegung ist in Bezug auf das einzelne Behandlungsaggregat vollsynchronisiert, wenn die an dessen Bewegung beteiligten Aktoren in den übereinstimmenden Zeitphasen zusätzlich zueinander proportionale Beschleunigungen ausführen. Ein Dynamikplan, der gemäß den vorstehenden Schritten, insbesondere umfassend die Zeitskalierung, kann als Zwischenergebnis gespeichert werden.

Besonders bevorzugt ist ein Dynamikplan gemäß der vorliegenden Offenbarung derart ausgebildet, dass er einerseits teilsynchronisierte Bewegungen oder weiter bevorzugt vollsynchronisierte Bewegungen für die beteiligten Aktoren jedes Behandlungsaggregat vorsieht, für welches eine Planung gemäß dem vorliegenden Steuerverfahren ausgeführt wurde/wird. Darüber hinaus können untereinander teilsynchronisierte und weiter insbesondere vollsynchronisierte Bewegungen für mehrere Behandlungsaggregate vorliegen. D.h. der Dynamikplan sieht bevorzugt eine jeweils mehrdimensionale (Stell-)Bewegung für eine Gruppe von Behandlungsaggregaten vor, sodass die für eine Bewegung der mehreren Behandlungsaggregate beteiligten Aktoren zu gleichen Zeitphasen Beschleunigungen ausführen, weiterhin bevorzugt in den übereinstimmenden Zeitphasen zueinander proportionale Beschleunigungen ausführen.

Ein abgehacktes oder ruckartiges Bewegen, das häufig zu erhöhtem Verschleiß und ungünstigen Wascheergebnissen führt, kann somit verhindert werden.

Eine Steuerung einer Behandlungsanlage nach dem vorliegenden Verfahren und insbesondere das Vorliegen von teil- oder vollsynchronisierten (Stell-)Bewegungen der Aktoren kann beispielsweise anhand des folgenden Phänomens erkannt werden: Man führt mit einem Fahrzeug eine Fahrzeugbehandlung in der Fahrzeug-Behandlungsanlage durch. Dabei kann man die momentanen Geschwindigkeiten der Aktoren für die Bewegung der Dach- und Seitenbürste ermitteln. Nachfolgend ordnet man an der Außenkontur des Fahrzeugs (ohne dessen Position zu ändern) ein zusätzliches Hindernis an, beispielsweise einen Probekörper auf der Motorhaube. Das Hindernis sollte nur den Eingriffsbereich entweder der Seitenbürste oder der Dachbürste betreffen. Anschließend führt man dieselbe Fahrzeug-Behandlung nochmals aus und ermittelt erneut die momentanen Geschwindigkeiten. Stellt man fest, dass (schon) vor Erreichen des Hindernisses für die Dachbürste ein vorauseilendes Abbremsen der Portalbewegung erfolgt (weil aus der Konturerfassung bekannt ist, dass die Dachbürste dem Hindernis ausweichen muss) und gleichzeitig auch die Beschleunigung der Hubbewegung der Dachbürste einsetzt, dann sind die Bewegungen dieser Aktoren zumindest teil-synchronisiert. Ergibt sich, dass während der Umfahrung des Hindernisses auch zueinander proportionale Beschleunigungen der Portalbewegung und der Dachbürstenbewegung vorliegen, liegt eine vollsynchronisierte Bewegung dieser Aktoren vor.

Stellt man ergänzend fest, dass sich zu dem Zeitpunkt, zu dem die Abbremsung des Portals einsetzt, auch die Geschwindigkeit einer Zustell- oder Knickbewegung der Seitenbürsten ändert, liegt zwischen den hier insgesamt beteiligten Aktoren eine teilsynchronisierte Bewegung vor. Und erkennt man schließlich auch einen entsprechend proportionalen Beschleunigungswert für die geänderte Zustell- oder Knickbewegung, liegt eine vollsynchronisierte Bewegung aller beteiligten Aktoren vor.

Gemäß einer bevorzugten Ausführung kann für den Bewegungsplan und/oder den Dynamikplan zusätzlich eine Ruck-Vorgabe (Vorgabe für Änderung der Beschleunigung) als Bewegungsgröße vorgesehen sein, um einen sanften Übergang zwischen Phasen mit unterschiedlich hoher oder unterschiedlich gerichteter Beschleunigung zu erreichen. Durch eine Ruck-Vorgabe kann ein sich noch sanfter änderndes Bewegungsverhalten erzielt werden, sodass beispielsweise eine Schwingungsanregung bei hochdynamischen Behandlungsphasen (Stellbewegungen mit starken Änderungen der Momentangeschwindigkeit eines oder mehrerer Aktoren) vermindert oder auf ein vorbestimmbares Maß begrenzt wird. Hierdurch können die Dämpfungseigenschaften der Fahrzeug-Behandlungsanlage straffer ausgelegt werden, was wiederum zu einer insgesamt höheren Behandlungsgeschwindigkeit beitragen kann.

Im Ergebnis ist das Bewegungsverhalten für die Stellbewegungen der Behandlungsaggregate durch Anwendung des vorliegenden Steuerverfahrens also nicht mehr ungelenk, sondern als ein geschmeidiger und flüssiger Ablauf wahrnehmbar. Beschleunigungsphasen können ferner so geplant werden, dass hohe Antriebsenergien nur eingesetzt werden, wenn dies für eines der vorgegebenen Kriterien erforderlich ist. Unnötige abrupte Beschleunigungen (umfasst auch Abbremsungen) können somit vermieden werden, was den Energiebedarf für eine Fahrzeugbehandlung positiv beeinflusst.

Im Rahmen der Zeitskalierung können physikalische Grenzen und Betriebsgrenzen für einzelne Aktoren oder - in abgestimmter Weise - für eine Mehrzahl von Aktoren berücksichtigt werden. Dabei kann für jeden Teilabschnitt der Fahrzeugbehandlung identifizierbar sein, welche Aktorbetätigung der beschränkende Faktor ist, weil dessen Betrieb im Bereich einer physikalischen Grenze oder im Bereich einer Betriebsgrenze erfolgt, und es kann die (Stell-)Bewegung weiterer oder aller Behandlungsaggregate auf diesen Aktor angepasst werden. Dabei kann die Rolle des "beschränkenden Faktors" zwischen den Teilabschnitten der Fahrzeugbehandlungsanlage wechseln.

Im Rahmen der Zeitskalierung können alternativ oder zusätzlich physikalische Grenzen und/oder Betriebsgrenzen für die Bewegung eines oder mehrerer Behandlungsaggregate bzw. deren Zielpunkte berücksichtigt werden. So kann beispielsweise eine maximale Bahngeschwindigkeit für eine Seitenbürste oder Dachbürste entlang der Fahrzeugkontur vorgegeben sein. Wiederum alternativ oder zusätzlich können beliebige andere Vorgabekriterien gesetzt sein, die im Rahmen der Zeitskalierung berücksichtigt werden. Hierauf wird weiter unten eingegangen.

Somit ist es nicht mehr erforderlich, die Dynamik der Fahrzeug-Behandlungsanlage auf die Grenzen genau eines festgelegten Aktors auszulegen. Vielmehr kann für jeden Abschnitt der Fahrzeugbehandlung der Lösungsraum für alle möglichen Bewegungen beschrieben werden und es können die Grenzen des Lösungsraums berechnet werden. Innerhalb dieses Lösungsraums kann eine gewünschte Dynamik frei gewählt werden.

Eine Phasentrennung, d.h. eine Beschränkung der Planung des Behandlungsverfahrens auf festgelegte Phasen, kann entfallen. Bei der Planung von Behandlungsverfahren mit konventionellen Steuerverfahren waren Phasentrennungen häufig notwendig, um Widersprüche in der direkten Planung von Trajektorien zu vermeiden. Die häufigste gängige Phasentrennung sieht vor, dass für eine Phase des Behandlungsvorgangs ausschließlich eine jeweils monotone Bewegung des Portals vorliegen durfte (erste Überfahrt vorwärts, erste Überfahrt rückwärts, zweite Überfahrt vorwärts, zweite Überfahrt rückwärts). Durch das Steuerverfahren gemäß der vorliegenden Offenbarung sind die Bewegungen aller Aktoren in beliebiger Weise miteinander kombinierbar. Auf eine sequenzielle Trennung von Bewegungsphasen kann verzichtet werden.

Besondere Vorteile ergeben sich, wenn für zwei oder mehr Aktoren eine verkettete Kinematik vorliegt. Dies ist der Fall, wenn die Bewegung eines Aktors zu einer Teilbewegung von mindestens zwei Behandlungsaggregaten führt. So liegt eine verkettete Kinematik häufig in Bezug auf die Fahrbewegung des Portals vor, die gleichzeitig zu einer Teilbewegung aller Behandlungsaggregate führt, die am Portal befestigt sind. Aber auch die Bewegung eines (Lauf-) Schlittens, an dem eine Seitenwaschbürste in der Ausbildungsart einer Knick-Bürste angeordnet ist, führt zu einer Teilbewegung für mehrere Behandlungsaggregate, nämlich die Bürstensegmente dieser Seitenwaschbürste. Somit kann auch eine mehrfach verkettete Kinematik vorliegen.

Durch das Steuerverfahren gemäß der vorliegenden Offenbarung und insbesondere die Trennung der Bezugsgrößen "Reihenfolge", "Ablaufvariable" und "Zeitvariable" können auch bei Vorliegen von Aktoren mit einer einfach oder mehrfach verketteten Kinematik nahezu beliebige Fahrzeugkonturen berührend behandelt werden, ohne dass es einer Phasentrennung bedarf. So kann beispielsweise das Reinigen von konkaven Konturen erzielt werden, die bspw. an nach innen eingezogenen Karosserieteilen, unter einem Alkoven oder unter einem Dachträger vorliegen.

Gemäß dem zweiten Aspekt der vorliegenden Offenbarung ist eine Fahrzeug-Behandlungsanlage mit mindestens einem Behandlungsaggregat und einer Mehrzahl steuerbarer Aktoren zur Ausführung von Stellbewegungen des Behandlungsaggregats vorgesehen. Es liegt mindestens eine Gruppe von Aktoren vor, die dazu ausgebildet sind, gemeinsam das Behandlungsaggregat relativ zu einem zu behandelnden Fahrzeug in eine multidimensionale Stellbewegung zu versetzen. Die Fahrzeug-Behandlungsanlage umfasst eine Steuerung und mindestens einen Regler. Die Steuerung übergibt Soll-Werte an den mindestens einen Regler, auf deren Basis der Regler ein oder mehrere Stell-Signale für die Ansteuerung der Aktoren erzeugt.

Gemäß dem zweiten Aspekt der Offenbarung umfasst die Steuerung mindestens einen Dynamikplan, der in einer geordneten Datenstruktur eine Mehrzahl von Soll-Werten für die Bewegungen der Aktoren in Bezug auf eine Zeitvariable definiert.

Der Dynamikplan kann durch das Steuerverfahren nach dem ersten Aspekt der Offenbarung erzeugt sein. Er kann jedoch auch auf andere Weise oder an anderer Stelle erzeugt sein und insbesondere als vorgefertigter Plan eingelesen sein. Beispielsweise können bei Fahrzeug-Behandlungsanlagen, mit denen immer wieder übereinstimmende Fahrzeugtypen gewaschen werden, besonders optimierte Dynamikpläne erzeugt und abgespeichert werden, welche für einen spezifischen Behandlungsvorgang eingelesen und allenfalls auf eine momentane Positionierung des Fahrzeugs adaptiert werden. Dieses Vorgehen ist insbesondere bei Zug-Waschanlagen oder PKW- und LKW-Waschanlagen zur Reinigung von Flottenfahrzeugen sinnvoll.

Die Soll-Werte des Dynamikplans definieren mindestens eine Bewegungsgröße des jeweiligen Aktors über die Dauer eines Behandlungs-Abschnitts.

Besonders bevorzugt ist die Definition derart gewählt, dass die Soll-Werte eine momentane sowie eine zukünftige Bewegung des jeweiligen Aktors beschreiben. Ein Behandlungs-Abschnitt kann beispielsweise eine Front-Reinigung umfassen oder eine Heckreinigung mit einem bestimmten Behandlungsaggregat.

Für das Behandlungsaggregat ist ein Zielpunkt definiert und die Soll-Werte des Dynamikplans sind für die zugehörige Gruppe der Aktoren derart definiert, dass der Zielpunkt des Behandlungsaggregats bei einer multidimensionalen Bewegung einem Pfadverlauf folgt, der während einer Oberflächenbehandlung einen Geometriebezug gegenüber einem Konturverlauf des zu behandelnden Fahrzeugs einhält. Der Konturverlauf des zu behandelnden Fahrzeugs kann ein Flächen-Konturverlauf oder ein Linien-Konturverlauf sein. Bevorzugt definiert der Konturverlauf des zu behandelnden Fahrzeugs eine lokale Raumlage, insbesondere als eine translatorische Raumlage und/oder eine rotatorische Raumlage.

Der Dynamikplan definiert weiterhin während der Dauer des Behandlungs-Abschnitts für jede Phase mit einer mehrdimensionalen Stellbewegung des Behandlungsaggregats für die Aktoren der Gruppe zueinander synchronisierte Beschleunigungen, sodass sich bei der Ausführung der mehrdimensionalen Stellbewegung übereinstimmende Beschleunigungsphasen der Aktoren ergeben.

Die Fahrzeug-Behandlungsanlage gemäß dem zweiten Aspekt der Offenbarung zeigt also keine Phasentrennung mehr zwischen den Ansteuerungen von Aktoren, die gemeinsam ein Behandlungsaggregat bewegen. Wenn das Behandlungsaggregat für einen Behandlungs-Abschnitt gemäß dem Verlauf der Oberflächenkontur zwei oder drei getrennte Stellbewegungen benötigt, also beispielsweise eine Translation des Portals, eine Translation eines Schlitten, an welchem eine Bürste aufgehängt ist, und eine Rotation an einem Knickgelenk, werden die zugehörigen Aktoren diese Bewegungen nicht zeitlich getrennt ausführen, sondern koordiniert. Die Koordination ist dabei derart, dass die zugehörigen Beschleunigungen eines Führungs-Aktors für das Portal, eines Schiebe-Aktors für den Schlitten und eines Neigungs-Aktors für das Knickgelenk stets zu überschneidenden Zeiträumen Beschleunigungen erfahren. Dasselbe kann für alle anderen multidimensionalen Bewegungen eines Behandlungsaggregats gelten, die durch eine Gruppe von Aktoren verursacht sind.

Übereinstimmende Beschleunigungsphasen von zwei oder mehr Aktoren laufen im Wesentlichen zeitparallel ab. Sie überlappen sich also entlang der Zeitachse. Es können weiterhin für mehrere Aktoren jeweils Ketten von Beschleunigungsphasen vorliegen, wobei diese Ketten jeweils für sich nacheinander zwei, drei oder mehr aufeinanderfolgende Beschleunigungsphasen umfassen. Die Ketten können in der Makro-Betrachtung im Wesentlichen zeitglich für mehrere Aktoren der Gruppe vorliegen.

Es kann insbesondere für die Dauer einer multidimensionalen Bewegung für jeden der beteiligten Aktoren der Gruppe je eine Kette mit einer Mehrzahl von Beschleunigungsphasen vorliegen.

Auch in der Mikro-Betrachtung können zueinander überstimmende Beschleunigungsphasen, also beispielsweise eine erste Beschleunigungsphase aus einer ersten Kette für einen ersten Aktor und eine dazu übereinstimmende zweite Beschleunigungsphase aus einer zweiten Kette für einen zweiten Aktor, genau übereinstimmende Zeitdauern aufweisen. Die übereinstimmenden Beschleunigungsphasen können alternativ zu einem vorbestimmten Mindestmaß überlappen, wobei das Mindestmaß bevorzugt größer 60%, weiter bevorzugt größer 80% der Dauer der längeren Beschleunigungsphase beträgt.

Alternativ oder zusätzlich können die übereinstimmenden Beschleunigungsphasen für jeden der beteiligten Aktoren zu übereinstimmenden Zeitpunkten beginnen und enden.

Die übereinstimmenden Beschleunigungsphasen können weiter bevorzugt zu überstimmenden Zeitpunkten maximale bzw. minimale Beschleunigungen für eine Mehrzahl der beteiligten Aktoren vorsehen.

der Geometriebezug des Zielpunktes gegenüber dem Konturverlauf des zu behandelnden Fahrzeugs kann beliebig festgelegt sein und insbesondere von der Art des Behandlungsaggregats abhängen. Der Geometriebezug kann insbesondere ein fester senkrechter Abstand zur Fahrzeug-Oberfläche sein, UND/ODER ein fester Abstand zur Fahrzeug-Oberfläche sein, der unter einem vorgegebenen Einwirkwinkel relativ zur Fahrzeug-Oberfläche steht.

Der der Pfadverlauf des Zielpunktes kann sich entsprechend ergeben. Der Pfadverlauf des Zielpunktes kann insbesondere dem Konturverlauf der Fahrzeugoberfläche folgen und weiter insbesondere ein entlang der Fahrzeug-Oberfläche liegender Verlauf sein, der etwaig an Stellen der Fahrzeug-Oberfläche mit einer Krümmung, die einen vorbestimmten Grenzwert überschreitet, geglättet ist. Alternativ kann der Pfadverlauf des Zielpunktes dem Konturverlauf der Fahrzeugoberfläche mit einem parallelen Abstand folgen. Auch ein solcher Parallel-Verlauf kann etwaig an Stellen der Fahrzeug-Oberfläche mit einer Krümmung, die einen vorbestimmten Grenzwert überschreitet, geglättet sein.

Die zueinander synchronisierten Beschleunigungen sind bevorzugt überwiegend (für mindestens 60% Zeitanteil, weiter bevorzugt für mindestens 80% Zeitanteil an multidimensionalen Bewegungen) oder ausschließlich (für alle Zeitanteile der multidimensionalen Bewegungen) definiert.

Die Soll-Werte des Dynamikplans definierten für die Aktoren der Gruppe weiterhin bevorzugt zueinander vollsynchronisierte Beschleunigungen, die in übereinstimmenden Zeitphasen weiterhin zueinander proportional sind. Dies gilt insbesondere für solche multidimensionalen Stellbewegungen, mit denen das Behandlungsaggregat aus einer Ruheposition zu Beginn eines Behandlungs-Abschnitts in eine Arbeitsposition bewegt wird und/oder für solche multidimensionalen Stellbewegungen, mit denen das Behandlungsaggregat aus einer Arbeitsposition am Ende eines Behandlungs-Abschnitts in eine Ruheposition bewegt wird.

Eine Fahrzeug-Behandlungsanlage mit einer Ausbildung gemäß dem zweiten Aspekt der Offenbarung zeigt ein geschmeidiges Bewegungsverhalten bei multidimensionalen Stellbewegungen des mindestens einen Behandlungsaggregats relativ zum Fahrzeug. Dies hat Vorteile im Hinblick auf den Energieverbrauch sowie die Belastung der mechanischen Strukturen. Weiterhin ist eine erhebliche Verkürzung der Gesamtdauer eines Behandlungs-Abschnitts erreichbar.

Weitere Ausbildungen der Erfindung und deren Vorteile sind in den Unteransprüchen und der nachfolgenden Beschreibung angegeben.

Die Erfindung ist in den Zeichnungen beispielhaft und schematisch dargestellt. Es zeigen:

Figur 1-3: Eine Fahrzeug-Behandlungsanlage in drei Zuständen;

Figur 4: einen Dynamikplan für eine Fahrzeugbehandlung;

Figur 5: Erläuterungen zur Erstellung eines Ablaufplans für eine Fahrzeugbehandlung auf Basis von Konturerkennungsdaten;

Figur 6: Einen Ablaufplan mit Soll-Stellpositionen eines Aktors;

Figur 7: Einen Bewegungsplan mit einem einzelnen Soll-Pfad für den Ablaufplan gemäß Figur 6;

Figur 8: Einen Bewegungsplan mit einer Mehrzahl an Soll-Pfaden, Soll-Stellraten und Soll-Stellratenänderungen;

Figur 9: Einen Zeitskalierungsplan mit Verläufen einer abschnittsweise konstanten Skalierung und einer variablen Skalierung;

Figur 10: Ein Zustandsraum-Diagramm zur Erläuterung der Bildung einer variablen Skalierung anhand eines ersten Beispiels

Figur 11: Eine Erläuterungsdarstellung zur Erzeugung eines Dynamikplans aus einem Bewegungsplan mittels Zeitskalierung;

Figuren 12, 13: Erläuterungsdarstellung zur Erzeugung eines Ablaufplans mit einer frei definierbaren Portalbewegung, ohne Einhaltung einer Phasentrennung;

Figur 14: Ein Zustandsraum-Diagramm zur Erläuterung der Bildung einer variablen Skalierung anhand eines zweiten Beispiels;

Figur 15: Eine Beispielfunktion zur Erläuterung der abschnittsweisen Definition von parametrisierbaren (mathematischen) Funktionen für einen Bewegungsplan.

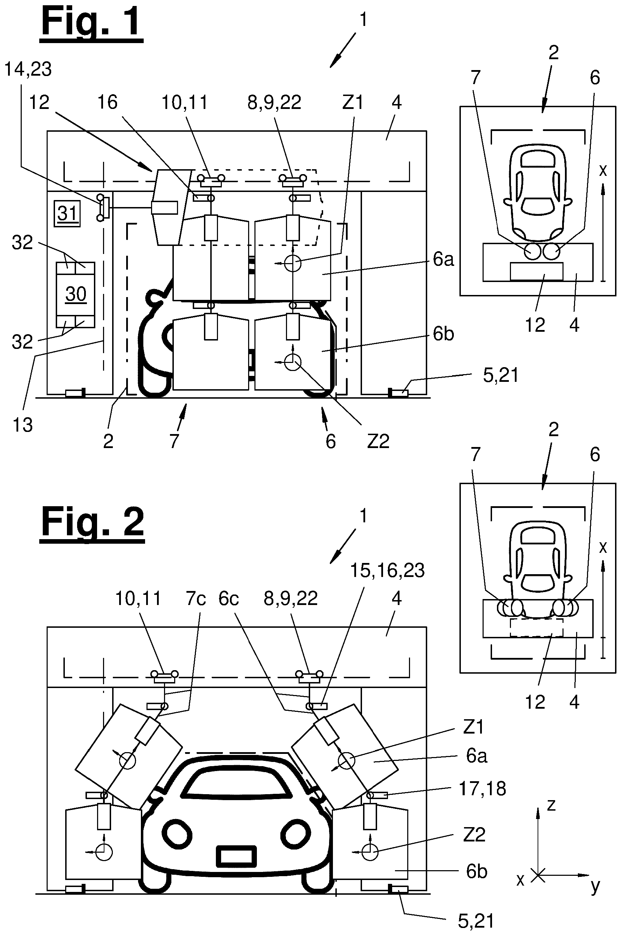

Figur 1 zeigt eine Fahrzeug-Behandlungsanlage (1) mit zwei oder mehr Behandlungsaggregaten (6,7,12), die durch steuerbare Aktoren (21, 22, 23) bewegbar sind, um eine Oberflächenbehandlung eines Fahrzeugs (3) auszuführen. Die Fahrzeug-Behandlungsanlage (1) umfasst ein Steuergerät (30) und eine Konturerfassungseinrichtung (31) zur Erfassung einer Kontur des zu behandelnden Fahrzeugs (3). Das Fahrzeug (3) ist bevorzugt vor dem Beginn eines Behandlungsvorgangs in einer definierten Behandlungszone (2) angeordnet. In diesem Fall kann eine einmalige Konturerfassung durchgeführt werden, wobei die Konturerfassungsdaten für den gesamten Behandlungsvorgang als konstant angenommen werden.

Alternativ kann eine iterative oder kontinuierliche Konturerfassung erfolgen. Dann bedarf es keiner (festen) Anordnung des Fahrzeugs (3) in der Behandlungszone (2). Nachfolgend wird aus Gründen der vereinfachten Darstellung jedoch davon ausgegangen, dass das Fahrzeug in der Behandlungszone (2) für die Dauer der Fahrzeugbehandlung fest angeordnet ist. Weiterhin wird nachfolgend vereinfachend angenommen, dass Raumkoordinaten (x,y,z) der Behandlungsanlage (1) auf Basis eines Koordinatenursprungs definiert sind, der einen festen Bezug zu der Behandlungszone (2) und damit - während der Dauer eines Behandlungsvorgangs - zu dem Fahrzeug (3) hat. Die nachfolgenden Ausführungen können jedoch ebenso auf eine andere Form der Koordinatendefinition angewendet werden, was insbesondere auch ein bewegtes Koordinatensystem umfasst.

Zwischen den Behandlungsaggregaten (6,7,12) und der Behandlungszone (2) findet für die Durchführung der Fahrzeugbehandlung eine Relativbewegung statt. Diese kann beliebig ausgebildet sein. In der nachfolgenden Darstellung wird davon ausgegangen, dass die Relativbewegung in Bezug auf das vorgenannte Koordinatensystem (x,y,z) mit dem festen Koordinatenursprung definiert ist.

Figuren 1 bis 3 zeigen die Fahrzeugbehandlungsanlage (1) und deren Behandlungsaggregate in unterschiedlichen Posen. Eine Pose definiert die Raumlage mehrerer (aktiver) Behandlungsaggregate und bevorzugt aller (aktiven) Behandlungsaggregate (die in die Planung gemäß dem vorliegenden Steuerverfahren einbezogen sind) zu einem bestimmten Moment oder Zustand.

Nachfolgend wird ein Planungsverfahren erläutert, das einen eigenständigen Aspekt der vorliegenden Offenbarung darstellt. Das Planungsverfahren umfasst die folgenden Schritte:

- Für mindestens ein Behandlungsaggregat (6,7,12): Definition eines Zielpunktes (Z1, Z2, Z3) als einen geometrischen Bezugspunkt des Behandlungsaggregats (6,7,12), dessen Raumlage (R) in Koordinaten (x,y,z) definierbar ist;
- Festlegen einer Reihenfolge (i = 0,1,2,...) von Soll-Raumlagen (Ri,R0,R1,R2, ...) des Zielpunktes (Z1), die während einer Fahrzeugbehandlung einzunehmen sind;
- Bestimmen von Stellpositionen (Pi,P0,P1,P2, ...) mindestens eines Aktors (21,22,23), der an der Bewegung des Zielpunktes (Z1) beteiligt ist, auf Basis einer bekannten Geometrie der Fahrzeug-Behandlungsanlage (1), sodass die Stellpositionen (Pi,P0,P1,P2, ...) mit den Soll-Raumlagen (Ri,R0,R1,R2, ...) des Zielpunktes (Z1) korrelieren.

Die Festlegung der Reihenfolge von Soll-Raumlagen kann auf beliebige Weise erfolgen. Sie erfolgt bevorzugt auf Basis von Konturerkennungsdaten (51) des zu behandelnden Fahrzeugs (3).

Ein Zielpunkt kann innerhalb oder außerhalb der körperlichen Abmessungen eines Behandlungsaggregats liegen.

Bei einer Bürste kann es sinnvoll sein, den Zielpunkt in die Drehachse zu legen. Es kann dann angestrebt sein, eine Soll-Raumlage dieses Zielpunktes stets mit einem festgelegten Abstand senkrecht zur Fahrzeugfläche zu positionieren.

Bei einem Behandlungsaggregat mit Fernwirkung, beispielsweise einem Trocknungsgebläse oder einer Strahlreinigungsdüse, kann es sinnvoll sein, den Zielpunkt außerhalb der körperlichen Abmessungen des Behandlungsaggregats zu definieren, beispielsweise mit einem vorgegebenen Wirkabstand mittig vor einer Düsenöffnung. Es kann dann angestrebt sein, eine Soll-Raumlage dieses Zielpunktes auf der Oberfläche des zu behandelnden Fahrzeugs zu positionieren, bevorzugt mit einem festgelegten Einwirkwinkel relativ zur Fahrzeug-Oberfläche. So kann es bei einer Trocknungsdüse erwünscht sein, dass deren Luftstrahl stets mit einem Abstand von 40 cm gegenüber der Düsenöffnung und in einem Winkel von etwa 30° gegenüber der Fahrzeug-Oberfläche auftrifft. Die vorgenannten Winkel- und Abstandswerte sind rein beispielhaft angegeben. Es kann ein beliebiger anderer Abstandswert und/oder Winkelwert vorgesehen sein.

Die Planung von Soll-Raumlagen mit einem vorgegebenen Abstand zur Fahrzeug-Oberfläche kann dazu führen, dass sich am Ende - bei der Ausführung der geplanten Oberflächenbehandlung - ein Pfadverlauf des Zielpunktes (beispielsweise einer Bürste) ergibt, der dem Konturverlauf der Fahrzeugoberfläche mit einem parallelen Abstand folgt.

Die Planung von Soll-Raumlagen auf der Oberfläche des zu behandelnden Fahrzeugs kann dazu führen, dass sich am Ende - bei der Ausführung der geplanten Oberflächenbehandlung - ein Pfadverlauf des Zielpunktes (beispiels-

EP 4 219 251 B1

weise des fernwirkenden Behandlungsaggregats) ergibt, der dem Konturverlauf der Fahrzeugoberfläche folgt.

Die vorgenannten Beispiele sind in beliebiger Weise miteinander kombinierbar. Es kann in beiden genannten Fällen angestrebt sein, dass der Pfadverlauf des Zielpunktes gegenüber dem Konturverlauf der Fahrzeug-Oberfläche geglättet wird, insbesondere dort, wo die Fahrzeug-Oberfläche eine Krümmung aufweist, die einen vorbestimmten Grenzwert überschreitet.

Die vorgenannten Pfadverläufe eines Zielpunktes können auf Basis des Planungs- und Steuerverfahrens gemäß der vorliegenden Offenbarung erzeugt werden. Sie stellen andererseits ein eigenständiges Merkmal der Fahrzeug-Behandlungsanlage gemäß der vorliegenden Offenbarung dar und könnten auch auf Basis einer manuellen Erstellung eines Dynamikplans (70) erzeugt werden, oder durch Einlesen eines Dynamikplans (70), der außerhalb der Fahrzeug-Behandlungsanlage und deren Steuerung erzeugt und gespeichert worden ist.

Das Planungsverfahren bzw. dessen Schritte können als ein separater Prozess ausgeführt werden, dessen Ergebnis als eine geordnete und computerlesbare Datenstruktur vorliegt. Die Datenstruktur kann auf einem Datenträger gespeichert sein/werden und/oder über eine Schnittstelle versendet werden.

Bevorzugt wird ein Ablaufplan aus den Raumlagen der ein oder mehreren Behandlungsaggregate bzw. deren Ziel-Punkte gebildet, die untereinander zu demselben Zustand gehören. Dementsprechend sehen die Stellpositionen im Ablaufplan für eine Mehrzahl der Aktoren bevorzugt Stellwerte vor, die an einem bestimmten Wert der Reihenfolge (i) auf denselben Soll-Zustand bezogen sind, für den eine Pose geplant ist (Zustandswerte).

Bevorzugt hat das Fahrzeug (3) während eines Behandlungsvorgangs einen bekannten Ortsbezug gegenüber der Behandlungszone (2). Dies kann sowohl bei einer fest angeordneten Behandlungszone (2) zutreffen, beispielsweise in einer Autowaschanlage, als auch bei einer bewegten Behandlungszone (2), wie beispielsweise einem Schlepp-Platz entlang einer Autowaschstraße.

Das Steuerverfahren gemäß der vorliegenden Erfindung kann für beliebige Fahrzeug-Behandlungsanlagen (1) genutzt werden, unabhängig davon, ob die Behandlungszone (2) fest steht oder bewegt ist, sowie unabhängig davon, wie die Behandlungsaggregate (6,7,12) ausgebildet, angetrieben und etwaig miteinander gekoppelt sind.

Im Rahmen der vorliegenden Offenbarung haben die Begriffe "Stützglied", "Zielpunkt", "Raumlage", "Aktor" die nachfolgende Bedeutung.

Stützglieder sind mechanisch tragende Komponenten einer Fahrzeug-Behandlungsanlage (1), an denen ein Behandlungsaggregat (6,7,12) direkt oder indirekt befestigt ist.

Ein Zielpunkt (Z1,Z2,Z3) ist ein geometrischer Bezugspunkt für ein Behandlungsaggregat dessen momentane Raumlage in Koordinaten definierbar ist. Die Koordinaten können eine translatorische Raumlage (Position) und/oder eine rotatorische Lage (Orientierung) definieren, insbesondere in Bezug auf eine vorgesehene Behandlungszone der Fahrzeug-Behandlungsanlage.

Die Raumlage des Zielpunktes (Z1,Z2,Z3) eines Behandlungsaggregats ist physikalisch gekoppelt mit

- der bekannten Geometrie der ein oder mehreren Stützglieder, die für die Bewegung des Behandlungsaggregats relevant sind, sowie mit
- den momentanen Stellwerten (momentane Stellposition / momentane Stellrotation etc.) der ein oder mehreren Aktoren, die für die Bewegung des Behandlungsaggregats relevant sind.

Ein Aktor ist ein steuerbarer Bewegungsantrieb. Ein Aktor kann über ein Stützglied mit einem weiteren Aktor verbunden sein.

Nachfolgend wird ein Steuerverfahren gemäß der vorliegenden Offenbarung anhand eines Ausführungsbeispiels erläutert, das eine Portal-Waschanlage betrifft. Die Schritte des Verfahrens sind auf beliebige andere Ausbildungsformen analog anwendbar.

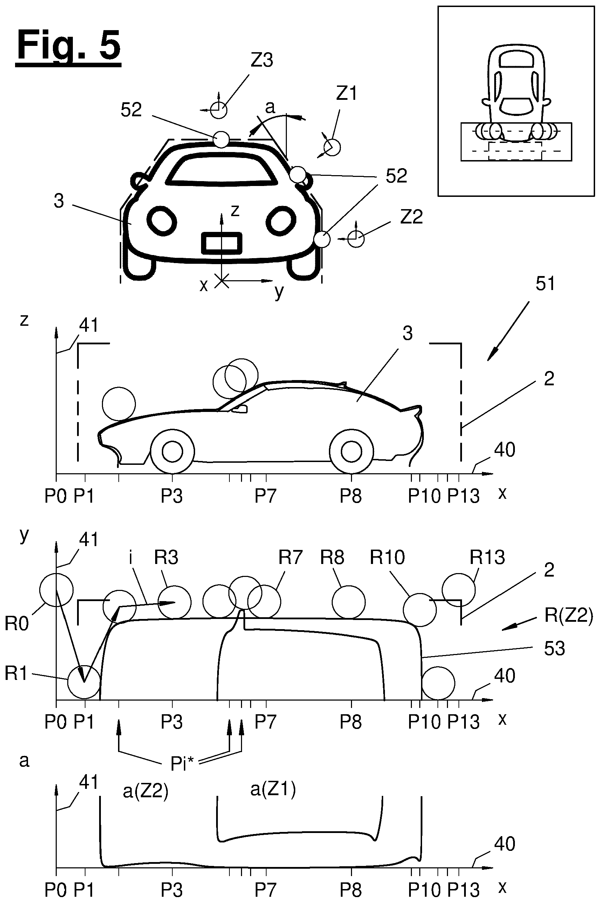

Figuren 1 bis 3 erläutern zunächst verschiedene Raumlagen von Behandlungsaggregaten (6,7,12) bzw. deren Zielpunkte (Z1,Z2,Z3) für drei unterschiedliche Zustände während eines Behandlungsvorgangs. In Figur 5 sind ergänzend Raumlagen (R) eines Zielpunkts (Z1) einer Seitenwaschbürste (6) relativ zum Fahrzeug (3) bzw. den Konturerfassungsdaten (51) illustriert.

Die Behandlungsaggregate (6,7,12) werden durch gesteuerte Bewegungen von Aktoren und damit gekoppelte Bewegungen von Stützgliedern in die verschiedenen Raumlagen gebracht. Das Portal (4) mit den Führungsschienen für die Seitenwaschbürsten (6,7) sowie die Dachbürste (12) und ebenso die Bürstengestänge (6c,7c) sind Beispiele für Stützglieder. Der Begriff Stützglied umfasst beliebige weitere starre oder elastische Stützmittel, mit denen ein Behandlungsaggregat gehalten oder bewegt werden kann.

Für die Bewegung jedes Behandlungsaggregats (6,7,12) ist mindestens ein Aktor (21,22,23) vorgesehen. Weiterhin kann für jedes Behandlungsaggregat (6,7,12) mindestens ein Stützglied vorgesehen sein. Es können jedoch für jedes Behandlungsaggregat (6,7,12) auch zwei oder mehr Stützglieder und ebenso zwei oder mehr Aktoren vorgesehen sein.

Eine Seitenwaschbürste (6) weist in dem Beispiel von Figuren 1 bis 3 zwei drehbare Bürstenabschnitte (6a,6b) auf - einen oberen Bürstenabschnitt (6a) und einen unteren Bürstenabschnitt (6b) - wobei diese Bürstenabschnitte in Längsrichtung der Drehachse zueinander benachbart angeordnet sind. Zwischen den Bürstenabschnitten (6a,6b) ist ein Knickgelenk (17) mit einem Knick-Aktor (18) vorgesehen, sodass der untere Bürstenabschnitt (6b) gegenüber dem oberen Bürstenabschnitt (6a) um einen Winkel schwenkbar ist.

Der obere Bürstenabschnitt (6a) ist ferner über ein Neigungsgelenk (15) an einem Schlitten (8) aufgehängt. Durch dieses Neigungsgelenk (15) kann der obere Bürstenabschnitt (6a) und damit auch mittelbar der untere Bürstenabschnitt (6b) gegenüber der Vertikalrichtung ausgeschwenkt werden, wofür am Neigungsgelenk ein Neigungs-Aktor (16) vorgesehen ist.

Der Schlitten (8) ist an einer Laufschiene des Portals (4) in einer ersten Horizontalrichtung (Querrichtung y der Fahrzeug-Behandlungsanlage) verschiebbar, wofür ein Schiebe-Aktor (9) vorgesehen ist.

Die Laufschiene für die Seitenbürsten ist an einem Portal (4) der Fahrzeugbehandlungsanlage befestigt, wobei das Portal (4) entlang einer Längsführung in einer weiteren Horizontalrichtung (Längsrichtung x der Fahrzeug-Behandlungsanlage) führbar ist. Dafür ist ein Portalantrieb / Führungs-Aktor (5) vorgesehen.

Für den Träger, die Laufschiene, den Schlitten, das Neigungsgelenk, den oberen Bürstenabschnitt, das Knickgelenk und den unteren Bürstenabschnitt sind jeweils die relevanten Geometriebezüge bekannt, d.h. beispielsweise deren Größe und etwaig deren lastabhängiges Verformungsverhalten.

Für den Knick-Aktor, den Neigungs-Aktor, den Schiebe-Aktor und den Führungs-Aktor sind momentane Stellpositionen vorgebbar. Eine Stellposition kann dabei insbesondere eine rotatorische Stellposition und/oder eine translatorische Stellposition sein.

Ist eine (gewünschte) Raumlage (R) des Zielpunktes (Z1,Z2,Z3) eines Behandlungsaggregats (6,7,12) bekannt, ist hieraus mindestens eine Pose (Körperhaltung) für die Teile der Behandlungsanlage berechenbar, die zur Bewegung des Behandlungsaggregats beitragen. Die Pose ist durch die Geometriebezüge der beteiligten Stützglieder sowie die Stellpositionen der beteiligten Aktoren definiert. Aus einer gewünschten Soll-Raumlage (Ri) eines Zielpunktes kann somit jeweils mindestens eine geeignete Pose berechnet werden, durch die diese Soll-Raumlage (Ri) erreichbar ist, und entsprechend kann für einen oder jeden beteiligten Aktor eine zugehörige Stellposition (Pi) ermittelt werden.

Wenn alle beteiligten Aktoren gleichzeitig die jeweils zugehörige Soll-Stellposition einnehmen, wird das Behandlungsaggregat (6,7,12) tatsächlich diejenige Raumlage (R) einnehmen, die als Soll-Raumlage für den Zielpunkt (Z1) definiert ist.

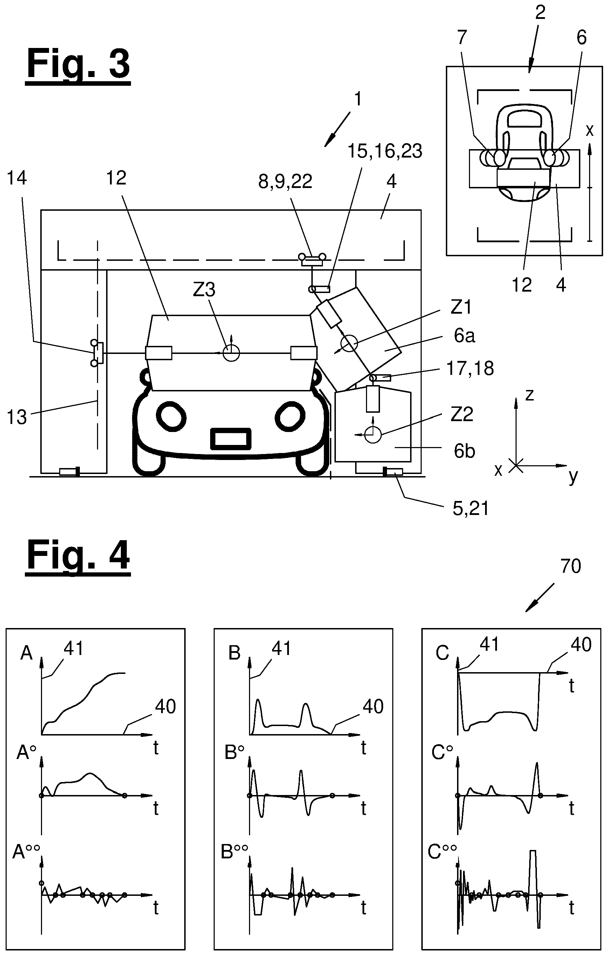

Für die nachfolgenden Erläuterungen wird beispielhaft die Raumlage (R) der Seitenwaschbürste (6) und insbesondere deren Zielpunkt (Z1) betrachtet. Zunächst wird vereinfachend angenommen, dass das Neigungsgelenk (17) und das Knick-Gelenk (18) ausschließlich in der gestreckten Haltung sind. An späterer Stelle wird auf Fälle eingegangen (wie Sie in Figuren 2 und 3 gezeigt sind), bei denen das Neigungs-Gelenk (18) und/oder das Knick-Gelenk eine andere Haltung haben.

Die Bewegung des Zielpunktes (Z1) hängt von Stellpositionen des Portal-Antriebs / Führungs-Aktors (5) und des Schiebe-Aktors (9) und des Neigungs-Aktors (17) ab. Diese werden nachfolgend beispielhaft als erster Aktor (21), zweiter Aktor (22) und dritter Aktor (23) aufgefasst. Die weitere Darstellung lässt sich jedoch beliebig auf andere Aktoren übertragen.

Figur 4 zeigt, welches Ziel durch das Steuerverfahren gemäß der vorliegenden Offenbarung angestrebt wird. Zunächst ist festzuhalten, dass der Dynamikplan auf der Abszissenachse (40) die Zeitvariable (t) zeigt. Es soll also ein Dynamikplan erstellt werden, der in Bezug auf die Zeitvariable (t) für jeden zu berücksichtigenden Aktor - hier also den ersten, zweiten und dritten Aktor (21,22,23) vorgegebene Soll-Werte für mindestens eine Bewegungsgröße umfasst, insbesondere :

- eine Soll-Trajektorie (A,B,C),
- eine Soll-Geschwindigkeit (A°,B°,C°), und/oder
- eine Soll-Beschleunigung (A°°,B°°,C°°)

Die Zeitvariable (t) soll dabei der Real-Zeit entsprechen und beispielsweise in Millisekunden oder Sekunden definiert sein.

Eine Soll-Trajektorie gibt an, welchen Stellwert (bspw. in Grad oder Millimeter) ein Aktor zu jedem geplanten Zeitpunkt als Soll-Wert erreichen soll.

Die Soll-Geschwindigkeit gibt an, welche momentane Geschwindigkeit (bspw. in rad/s oder m/s) der Aktor zu jedem geplanten Zeitpunkt als Soll-Wert erreichen soll.

Und die Soll-Beschleunigung gibt an, welche momentane Beschleunigung (bspw. in $rad/s^2$ oder $m/s^2$) der Aktor zu jedem geplanten Zeitpunkt als Soll-Wert erreichen soll.

Die Teile (Bewegungsgrößen) des Dynamikplans (70) können in einer beliebigen durch einen Computer verarbeitbaren Form vorliegen, insbesondere als (mathematische) Funktionen und/oder (Einzel-) Werte in einer geordneten Datenstruktur wie einem Array, einem Vektor, einer Tabelle etc.

Der Dynamikplan (70) kann einen vollständigen Behandlungsvorgang mit einem oder mehreren Behandlungszyklen umfassen. Er kann alternativ getrennt für verschiedene Behandlungszyklen vorliegen und/oder erst nach und nach für bestimmte Zeitabschnitte erzeugt werden, bspw. wenn die Konturerfassung kontinuierlich oder iterativ erfolgt.

Die Zeitvariable und die Sollwerte können als kontinuierliche Größen oder als diskrete Größen vorliegen. In einer bevorzugten Ausführung liegt der Dynamikplan als eine geordnete Datenstruktur vor, die für eine Vielzahl an Zeitpunkten (Werten der Zeitvariable) die entsprechenden Sollwerte für die Soll-Trajektorie, die Soll-Geschwindigkeit und die Soll-Beschleunigung der Aktoren umfasst. Dabei können die Sollwerte für jeden Zeitpunkt, beispielsweise je ein Satz von Soll-Werten pro Millisekunde, oder nur für einen Teil der möglichen Zeitpunkte vorliegen.

Die Sollwerte aus dem Dynamikplan können bevorzugt einem (Zustands-)Regler (32) übergeben werden, welcher auf Basis der Sollwerte entsprechende Steuersignale direkt oder indirekt erzeugt, um die tatsächliche Bewegung eines oder mehrerer Aktoren (21,22,23) zu steuern und insbesondere zu regeln.

Nachfolgend wird erläutert, wie mittels des Steuerverfahrens ein solcher Dynamikplan in mehreren Vorgangsschritten erzeugt wird.

In Figur 5 sind drei Diagramme übereinander dargestellt, die auf der Abszissenachse (40) die x-Koordinate der Fahrzeug-Behandlungsanlage (1) zeigen. Auf der Ordinatenachse (41) zeigen die Diagramme:

- Koordinatenwerte entlang einer Hochachse (z) / z-Koordinate,
- Koordinatenwerte entlang einer Querrichtung (y) / y-Koordinate, und
- Werte eines Neigungswinkels (a).

Es handelt sich somit um eine Darstellung von räumlichen Bezügen. In den Diagrammen sind beispielhaft Konturerfassungsdaten (51) eingetragen, welche die Querschnittskontur (oberes Diagramm) und zwei Verläufe einer Seitenkontur (mittleres Diagramm) sowie Verläufe eines Neigungswinkels auf zwei Höhenlagen (unteres Diagramm) zeigen. Oben in Figur 5 sind beispielhafte Bezugspunkte (52) auf der Außenkontur eines Fahrzeugs (3) gezeigt, zu denen die Konturerfassungsdaten (51) in den Diagrammen gehören können.

Im mittleren Diagramm ist ein Beispiel gezeigt, wie auf Basis der Konturerfassungsdaten (51) des Fahrzeugs (3) verschiedene Raumlagen (R) der Seitenwaschbürste (6) in einer bestimmten Reihenfolge (i) geplant werden können. Hier ist aus Gründen der Einfachheit angenommen, dass die Seitenwaschbürste (6) ausschließlich vertikal ausgerichtet ist, sodass die Bezugspunkte (Z1, Z2) in der Draufsicht direkt übereinander liegen.

Allgemein ausgedrückt wird für mindestens ein Behandlungsaggregat und bevorzugt jedes Behandlungsaggregat (6,7,12) ein Zielpunkt (Z1, Z2, Z3) als ein geometrischer Bezugspunkt des Behandlungsaggregats (6,7,12) definiert, dessen (momentane) Raumlage (R) wiederum in Koordinaten (x,y,z) definierbar ist.

Es wird eine Reihenfolge (i = 0,1,2,...) von Soll-Raumlagen (Ri,R0,R1,R2,...) des mindestens einen Zielpunktes (Z1) geplant, die während einer Fahrzeugbehandlung einzunehmen sind. Die Planung kann händisch, teil-automatisiert oder voll-automatisiert basierend auf den Konturerkennungsdaten (51) des zu behandelnden Fahrzeugs (3) erfolgen. Die Planung kann relativ zu einer Behandlungszone (2) der Fahrzeug-Behandlungsanlage (1) erfolgen, was in Figur 5 zur einfachen Nachvollziehbarkeit dargestellt ist. Sie kann alternativ in Bezug auf einen oder mehrere charakteristische Punkte (sog. Marker) am Fahrzeug (3) und damit unabhängig von einem äußeren absoluten Koordinatensystem erfolgen. Diese Planung ist für eine beliebige Anzahl an Behandlungsaggregaten möglich, die jeweils einzeln, zeitlich überlappend oder gleichzeitgleich aktiv und insbesondere in einer Wirkposition gegenüber dem Fahrzeug sein können.

In dem Beispiel von Figur 5 werden Soll-Raumlagen (Ri,R0,R1,R2,...) für mehrere Schritte (0,1,2,3,...) in der Reihenfolge (i) automatisiert geplant. Hierfür werden bspw. bei einem vorbestimmten Raster entlang der x-Koordinate oder entlang der Konturlinie Positionen für die Seitenbürste (6) ermittelt, die um ein vorgegebenes Maß in Normalrichtung von der Konturlinie (53) beabstandet sind. Alternativ kann ein beliebiges anderes Planungsverfahren genutzt werden. Die Planung erfolgt bevorzugt in Form einer Soll-Raumlage für den Zielpunkt (Z1 / Z2).

Allgemein ausgedrückt wird eine Reihenfolge (i = 0, 1,2, ...) von Soll-Raumlagen (Ri,R0,R1,R2,...) des Zielpunktes (Z1) festgelegt, die während einer Fahrzeugbehandlung einzunehmen sind, basierend auf den Konturerkennungsdaten (51) des zu behandelnden Fahrzeugs (3). Das vorerwähnte Raster ist nicht zwingend erforderlich. Es dient lediglich der einfacheren Nachvollziehbarkeit des Vorgehens.

Aufgrund der bekannten Geometrie der Fahrzeug-Behandlungsanlage (1) ist für die Soll-Raumlagen (Ri) jeweils ermittelbar, welche Stellpositionen die Aktoren einnehmen müssen, damit die Seitenbürste diese Raumlagen tatsächlich einnimmt. Daher kann zur jeder Soll-Raumlage eine zugehörige Soll-Stellposition für jeden Aktor ermittelt werden, der an der Bewegung der Seitenbürste teilnimmt.

In dem Beispiel von Figur 5 sind aus Gründen der Vereinfachung nur einige Stellpositionen (Pi,P0,P1,P2, ...) für den ersten Aktor (21), d.h. den Portalantrieb / Führungs-Aktor (5) eingetragen. Entsprechende Stellpositionen sind für einen zweiten, dritten oder weiteren Aktor (22,23) ermittelbar.

Allgemein ausgedrückt werden Stellpositionen (Pi,P0,P1,P2, ...) mindestens eines Aktors (21,22,23) bestimmt, der an der Bewegung des (jeweiligen) Zielpunktes (Z1) beteiligt ist, auf Basis einer bekannten Geometrie der Fahrzeug-Behandlungsanlage (1), sodass die Stellpositionen (Pi,P0,P1,P2, ...) mit den Soll-Raumlagen (Ri,R0,R1,R2, ...) des Zielpunktes (Z1) korrelieren.

Anstelle des oben genannten Vorgehens sind beliebige andere Planungsarten möglich. Beispielsweise können für bekannte Fahrzeugtypen und deren bekannte Konturdaten manuelle Detailplanungen vorgenommen und mit den entsprechenden Stellpositionen gespeichert werden. Das Bestimmen der Stellpositionen umfasst dann das Abrufen eines vorab gespeicherten Datensatzes, bspw. auf Basis einer Typerkennung des zu behandelnden Fahrzeugs und einer Anpassung auf die festgestellte Lage des Fahrzeugs (3) in der vorliegenden Behandlungssituation. Alternativ oder zusätzlich können Vorgabekriterien für einzelne oder kombinierte Posen oder Zustände für das Behandlungsverfahren definiert werden. Die Vorgabekriterien können insbesondere nur für bestimmte Abschnitte der Fahrzeugbehandlung und/oder abschnittsweise unterschiedlich definiert werden. Beispielsweise kann eine maximale Bahngeschwindigkeit einer Seiten- oder Dachwalze entlang einer Fahrzeugscheibe auf einen gesonderten Grenzwert gesetzt werden.

Besonders bevorzugt sind Zielpunkte für eine Mehrzahl von Behandlungsaggregaten definiert, insbesondere für alle (aktiven) Behandlungsaggregate, und für die Erstellung eines Ablaufplans (50) werden deren momentane Raumlagen (R,L) in Koordinaten (x,y,z) ermittelt, die insbesondere auf dasselbe Koordinatensystem bezogen sind. Dies ermöglicht, dass zueinander räumlich koordinierte Soll-Raumlagen (Ri,Li) dieser mehreren Zielpunkte (Z1,Z2) als eine Soll-Posenfolge (K) geplant werden. Hierfür folgt weiter unten ein erläuterndes Beispiel.

Ein Ablaufplan kann in der Fahrzeug-Behandlungsanlage (1) für jedes zu behandelnde Fahrzeug individuell erstellt werden. Alternativ oder zusätzlich ist es möglich, einen Ablaufplan zu speichern und wieder einzulesen. So können beispielsweise für verschiedene Fahrzeuge oder Fahrzeugtypen Ablaufpläne vordefiniert werden und wieder eingelesen werden, wenn für einen bevorstehenden Behandlungsvorgang auf Basis der Konturerkennung ein bestimmtes Fahrzeug oder ein bestimmter Fahrzeugtyp identifiziert wurde.

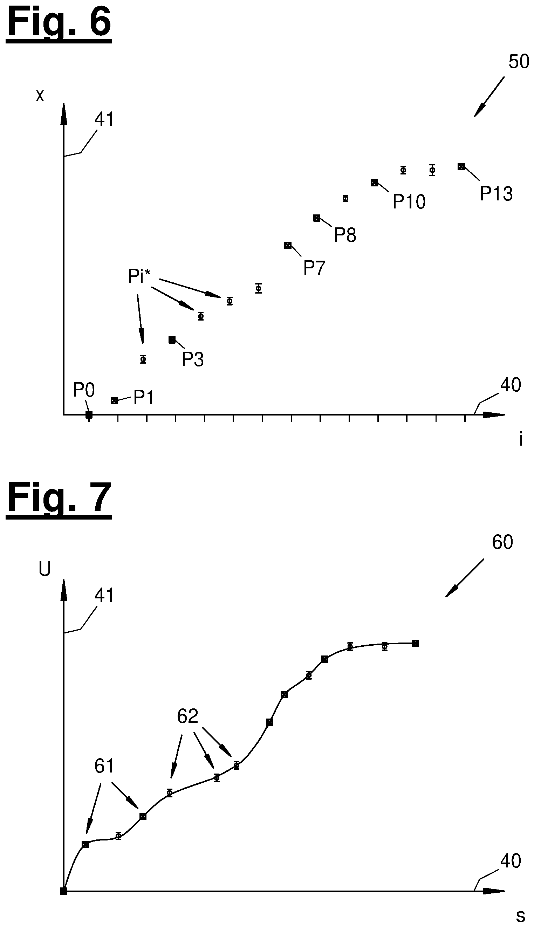

Es wird ein Bewegungsplan für die Fahrzeugbehandlung erstellt, der einen Soll-Pfad (U,V,W), eine Soll-Stellrate (U',V',W') und bevorzugt eine Soll-Stellratenänderung (U'',V'',W'') für die Mehrzahl der Aktoren (21,22,23) umfasst und zwar als (mathematische) Funktionen in Bezug auf eine Ablaufvariable (s). Dieser Vorgang wird im Übergang von Figur 6 auf Figur 7 erläutert.

Figur 6 zeigt den bereits in Figur 5 für den ersten Aktor (21) skizzierten Ablaufplan (50) in einem separierten Diagramm. Hier ist auf der Abszissenachse (41) die Reihenfolge (i) gezeigt und mit entsprechendem Abstand entlang der Ordinatenachse (x) ist jeweils ein zugeordneter Wert des Stellposition (Pi) dargestellt.

Figur 7 zeigt einen Soll-Pfad (U) für den ersten Aktor (21). Hier ist auf der Abszissenachse (40) die Ablaufvariable (s) gezeigt. Auf der Ordinatenachse sind Sollwerte für eine Stellung des ersten Aktors angegeben, dir mit den Stellpositionen (Pi) entlang der x-Achse korrelieren.

Die Ablaufvariable (s) kann auf beliebige Weise definiert werden. Beispielsweise könnten die Werte (0,1,2,...) der Reihenfolge (i) auf einer kontinuierlichen Skala angeordnet werden, wobei zwischen diesen Werten jeweils derselbe Einheitsabstand gewählt wird.

Wiederum alternativ kann die Ablaufvariable (s) von einem Planer manuell oder durch einen anderen Programmteil vorgegeben werden.

Wenn eine teil- oder voll-synchronisierte Bewegung der Aktoren erwünscht ist, die an der Bewegung eines einzelnen Behandlungsaggregats beteiligt sind, empfiehlt es sich, dieselbe Ablaufvariable (s) für alle beteiligten Aktoren und die zugeordneten Soll-Pfade (U,V,W) sowie deren Ableitungen vorzusehen. Noch weiter bevorzugt kann genau eine Ablaufvariable (s) für alle (aktiven) Behandlungsaggregate und Aktoren gemeinsam verwendet werden, welche bei der Durchführung des Steuerverfahrens berücksichtigt werden.

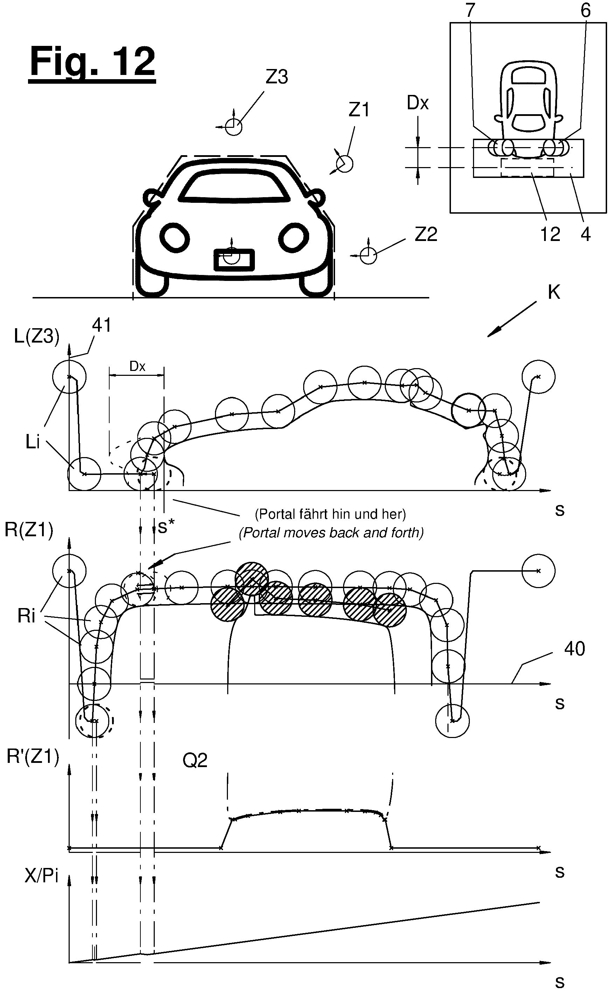

Im Übergang von Figur 6 zu Figur 7 ist beispielhaft angenommen, dass für den Zielpunkt (Z3) der Dachbürste (12) ein Bahnparameter entlang einer vorgesehenen Bewegungsbahn ermittelt wurde, welcher als die Ablaufvariable (s) für alle Behandlungsaggregate und Aktoren übernommen wurde. Die vorgesehene Behandlungsbahn ist in Figur 12 oberes Diagramm angedeutet. Sie Soll-Raumlagen für alle weiteren Zielpunkte (Z1,Z1) werden in diesem Fall gemäß den übereinstimmenden Zuständen bei der Planung der Behandlung den entsprechenden Werten auf der Abszissenachse (40) entlang der Ablaufvariable (s) zugeordnet. Daher ergibt sich eine lokale Lageänderung der Punkte (P0 bis P13) in Figur 7 gegenüber Figur 6 entlang der Abszissenachse (40). Diese Art des Vorgehens ist nicht beschränkend für die vorliegende Offenbarung.

Der Soll-Pfad (U,V,W) wird bevorzugt in Längenabschnitten der Ablaufvariable (s), d.h. für einen Bereich [s_min < s < s_max] als eine Funktion definiert, die geeignet ist, um die Sollpositionen (Pi) des Ablaufplans (50) zu erreichen. Es kann vorgegeben sein, dass jeder Sollposition (Pi) bzw. jeder zugehörige Stellwert (61) exakt zu erreichen ist. Alternativ oder zusätzlich können Stellwerte (62) geplant sein, die bei Einhaltung einer Toleranz (T) zu erreichen.

Besonders bevorzugt kann - je nach Lage innerhalb eines Behandlungsvorgangs - für einen Teil der Stellpositionen (Pi) ein Stellwert (61) zur exakte Erreichung und für einen anderen Teil der Stellpositionen (Pi) ein Stellwert (62) zur Erreichung bei einer Toleranz vorgegeben sein. Die Toleranz kann einheitlich definiert sein oder für verschiedene Stellwerte (62) unterschiedlich.

Es werden parametrierbare Funktionen ausgewählt, mit denen der Soll-Pfad (abschnittsweise) definiert wird.

Beispiele für geeignete Funktionen sind:

- Polynome dritten Grades (vier Parameter je Funktionsabschnitt)

- Polynome fünften Grades (sechs Parameter je Funktionsabschnitt)

- Polynome siebten Grades (acht Parameter je Funktionsabschnitt)

- Geradenabschnitte mit parabolischen Enden (acht Parameter je Funktionsabschnitt)

- Regressions-Splines (Parameterzahl ist wählbar)

- Bézier-Kurven

- Die Auswahl der Funktionen kann das Ergebnis des Planungs- und Steuerverfahrens gemäß der vorliegenden Offenbarung beeinflussen. Denn aus diesen parametrisierbaren Funktionen wird zu einem späteren Punkt im Planungs- bzw. Steuerverfahren mindestens eine Soll-Bewegungsgröße für die Bewegungen der Aktoren erzeugt. Manche der vorgenannten Funktionen, insbesondere die Polynome, führen dazu, dass die Bewegungsgrößen von zwei oder mehr Aktoren im Ergebnis in zueinander jeweils zeitgleichen Phasen kongruente Änderungen der Soll-Werte aufweisen.

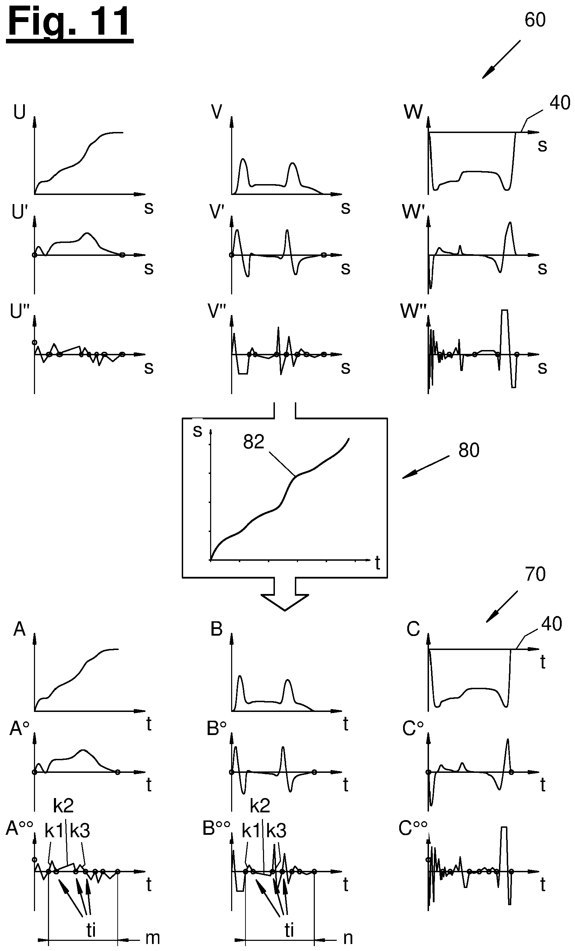

- Besondere Vorteile kann die Erzeugung übereinstimmender Beschleunigungsphasen (ki - vgl. Figur 11) haben, die nicht nur zeitparallel ablaufen, sondern zusätzlich weitere Kriterien erfüllen. Zu diesen Kriterien kann einerseits gehören, dass zwei Phasen (ki) für einen ersten Aktor und einen zweiten Aktor zu denselben Zeitpunkten (ti) beginnen und enden. Ein weiteres Kriterium kann sein, dass die Beschleunigungswerte eines ersten Aktors in einer ersten Phase proportional sind zu den Beschleunigungswerten eines zweiten Aktors in einer zweiten Phase, wobei die erste und die zweite Phase miteinander übereinstimmen, d.h. zumindest zeitparallel ablaufen.

- Übereinstimmende Phasen in den Soll-Beschleunigungen des Dynamikplans können also schon infolge der Auswahl der parametrierbaren Funktion für die Soll-Pfade des Bewegungsplans entstehen.

- Bei anderen parametrisierbaren Funktionen für den Bewegungsplan, insbesondere den Geradenabschnitten mit parabolischen Enden, ergeben sich ebenfalls übereinstimmende Phasen, jedoch nicht zwangsweise mit gleichen Start- und Endzeitpunkten. Die Zeitpunkte des Beginns und Endes dieser Phasen können leicht zueinander versetzt liegen. In diesen Fällen ist es jedoch ebenfalls möglich, die Phasengrenzen nachträglich wieder aufeinander anzugleichen, um eine volle Gleichtaktung der Phasen herzustellen.

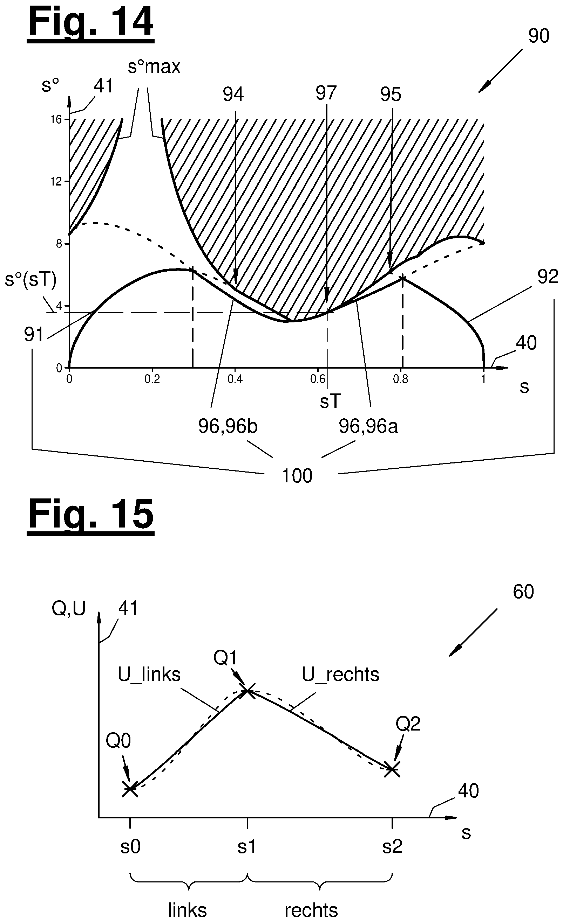

Nachfolgend wird anhand der Figur 15 ein Beispiel zur Bestimmung eines Soll-Pfads erläutert. Hier ist eine erste mathematische Funktion in Form eines Polynoms dritten Grades (durchgezogene Linie) ausgewählt. Diese Funktion ist für einen ersten Funktions-Abschnitt (U_links) im linken Bereich $s_0 \leq s \leq s_1$ und einen zweiten Funktionsabschnitt-Abschnitt (U_rechts) im rechten Bereich $s_1 < s \leq s_2$ separat definiert als:

$$U_{links}(s) = k_0 + k_1 s + k_2 s^2 + k_3 s^3$$

$$U_{rechts}(s) = l_0 + l_1 s + l_2 s^2 + l_3 s^3$$

Gemäß der ausgewählten Funktion werden eine Soll-Stellrate (U') und bevorzugt eine Soll-Stellratenänderung (U'') durch Ableitung ermittelt.

Die Soll-Stellrate (U') und die Soll-Stellratenänderung (U'') ergeben sich hier also durch einfache bzw. zweifache Differenzierung nach der Ablaufvariable (s). Sie liegen für beide Abschnitte vor als:

$$U'_{links}(s) = \frac{dU_{links}}{ds}$$

$$U''_{links}(s) = \frac{dU'_{links}}{ds}$$

$$U'_{rechts}(s) = \frac{dU_{rechts}}{ds}$$

$$U''_{rechts}(s) = \frac{dU'_{rechts}}{ds}$$

Die Grenzen der beiden Abschnitte (links, rechts) liegen bei den s-Werten von drei aufeinander folgenden Stellpositionen (Qi).

Für das Verständnis der mathematischen Umformung und Parametrisierung ist es nicht erforderlich, die komplexen Vorgänge gemäß den vorhergehenden Figuren zu beachten. Stattdessen sollen in Figur 15 exemplarisch drei Stellpositionen (Qi) allgemein definiert sein als:

- Eine Stellposition Q0 an der linken Grenze des linken Abschnitts, d.h. für $s_0=s(Q0)$,
- eine Stellposition Q1 am Übergang zwischen dem linken und dem rechten Abschnitt, d.h. für $s_1=s(Q1)$, und
- eine Stellposition Q2 an der rechten Grenze des rechten Abschnitts, d.h. für $s_2=s(Q2)$ mit Q0: Startpunkt, Q1: Übergangspunkt, Q2: Endpunkt.

Sie Abszissenachse (40) zeigt in Figur 15 die Ablaufvariable (s), die Ordinatenachse (41) zeigt den Betrag Stellposition (Q) und mithin den Funktionswert des Soll-Pfads (U).

Das mit den Stellpositionen (Q1, Q2, Q3) erläuterte mathematische Beispiel lässt sich analog auf die in den anderen Figuren erwähnten Stellpositionen (Pi) übertragen. Es ist ebenso bei dem zweiten in Figur 15 gezeigten Beispiel (gestrichelte Linie) anwendbar, wo als Funktion für beide Abschnitte (links, rechts) eine Gerade mit parabolischen Enden gewählt ist.

Die insgesamt acht Parameter (k0, k1, k2, k3, 10, 11, 12, 13) der beiden Funktions-Abschnitte U_links, U_rechts für den Soll-Pfad können durch ein Gleichungssystem mit acht Rand- oder Übergangsbedingungen ermittelt werden. Diese Bedingungen können je nach Anwendungsfall geeignet definiert sein.

Im vorliegenden Beispiel wird angenommen, dass beim Startpunkt Q0 ein Aktor mit einem vorgegebenen Start-Stellwert, einer vorgegebenen Start-Stellrate und einer vorgegebenen Start-Stellratenänderung in den ersten Abschnitt gelangt.

Am Übergang von linken Abschnitt zum rechten Abschnitt soll die Funktion stetig sein und der Stellwert des Aktors soll den Übergangspunkt Q1 erreichen. Außerdem soll im Übergangspunkt Q1 gelten, dass dieser Punkt mit einer stetigen Stellratenänderung durchfahren wird.

Bei der End-Position soll der Aktor wieder zu einem vorgegebenen End-Stellwert mit einer End-Stellrate und einer End-Stellratenänderung gelangen. Somit lassen sich folgende Rand- und Übergangs-Bedingungen formulieren:

$$U_{links}(s_0) = Q0, (Start - Stellwert)$$

$$U'_{links}(s_0) = Start - Stellrate$$

$$U''_{links}(s_0) = Start - Stellraten\ddot{a}nderung$$

$$U_{links}(s_1) == Q1$$

$$U_{rechts}(s_1) = Q1$$

$$U'_{links}(s_1) = U'_{rechts}(s_1)$$

$$U''_{links}(s_1) = U''_{rechts}(s_1)$$

$$U_{rechts}(s_2) = Q2\,(End - Stellwert)$$

Wird dieses Gleichungssystem gelöst, stehen die Parameter (k0, k1, k2, k3, 10, 11, 12, 13) fest und es sind für die beiden Abschnitte (links, rechts) geeignete Funktionen als Soll-Pfad (U), Soll-Stellrate (U') und Soll-Stellratenänderung (U'') für den Bewegungsplan definiert.

Je nach Bedarf kann auch noch ein Soll-Ruck (U''') definiert werden.

Dieses Verfahren kann für mehrere oder alle Aktoren (21, 22, 23) ausgeführt werden, um eine entsprechende Anzahl an Soll-Pfaden (U,V,W), Soll-Stellraten (U',V',W'), Soll-Stellratenänderungen (U'',V'',W'') zu definieren. Das Verfahren kann weiterhin für eine beliebig lange Kette von Abschnitten ausgeführt werden kann. Dabei kann jeweils ein Abschnitt zwischen zwei aufeinander folgenden Stellpositionen (Pi) definiert sein.

Das obige Beispiel wurde zwar für ein Polynom dritter Ordnung erläutert. Es ist jedoch in derselben Weise für Polynome höherer Ordnung durchführbar. In diesem Fall können zusätzliche Rand- oder Übergangs-Bedingungen eingeführt werden, wie beispielsweise die Festlegung des Rucks (Soll-Ruck (U''',V''',W''' - nicht dargestellt - dritte Ableitung nach der Ablaufvariablen s) am Startpunkt und Endpunkt und/oder an einzelnen Übergangspunkten. Weiterhin können innerhalb eines Abschnitts auch zwei oder mehr verkettete Funktionen vorgesehen sein (bspw. Geradenstück mit parabolischen Enden).

Es kann alternativ oder zusätzlich vorgesehen sein, dass die Stellratenänderung und/oder der Stell-Ruck an einem (oder jedem) Übergangspunkt stetig sein soll, d.h. $U''_{links}(s_i) = U''_{rechts}(s_i)$ bzw. $U'''_{links}(s_i) = U'''_{rechts}(s_i)$, usw.

Das gleiche Verfahren lässt sich auch mit allen anderen geeigneten Funktionstypen durchführen, die eine geeignete Zahl an Parametern aufweisen. Eine besonders gute Dynamik wurde festgestellt, wenn der Soll-Pfad zumindest in einzelnen Abschnitten als eine Gerade mit parabolischen Enden definiert wird (gestrichelte Linie in Figur 15).

Die auswählbaren Funktionsarten können grundsätzlich beliebig zwischen den Soll-Pfaden (U,V,W) und deren Abschnitten gemischt werden. Die Auswahl einer Funktionsart kann auf beliebige Weise erfolgen.

Eine bevorzugte Ausführung sieht vor, dass die Fahrzeug-Behandlungsanlage bzw. deren Steuerung (insbesondere das Steuergerät 30 oder ein Softwareprodukt gemäß der vorliegenden Offenbarung) einen Regelsatz und/oder einen Satz mit Funktions-Vorlagen für bestimmte Teile des Behandlungsprozesses aufweist, wobei der Regelsatz oder die Funktions-Vorlage für einzelne oder alle beteiligten Aktoren bestimmte charakteristische Stellpositionen nach Art und Reihenfolge vorsieht und zwischen diesen vorgesehenen Stellpositionen geeignete Funktionen sowie zugehörige Rand- oder Übergangsbedingungen vordefiniert. Die exakte Lage der charakteristischen Stellpositionen kann in Abhängigkeit von einer Konturerfassung des Fahrzeugs berechnet werden. Anschließend können die Rand- und Übergangsbedingungen der Höhe nach berechnet und die Parameter der vordefinierten Funktionen bestimmt werden.

Der Regelsatz und die Funktions-Vorlagen können für bestimmte Fahrzeugtypen und/oder Sonderformen der Karosserie vom Hersteller vordefiniert werden, um eine besonders gute Waschleistung zu erreichen.

Die vorgenannten Schritte zur Bildung eines Soll-Pfads (U,V,W) und der zugehörigen Soll-Stellrate (U',V',W') und Soll-Stellratenänderung (U",V",W") können für zwei oder mehr und insbesondere alle Aktoren (21,22,23) angewendet werden.

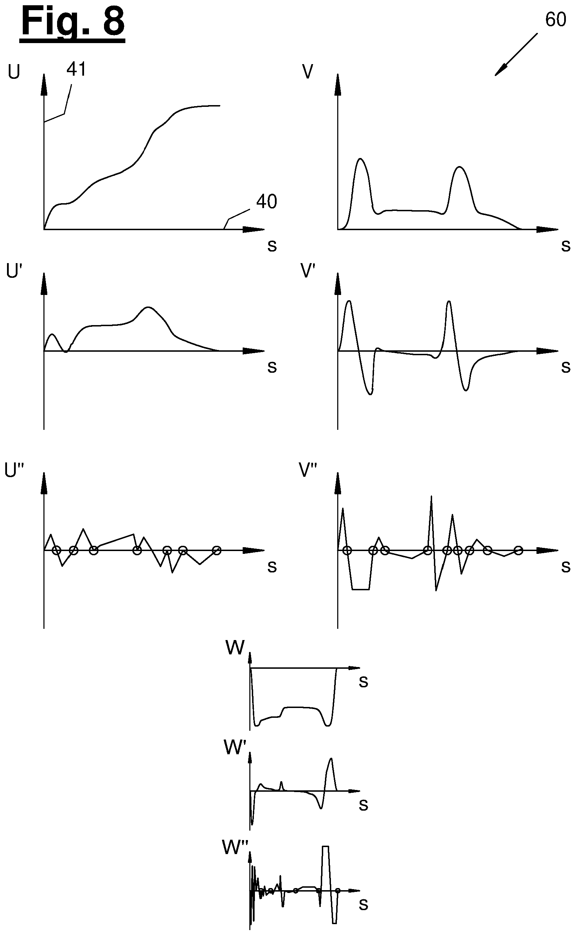

Figur 8 illustriert einen Bewegungsplan (60), in welchem für den ersten Aktor (20) gemäß dem obigen Beispiel, d.h. für den Portal-Antrieb / Führungs-Aktor (5), sowie den zweiten Aktor (21), d.h. den Schlitten-Antrieb / Schiebe-Aktor (6) je ein Soll-Pfad (U,V) abschnittsweise durch geeignete Funktionen definiert ist. Ferner ist ein Soll-Pfad (W) für einen dritten Aktor (23), d.h. den Neigungs-Aktor (17) beispielhaft gezeigt. Die gezeigten Verläufe stimmen aus Gründen der besseren Darstellbarkeit nicht exakt mit den Soll-Raumlagen (Ri) und den daraus abgeleiteten Stellpositionen (Pi) überein. Relevant ist hier, einen Eindruck von dem Informationsgehalt der Teile des Bewegungsplans (60) zu bekommen.

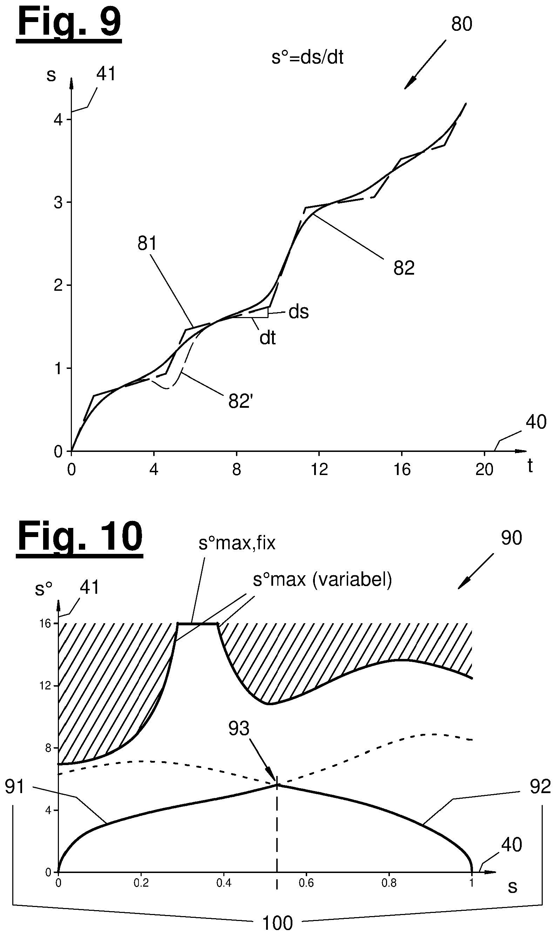

Nachfolgend wird die Bildung einer Zeitskalierung erläutert. Beispiele einer Zeitskalierung sind in Figur 9 gezeigt. Figur 11 illustriert, wie mittels der Zeitskalierung aus dem Bewegungsplan (60) durch Streckung und/oder Stauchung der Dynamikplan (70) gebildet wird.

Die Zeitskalierung führt zu einer Abbildung der Ablaufvariable (s) auf die Zeitvariable (t). Mit anderen Worten wird der für die Quasi-Zeit erstellte Bewegungsplan auf die Real-Zeit angepasst. In diese Anpassung fließen die physikalischen Grenzen und/oder Betriebsgrenzen ein.

Figur 9 erläutert diese Skalierung / Anpassung in Form eines Zeitskalierungsplans (80). Dort ist auf der Abszissenachse die Zeitvariable (t) gezeigt und auf der Ordinatenachse (41) die Ablaufvariable. Bildlich ausgedrückt wird die Verarbeitungsgeschwindigkeit der Quasi-Zeit (Ablaufvariable s) gemäß der Steigung ds/dt im Zeitskalierungsplan (80) mal beschleunigt, mal verlangsamt.

Es wird eine Zeitskalierung (s=s(t)) definiert, welche den Verlauf der Ablaufvariable (s) in Abhängigkeit von der Zeitvariable (t) festlegt. Dies erfolgt, indem die Ablaufvariable (s) zumindest abschnittsweise durch eine parametrisierbare, stetige und bevorzugt monoton steigende Funktion definiert wird. Der Wert dieser Funktion gibt an, zu welchem Zeitpunkt (Wert der Zeitvariable (t)) ein zugeordneter Wert der Ablaufvariable (s) zu berücksichtigen ist. Die Steigung der Zeitskalierung gibt somit an, bei welcher Schrittrate (ds/dt) der Bewegungsplan durchlaufen werden soll. Je höher die Schrittrate ist, desto schneller wird der Bewegungsplan durchlaufen - je niedriger die Schrittrate ist, desto langsamer wird der Bewegungsplan durchlaufen. Eine monoton steigende Funktion für die Zeitskalierung hat den Vorteil, dass sie durch den Anlagenplaner leichter nachvollziehbar ist. Die Verfahren gemäß der vorliegenden Offenbarung sind jedoch auch mit Funktionen anwendbar, die nicht monoton sind und insbesondere in zumindest einem Abschnitt (82') eine negative Steigung aufweisen. Das bedeutet, dann an dieser Stelle zumindest ein Teil des Dynamikplans erst rückwärts und dann wieder vorwärts durchlaufen wird. Dies ermöglicht es insbesondere, eine Planung für die Bewegung von Aktoren mit mehrfach verketteter Dynamik vorzusehen.

Eine erste Möglichkeit der Zeitskalierung sieht vor, dass (zumindest abschnittsweise) eine konstante Skalierung (81) bei einem Zeitskalierungs-Faktor (F) vorgenommen wird:

$$s = F \cdot t$$

Der Zeitskalierungs-Faktor (F) kann theoretisch für den gesamte Durchführungsdauer als ein einziger Wert gewählt sein. Alternativ und bevorzugt wird er für bestimmte Zeitabschnitte separat festgelegt.

Der Zeitskalierungsfaktor (F) kann auf beliebige Weise ermittelt oder festgelegt werden. Er wird bevorzugt auf Basis der physikalischen Grenzen oder Betriebsgrenzen gewählt, die für den jeweiligen Aktor bzw. die Bewegung des jeweiligen Prozessorgans bestehen. Dies können insbesondere eine physikalisch bedingte oder vom Hersteller/Benutzer definierte maximale Aktorgeschwindigkeit U°max, eine maximale Aktorbeschleunigung U°°max und/oder ein maximaler Aktorruck U°°°max sein.

Die Berechnung des Zeitskalierungs-Faktors (F) erfolgt besonders bevorzugt nach der folgenden Funktion (Beispiel für einen Zeitskalierungs-Faktor (F_U) in Bezug auf den ersten Aktor und dessen Soll-Pfad (U):

$$F_U = min\left\{ \frac{|\dot{U}|_{max}}{\left|\frac{dU(s)}{ds}\right|_{max}}, \sqrt{\frac{|\ddot{U}|_{max}}{\left|\frac{d^2U(s)}{ds^2}\right|_{max}}}, \sqrt[3]{\frac{|\dddot{U}|_{max}}{\left|\frac{d^3U(s)}{ds^3}\right|_{max}}} \right\}$$

Für die anderen Aktoren und Soll-Pfade (V,W) ist die Berechnung analog möglich.

Alternativ kann eine näherungsweise Berechnung erfolgen, die einen geringeren Rechenaufwand erfordert.

Eine (abschnittsweise) konstante Skalierung kann für solche Teile des Behandlungsvorgangs günstig sein, in denen (für die Mehrzahl oder alle Aktoren) relativ geringe Änderungen der Beschleunigung zu erwarten sind, denn durch die konstante Skalierung kann eine Verstärkung des Ruckverhaltens eintreten, die in den vorgenannten Teilen des Behandlungsvorgangs allerdings keinen Nachteil bedeuten muss. Vorteilhaft an der konstanten Skalierung ist die vergleichsweise schnelle Berechenbarkeit.

Eine weitere Möglichkeit der Zeitskalierung, sieht vor, dass die Zeitskalierung (zumindest abschnittsweise) als eine variable Skalierung vorgenommen wird. Ein bevorzugtes Vorgehen zur Ermittlung einer variablen Zeitskalierung wird anhand von Figur 10 erläutert.

Zum Verständnis der nachfolgenden Verarbeitungsschritte bedarf es noch einer mathematischen Erläuterung. Die Bahngeschwindigkeit s° wird definiert als die erste Ableitung der Ablaufvariablen s nach der Zeit (nicht nach der Ablaufvariable!). Die Bahnbeschleunigung s°° wird definiert als die zweite Ableitung der Ablaufvariablen s nach der Zeit:

$$\dot{s} = \frac{ds}{dt}, \ddot{s} = \frac{d^2s}{dt^2}$$

Es ist hier anzumerken, dass die Ablaufvariable s keine geometrische Bezugsgröße im Raum ist, sondern eine Quasi-Zeit. Der Begriff "Bahngeschwindigkeit s°" hat somit ebenfalls keinen direkten Bezug zu einer Geometrie. Er bezeichnet schlicht den Gradienten ds/dt, mit dem die in Bezug auf die Ablaufvariable s definierten Soll-Werte durchlaufen werden.

Ferner wird zur mathematischen Umformung der Soll-Pfad (U,V,W) in Abhängigkeit von der Ablaufvariablen (s) definiert, welche wiederum eine Funktion in Abhängigkeit der Zeitvariablen (t) ist:

$$U = U(s(t))$$

Der Soll-Pfad (U,V,W) wird nun mindestens zwei Mal, bevorzugt drei Mal nach der Zeit (nicht nach der Ablaufvariable!) abgeleitet und in Relation zur Bahngeschwindigkeit (s°) sowie der Bahnbeschleunigung (s°°) und etwaig dem Bahn-Ruck (s°°°) gesetzt:

$$\dot{U} = \frac{dU(s)}{ds}\dot{s}$$

$$\ddot{U} = \frac{d^2U(s)}{ds^2}\dot{s}^2 + \frac{dU(s)}{ds}\ddot{s}$$

$$\dddot{U} = \frac{d^3U(s)}{ds^3}\dot{s}^3 + \frac{d^2U(s)}{ds^2}3\dot{s}\ddot{s} + \frac{dU(s)}{ds}\dddot{s}$$

Die Bestimmung der variablen Skalierung erfolgt gemäß dem nachfolgenden Beispiel in einem Zustandsraum über einem Bereich der Ablaufvariable (s) durch Integration, und zwar auf Basis von Randbedingungen an den Grenzen des Bereichs und bevorzugt unter Berücksichtigung von Vorgabekriterien für die Dynamik. Der Bereich der Ablaufvariable (s) und die Vorgabekriterien können (gemeinsam oder unabhängig voneinander) beliebig gewählt sein.

Nachfolgend wird beispielhaft davon ausgegangen, dass eine möglichst zeiteffiziente Behandlung angestrebt ist. In diesem Fall, werden als Vorgabekriterien physikalische Grenzen oder Betriebsgrenzen berücksichtigt, die vorliegend als eine maximale Aktorgeschwindigkeit (U°max) und bevorzugt eine maximale Aktorbeschleunigung (U°°max) definiert sind. Das beschriebene Vorgehen lässt sich in beliebiger Weise auf andere Vorgabekriterien und insbesondere andere physikalische Grenzen oder Betriebsgrenzen übertragen. Insbesondere kann die Berücksichtigung der maximalen Aktorbeschleunigung (U°°max) weggelassen werden.

Die nachfolgenden Beispiele gehen davon aus, dass die maximale Aktorbeschleunigung (U°°max) in die Berechnung einbezogen wird. Hierdurch wird ein Rechenergebnis erzielt, dass sich mit einem besonders geringen zu erwartenden Fehler in eine tatsächliche Bewegung der Aktoren und damit der gesamten Fahrzeug-Behandlungsanlage umsetzen lässt. Falls die Aktorbeschleunigung (U°°max) weggelassen wird, kann sich ein Dynamikplan ergeben, bei dessen Umsetzung in eine tatsächliche Bewegung der Aktoren ein etwas größerer Fehler auftritt. Diese Fehler können jedoch durch den Regler, dem der Dynamikplan zugeführt wird, im Zweifelsfall ausgeglichen werden.

Andererseits kann zusätzlich zur maximalen Aktorgeschwindigkeit (U°max) und Aktorbeschleunigung (U°°max) auch noch ein maximaler Aktorruck definiert und berücksichtigt werden. Die nachfolgend dargelegten Handlungsanweisungen lassen sich entsprechend auf die Berücksichtigung des Aktorrucks übertragen. Auf eine mathematische Ausführung der beiden vorgenannten Abwandlungen (keine Berücksichtigung der Aktorbeschleunigung / zusätzliche Berücksichtigung des Aktorrucks) wird nachfolgend aus Gründen der besseren Verständlichkeit verzichtet.

Zur Ermittlung einer variablen Zeitskalierung wird bevorzugt eine Bahnbeschleunigung s°° als mindestens zweifach integrierbare und parametrisierbare Funktion definiert. Im einfachsten Fall ist das ein konstanter Wert oder eine Variable mit einem Wertebereich von 0 bis s°°max. Weiter unten wird erläutert, dass die Bahnbeschleunigung auch aus der allgemeinen Dynamikgleichung als variabler Wert berechnet sein kann.

Es ist alternativ möglich, zur Ermittlung einer variablen Zeitskalierung lediglich eine Bahngeschwindigkeit s° als mindestens einfach integrierbare und parametrisierbare Funktion zu definieren, oder aber einen Bahnruck als mindestens dreifach integrierbare und parametrisierbare Funktion zu definieren. Auch hier lassen sich die nachfolgend dargelegten Handlungsanweisungen entsprechend übertragen. Die folgende Darstellung geht davon aus, dass eine Bahnbeschleunigung s°° definiert wird.

Die Bahnbeschleunigung s°° wird zweifach unter Berücksichtigung von vorgegebenen Grenzen für die Bahngeschwindigkeit (s°max, s°min) und bevorzugt vorgegebenen Grenzen für die Bahnbeschleunigung (s°°max, s°°min) integriert, um hieraus die Parametrisierung zu bestimmen und die Ablaufvariable (s) als (mathematische) Funktion der Zeitvariablen (t) zu berechnen (Ergebnis siehe Figur 9).

Figur 10 zeigt das Zwischenergebnis nach der ersten Integration. Hier sind Grenzen der Bahngeschwindigkeit s°max, s°min sowie der Bahnbeschleunigung (s°°max, s°°min) aus der maximalen und minimalen Aktorgeschwindigkeit (U°max, U°min) sowie der maximalen und minimalen Aktorbeschleunigung (U°°max, U°°min) bestimmt worden. Dies wird nachfolgend mit einer mathematischen Erläuterung untermauert, die allerdings nur einen von vielen möglichen Berechnungswegen darstellt.

Besonders bevorzugt können die maximale und minimale Bahngeschwindigkeit s°max, s°min nach den folgenden Formeln berechnet werden:

$$\dot{s}_{max}(s) = \begin{cases} \dfrac{\dot{U}_{max}}{\dfrac{dU(s)}{ds}}, f\ddot{u}r \ \dfrac{dU(s)}{ds} > 0 \\ \dfrac{\dot{U}_{min}}{\dfrac{dU(s)}{ds}}, f\ddot{u}r \ \dfrac{dU(s)}{ds} < 0 \end{cases} \quad mit \ \dot{U}_{min} \le \dot{U} \le \dot{U}_{max}$$

$$\dot{s}_{min}(s) = \begin{cases} \dfrac{\dot{U}_{min}}{\dfrac{dU(s)}{ds}}, f\ddot{u}r \ \dfrac{dU(s)}{ds} > 0 \\ \dfrac{\dot{U}_{max}}{\dfrac{dU(s)}{ds}}, f\ddot{u}r \ \dfrac{dU(s)}{ds} < 0 \end{cases} \quad mit \ \dot{U}_{min} \le \dot{U} \le \dot{U}_{max}$$

Falls der Wert von dU(s)/ds gleich Null wird, wird die maximale / minimale Bahngeschwindigkeit also unendlich.

Die maximale und die minimale Bahnbeschleunigung s°°max, s°°min können nach den folgenden Formeln berechnet werden:

$$\ddot{s}_{max}(s, \dot{s}) = \begin{cases} \dfrac{\ddot{U}_{max} - \dfrac{d^2U(s)}{ds^2}\dot{s}^2}{\dfrac{dU(s)}{ds}}, f\ddot{u}r \ \dfrac{dU(s)}{ds} > 0 \\ \dfrac{\ddot{U}_{min} - \dfrac{d^2U(s)}{ds^2}\dot{s}^2}{\dfrac{dU(s)}{ds}}, f\ddot{u}r \ \dfrac{dU(s)}{ds} < 0 \end{cases} \quad mit \ \ddot{U}_{min} \le \ddot{U} \le \ddot{U}_{max}$$

$$\ddot{s}_{min}(s, \dot{s}) = \begin{cases} \dfrac{\ddot{U}_{min} - \dfrac{d^2U(s)}{ds^2}\dot{s}^2}{\dfrac{dU(s)}{ds}}, f\ddot{u}r \ \dfrac{dU(s)}{ds} > 0 \\ \dfrac{\ddot{U}_{max} - \dfrac{d^2U(s)}{ds^2}\dot{s}^2}{\dfrac{dU(s)}{ds}}, f\ddot{u}r \ \dfrac{dU(s)}{ds} < 0 \end{cases} \quad mit \ \ddot{U}_{min} \le \ddot{U} \le \ddot{U}_{max}$$

Eine absolute Obergrenze im Zustandsraum-Diagramm (90) gemäß Figur 10 ist zu jedem Wert der Ablaufvariablen (s) durch eine maximale Bahngeschwindigkeit (s°max) vorgegeben, welche nach der obigen Formel aus der maximalen Aktorgeschwindigkeit U°max berechnet ist. Die maximale Aktorgeschwindigkeit U°max kann beispielsweise als Betriebsgrenze auf einen bestimmten Wert festgelegt werden. Der schraffierte Bereich des Zustandsraums darf also nicht durchlaufen werden. In manchen Bereichen könnte die absolute Obergrenze allerdings bis ins Unendliche reichen (theoretisch). Es ist möglich, zusätzlich einen oberen Grenzwert (s°max,fix) festzulegen, der insgesamt nicht überschritten werden darf. Dieser ist in Figur 10 beispielhaft dargestellt.

Eine minimale Bahngeschwindigkeit (s°min) ist aus Gründen der vereinfachten Darstellung nicht aufgetragen. Sie hätte einen Verlauf, der gegenüber der Abszissenachse (40) spiegelbildlich zur maximalen Bahngeschwindigkeit (s°max) liegt.

In einer bevorzugten Ausführung wird die Skalierung (s=s(t)) monoton steigend ausgeführt, damit die Ausführung der Fahrzeugbehandlung nicht in umgekehrter Reihenfolge zum Bewegungsplan stattfindet. In einem solchen Fall kann die Bahngeschwindigkeit (s°) also nur Null oder positive Werte annehmen, sodass auf eine Berücksichtigung der minimalen Bahngeschwindigkeit (s°min) verzichtet werden kann.

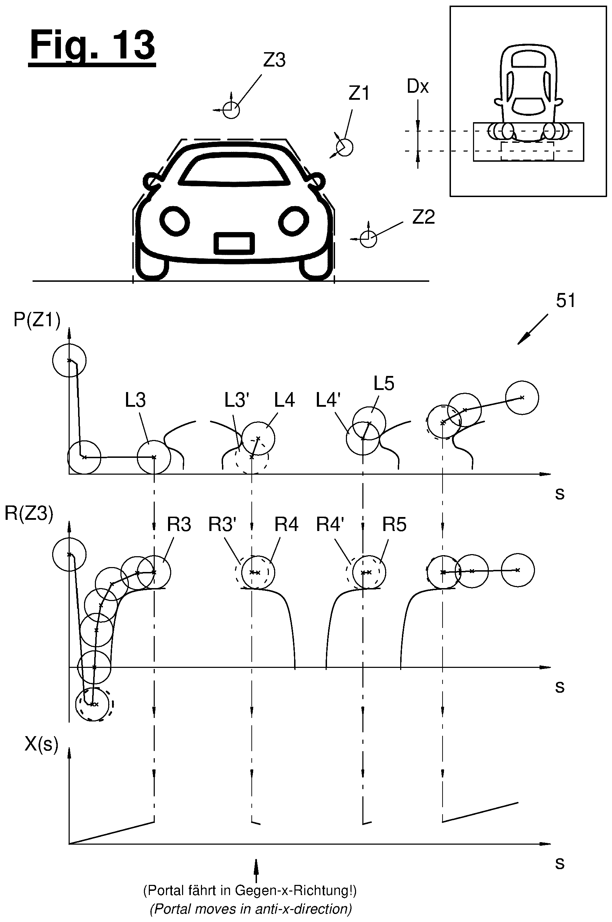

Es ist jedoch nicht ausgeschlossen, einen Teil der Fahrzeugbehandlung zunächst vorwärts, dann rückwärts, und erneut wieder vorwärts zu durchlaufen, beispielsweise um eine bestimmte Stelle des Fahrzeugs besonders intensiv zu reinigen, oder um ein bestimmtes Behandlungsaggregat eine Bewegung ausführen zu lassen, die für zumindest einen Aktor in einer verketteten Dynamik erfordert, dass dieser eine zeitweise Rückbewegung durchführt (vgl. Abschnitt 82' in Figur 9 und Erläuterungen zu Bewegungsabläufen gemäß Figur 13). Somit ist es durchaus möglich und in machen Anwendungen auch sinnvoll oder sogar notwendig, sowohl eine maximale Bahngeschwindigkeit, als auch eine minimale Bahngeschwindigkeit (s°min) zu berücksichtigen. Die vorliegenden Ausführungen gelten dann analog.

Die maximale und minimale Bahngeschwindigkeit stellen nur Grenzen dar, die nicht überschritten werden sollen. Es ist durchaus möglich, eine Zeitskalierung für alle Abschnitte basierend auf diesen Maximalwerten durchzuführen. Hieraus kann sich ein Verlauf der Bahngeschwindigkeit s° ergeben, der in Figur 10 im Wesentlichen dem Verlauf der Abschnitte s°max (variabel) und etwaig s°max,fix folgt. Es hat sich jedoch als vorteilhaft herausgestellt, dass eine andere Form der Zeitskalierung Vorteile bietet, insbesondere dass zusätzlich die maximale Bahnbeschleunigung s°°, etwaig der maximale Bahnruck oder auch sonstige Rand- oder Übergangbedingungen berücksichtigt werden. Hierzu werden nachfolgend diverse Ausführungen erläutert.

Um auf eine konkrete Funktion zu kommen, welche die variable Zeitskalierung (s=s(t)) definieren kann, wird ein zweistufiges Vorgehen vorgeschlagen. Die Reihenfolge der Stufen ist dabei unerheblich.

In der einen Stufe wird eine Vorwärtsintegration mit zwei Randbedingungen an der linken Grenze des berücksichtigten Bereichs durchgeführt, in Figur 10 also bei s=0. Die Randbedingungen können beliebig gewählt werden. Im vorliegenden Beispiel wird davon ausgegangen, dass die Ablaufvariable (s) und die Bahngeschwindigkeit (s°) einen vorgegebenen Startwert haben. Im Beispiel von Figur 10 sind beide Starwerte Null. Die Integration beginnt also bei s=0 am linken Rand. Dort wird die Bahngeschwindigkeit (s°) mit Null definiert (s°(0)=0). Es könnten alternativ beliebige andere bekannte Startwerte vorgesehen sein.

In der anderen Stufe wird eine Rückwärtsintegration mit zwei weiteren Randbedingungen an der rechten Grenze des berücksichtigten Bereichs durchgeführt, in Figur 10 also bei s=1. Auch diese Randbedingungen können beliebig gewählt werden. Im vorliegenden Beispiel wird erneut davon ausgegangen, dass die Ablaufvariable (s) und die Bahngeschwindigkeit (s°) einen vorgegebenen Endwert haben. Im Beispiel von Figur 10 ist der rechte Rand der berücksichtigten Bereichs dort, wo die Ablaufvariable den Wert 1 hat (s=1). Die Bahngeschwindigkeit (s°) wird dort wieder mit Null definiert (s°(1)=0).

Nun wird in der ersten Stufe (von links nach rechts / Vorwärtsintegration) ausgehend vom linken Rand und dem dort liegenden bekannten Startwert (hier: s°(0)=0) mit einem vorgegebenen Wert der Bahnbeschleunigung integriert. Dieser Wert ist im vorliegenden Beispiel der ermittelten Maximalwert der Bahnbeschleunigung (s°°max). Wenn die Vorgabekriterien anders gewählt sind, kann ein entsprechend anderer vorgegebenen Wert für die Beschleunigung genutzt sein. Es könnte insbesondere eine maximale Bahnbeschleunigung aus der Vorgabe eines maximalen Bahnrucks ermittelt werden. Weiter unten wird erläutert, dass ein Vorgabewert für die Beschleunigung auch lokal unterschiedlich sein kann und insbesondere aus der allgemeinen Dynamikgleichung für die Fahrzeug-Behandlungsanlage (1) berechenbar ist.

Die Integration wird solange durchgeführt, bis an einem bestimmten Wert der Ablaufvariable (s) das Integral den Wert der maximalen Bahngeschwindigkeit (s°max, etwaig s°max,fix) erreicht, oder bis der rechte Rand des Bereichs (s=1) erreicht wird.

In der zweiten Stufe (von rechts nach links / Rückwärtsintegration) wird ausgehend vom rechten Rand und dem dort liegenden bekannten Startwert (hier: s°(1)=0) mit einem weiteren vorgegebenen Wert für eine Beschleunigung in Gegenrichtung integriert, d.h. vom rechten Rand (s=1) in Gegenrichtung zur Abszissenachse (40) bzw. in Richtung des linken Randes. Im vorliegenden Beispiel ist dieser vorgegebene Wert die minimale Bahnbeschleunigung (s°°min), die aus der minimalen Aktorbeschleunigung U°°min (Bremsleistung) berechnet ist. Je nach Wahl der Vorgabekriterien kann hier ein anderer Wert genutzt werden, analog zu den obigen Ausführungen.

Diese Rückwärtsintegration wird ebenfalls solange durchgeführt, bis an einem bestimmten Wert der Ablaufvariable (s) das Rückwärtsintegral (92) den Wert der maximalen Bahngeschwindigkeit (s°max, etwaig s°max,fix) erreicht, oder bis der linke Rand des Bereichs (s=0) erreicht wird.

In Figur 10 sind die Werte der Bahngeschwindigkeit (s°) gemäß Vorwärtsintegral (91) und Rückwärtsintegral (92) bis zu ihrem Schnittpunkt (93) mit einer dicken durchgezogenen Linie gezeigt. Diese Abschnitte bilden im Beispiel von Figur 10 die Kette (100) der Abbildungen. Über diese Kette der Abbildungen wird nochmals integriert, um den Verlauf s(t) zu erhalten.

Die jeweils hinter dem Schnittpunkt (93) liegenden Bereiche des Vorwärtsintegrals (91) und des Rückwärtsintegrals (92) können unberücksichtigt bleiben.

Ein sich ergebender Gesamt-Verlauf der variablen Skalierung (82) ist beispielhaft in Figur 9 gezeigt.

Die variable Skalierung kann mindestens einen Abschnitt (82') umfassen, in welchem eine negative Steigung (s °<0) vorliegt. An solchen Stellen wird bei der Abbildung der Ablaufvariable (s) auf die Real-Zeit (t) ein Teil der Soll-Werte in negativer Richtung der Ablaufvariable (s) durchlaufen (siehe Ausführungen oben). Nachfolgend wird aus Gründen der einfacheren Verständlichkeit ein monoton steigender Verlauf der variablen Skalierung (82) angenommen.

Die variable Zeitskalierung (81, 82), d.h. der zeitabhängige Verlauf der Ablaufvariable (s=s(t)), wird also bevorzugt aus dem Integral einer Kette von Abbildungen gebildet, die den Verlauf der Bahngeschwindigkeit (s°) in einem Zustandsraum über der Ablaufvariable (s) beschreiben.

Die Kette der Abbildungen umfasst wiederum bevorzugt Vorwärtsintegrale (91, 96a) und Rückwärtsintegrale (92, 96b) der maximalen Bahnbeschleunigung (s°°max) ausgehend von Rand- und Übergangsbedingungen. Sie kann aber auch abschnittsweise einen konstanten Zeitskalierungs-Faktor (F) umfassen. Dieser wäre in Figur 10 eine horizontale Strecke, insbesondere bei Erreichen des oberen Grenzwerts (s°max, fix).

Allgemein ausgedrückt ist der zeitabhängige Verlauf der Ablaufvariable (s=s(t)) bevorzugt abschnittsweise zusammengesetzt und wird durch ein Integral einer Kette von Abbildungen für die Bahngeschwindigkeit (s°) gebildet, wobei diese Abbildungen die Verläufe von Vorwärtsintegral (91) und Rückwärtsintegral (92) bis zu deren Schnittpunkt (92) umfassen oder, falls der Wert der maximalen Bahngeschwindigkeit (s°max, etwaig s°max,fix) erreicht wird, eine Ersatzkurve. Als Ersatzkurve kann häufig der Verlauf der maximalen Bahngeschwindigkeit (s°max, s°max,fix) für den entsprechenden Abschnitt der Ablaufvariable (s) genutzt werden.

Alternativ kann ein Schnittpunkt-Zwischenabschnitt definiert werden, mit dem die nächstliegende Ersatzkurve an die maximale Bahngeschwindigkeit (s°max) eingehalten werden kann, ohne die sonstigen physikalischen Grenzen und Betriebsgrenzen zu überschreiten. Die Ermittlung eines solchen Schnittpunkt-Zwischenabschnitts wird weiter unten erläutert.

In dem Zeitskalierungsplan (80) von Figur 9 sind beispielhaft eine (abschnittsweise) konstante Skalierung (81) und eine variable Skalierung (82, 82') dargestellt.

Die beiden Skalierungsarten (variable / konstant) können jeweils separat oder in Kombination verwendet werden. Ferner kann eine variable Skalierung auch auf andere Weise als durch die o.g. Integration ermittelt werden.

Für eine erste Gruppe von Zeitabschnitten (und entsprechende Abschnitten der Ablaufvariable (s)) kann also eine erste Skalierungsart, beispielsweise die konstante Skalierung, und für eine weitere Gruppe von Zeitabschnitten kann eine weitere Skalierungsart, beispielsweise eine konstante Skalierung gewählt werden.

Figur 11 erläutert die Erstellung eines Dynamikplans (70) für die Fahrzeugbehandlung. Der Dynamikplan (70) umfasst

- eine Soll-Trajektorie (A,B,C), und bevorzugt weiterhin
- eine Soll-Geschwindigkeit (A°,B°,C°), und/oder
- eine Soll-Beschleunigung (A°°,B°°,C°°)

für die Mehrzahl der Aktoren (21,22,23) in Bezug auf eine Zeitvariable (t).

Es kann ausreichen, dass der Dynamikplan (70) nur eine Soll-Trajektorie (A,B,C) umfasst. Der Dynamikplan (70) kann als geordnete Datenstruktur vorliegen und auf einem physischen Speicher abgelegt sein. Er kann alternativ als ein Datenstrom vorliegen, der nach und nach erzeugt und verarbeitet wird. Besonders bevorzugt ist der Dynamikplan als ein Array, eine Tabelle oder eine ähnliche Datenstruktur abgelegt und deckt nicht nur einen momentanen Zeitpunkt in der Real-Zeit, sondern zusätzlich einen in der Zukunft liegenden Zeitabschnitt ab. Dies gilt insbesondere für einen Dynamikplan, der in der Steuerung bzw. dem Steuergerät der Behandlungsanlage abgelegt ist. Ein Dynamikplan kann abschnittsweise oder insgesamt als ein digitales Objekt gespeichert werden. So ist es beispielsweise möglich, das Steuerverfahren gemäß der vorliegenden Offenbarung durch eine Recheneinrichtung ausführen zu lassen, die zeitlich und/oder örtlich von der Fahrzeug-Behandlungsanlage getrennt ist.

Die Soll-Geschwindigkeit (A°,B°,C°) und/oder die Soll-Beschleunigung (A°°,B°°,C°°) können explizit angegeben sein. Sie können alternativ oder zusätzlich durch Ableitung aus der Soll-Trajektorie (A,B,C) ermittelt werden. Diese Ermittlung kann zu einem beliebigen Zeitpunkt geschehen. Beispielsweise kann eine Steuerung der Behandlungsanlage die Soll-Geschwindigkeit (A°,B°,C°) und/oder die Soll-Beschleunigung (A°°,B°°,C°°) vor der Übergabe an einen oder mehrere Regler (32) für die Aktoren selbst ermitteln und insbesondere durch Ableitung (Differentiation) berechnen. Alternativ oder zusätzlich kann die Ermittlung von Soll-Geschwindigkeit (A°,B°,C°) und die Soll-Beschleunigung (A°°,B°°,C°°) durch einen Regler (32) des anzusprechenden Aktors erfolgen. Für jeden Aktor kann ein separater Regler (32) vorgesehen sein. Alternativ kann ein Regler (32) gemeinsam für zwei oder mehr Aktoren vorgesehen sein.

Eine bevorzugte Ausführung sieht vor, dass der Dynamikplan vollständig mit Soll-Trajektorie, Soll-Geschwindigkeit und Soll-Beschleunigung erzeugt wird und dass die jeweils zusammengehörenden Soll-Werte für jeden Zeitpunkt der Regelung gemeinsam an einen Regler übergeben werden. Dies ist vorteilhaft, um die maximalen Beschleunigungen der Aktoren auszunutzen.

Der Dynamikplan wird aus dem Bewegungsplan durch eine lokale Streckung und/oder Stauchung mittels einer Zeitskalierung (82,82) erzeugt. Die Streckung und/oder Stauchung führt in der Regel nicht zu einer Veränderung der Höhe der Soll-Werte des Soll-Pfads (U,V,W), sondern lediglich zu einer anderen Verteilung der Soll-Werte des Soll-Pfads (U,V,W) gegenüber der Zeitvariablen (t). Damit ist das Ergebnis einer Zeitskalierung in der Regel anders, als das Ergebnis, das durch reines Beschleunigen eines Waschprogramms erzielt würde. Insbesondere wird durch die Zeitskalierung kein Überschwingen herbeigeführt. Die Erzeugung des Dynamikplans kann vor oder während der Durchführung einer Fahrzeugbehandlung erfolgen. Sie kann abschnittsweise für einen bestimmten Bereich der Ablaufvariable (s) / der Zeitvariable (t) erfolgen oder insgesamt für einen gesamten Behandlungsvorgang oder dessen Zyklen.

Im Beispiel von Figur 11 ist oben der Bewegungsplan aus Figur 8 nochmals gezeigt. Die enthaltenen Verläufe der Soll-Pfade, Soll-Stellraten und Soll-Stellratenänderungen sind als Basis für die Streckung/Stauchung gemäß dem Verlauf der variablen Skalierung (82) aus Figur 9 verwendet.

In der grafischen Darstellung bedeutet die Skalierung, dass die Abszissenachse (40), welche im Bewegungsplan (60) die Ablaufvariable (s) zeigt, im Dynamikplan durch die Zeitvariable (t) ersetzt wird.

Die Soll-Werte für die Bewegung der Aktoren (21,22,23) werden im Dynamikplan auf Basis der Soll-Trajektorien (A,B,C) ausgedrückt, die in Abhängigkeit von der Zeitvariablen (t) abgebildet sind. Zusätzliche Soll-Werte sind für die Soll-Geschwindigkeiten (A°,B°,C°) und bevorzugt die Soll-Beschleunigungen (A°°,B°°,C°°) definiert. Es könnten alternativ oder zusätzlich Soll-Werte für einen Soll-Ruck definiert sein.

Der grafische Verlauf der Soll-Trajektorie (A,B,C) hat eine deutliche Ähnlichkeit zum Verlauf des zugehörigen Soll-Pfads (U,V,W), ist jedoch lokal in Richtung der Abszissenachse (40) gestreckt oder gestaucht. Dort, wo die Steigung (ds/dt) der Skalierung (81,82) hoch ist, wird der Bewegungsplan vergleichsweise schneller durchlaufen, sodass an diesen Stellen die Soll-Trajektorie (A,B,C) eines Aktors (21,22,23) gegenüber dem zugehörigen Soll-Pfad (U,V,W) gestaucht erscheint. Dort, wo die Steigung (ds/dt) der Skalierung (81,82) niedrig ist, wird der Bewegungsplan vergleichsweise langsamer durchlaufen, sodass an diesen Stellen die Soll-Trajektorie (A,B,C) eines Aktors (21,22,23) gegenüber dem zugehörigen Soll-Pfad (U,V,W) gestreckt erscheint.

Die Soll-Beschleunigungen (A°°,B°°,C°°) lassen übereinstimmende Zeitpunkte (ti) erkennen, zu denen Beschleunigungen der Aktoren (21,22,23) beginnen und enden. Aus Gründen der vereinfachten Darstellung sind diese übereinstimmenden Zeitpunkte (ti) nur für einen Teil der Zeitachse (t) und rein exemplarisch angegeben. Die Gleichzeitigkeit der Beschleunigungen für die mehreren Aktoren (21,22,23) führt zu einem besonders sanften und geschmeidigen Bewegungsverhalten, insbesondere bei (allen) multidimensionalen Stellbewegungen eines Behandlungsaggregats. Die Gleichzeitigkeit kann sich als mittelbare Folge der Posenplanung und der bevorzugt einheitlichen Zeitskalierung (80) ergeben.

Zwischen je zwei Zeitpunkten (ti) liegt eine Beschleunigungsphase (ki). Es zeigt sich, dass die Beschleunigungsphasen (ki) im Verlauf der Soll-Beschleunigung (A°°) für den ersten Aktor und die Beschleunigungsphasen (ki) im Verlauf der Soll-Beschleunigung (B°°) für den zweiten Aktor übereinstimmen. Sie laufen im Wesentlichen zeitgleich ab.

Ferner bilden jeweils mehrere aneinander anschließende Beschleunigungsphasen (ki) im Verlauf der Soll-Beschleunigung (A°°) des ersten Aktors eine erste Kette (m). Jeweils zugeordnete und ebenfalls aneinander anschließende Beschleunigungsphasen (ki) im Verlauf der Soll-Beschleunigung (B°°) des zweiten Aktors bilden ebenfalls eine Kette (n). Die beiden Ketten bilden auf der Makroebene eine Kette von Teilbewegungen, die insgesamt zu einer flüssigen multidimensionalen Stellbewegung des Behandlungsaggregats führt, das gemeinsam durch den ersten Aktor und den zweiten Aktor bewegt wird.

Ein besonderer Vorteil des Dynamikplans gemäß der vorliegenden Offenbarung besteht darin, dass er auch für eine Mehrzahl von Aktoren, die einer ein- oder mehrfach verketten Kinematik unterliegen, als gemeinsamer Dynamikplan erzeugbar ist. Auch in diesem Fall kann der Dynamikplan während der Dauer des Behandlungs-Abschnitts für jede Phase mit einer multidimensionalen Stellbewegung des Behandlungsaggregats für diese Aktoren zueinander synchronisierte Beschleunigungen (A°°,B°°,C°°) definieren, sodass sich bei der Ausführung der multidimensionalen Stellbewegung übereinstimmende Beschleunigungsphasen (ki) für die mehreren Aktoren (21,22,23) ergeben, selbst wenn sie zur Bewegung mehrerer Behandlungsaggregate beitragen.

In der in den Figuren gezeigten Behandlungsanlage (1) kann also ein Dynamikplan (70) erzeugt werden, der zumindest für die Bewegung des Portalantriebs (5), die Bewegung des Hubantriebs (14) der Dachbürste (12) und die Bewegungen der Schiebe-Aktoren (9), Neigungs-Aktoren (16) und Knick-Aktoren (18) der Seitenbürsten (6,7) in einer gemeinsamen geordneten Datenstruktur Soll-Werte vorgibt, durch die zueinander teil- oder vollsynchronisierte Beschleunigungen dieser Aktoren erzielt werden, und zwar während des überlappenden oder gleichzeitigen Eingriffs der insgesamt fünf Behandlungsaggregate:

- Dachbürste (12)
- Oberes Bürstensegment (6a) der ersten Seitenbürste (6)
- Unteres Bürstensegment (6b) der ersten Seitenbürste (6)
- Oberes Bürstensegment (7a) der zweiten Seitenbürste (7)
- Unteres Bürstensegment (7b) der zweiten Seitenbürste (7).

Das Ergebnis nach dem Beispiel von Figur 11 kann sich bereits dann ergeben, wenn nur eine der Bewegungsgrößen Soll-Trajektorie, Soll-Geschwindigkeit, Soll-Beschleunigung oder Soll-Ruck definiert ist, da zwischen diesen Größen durch Differentiation / Integration umgerechnet werden kann. Es ist daher möglich, beispielsweise nur eine oder zwei dieser Bewegungsgrößen tatsächlich im Dynamikplan (70) zu definieren bzw. an einen Regler (32) zu übergeben.

Eine besonders exakte Umsetzung der gewünschten multidimensionalen Stellbewegungen und/oder eine maximale Ausnutzung der möglichen Leistung werden begünstigt, wenn zumindest zwei und bevorzugt drei der Bewegungsgrößen im Dynamikplan definiert und an einen Regler (32), insbesondere einen Zustandsregler übergeben werden.

Die Trennung des Planungsvorgehens in einen Bewegungsplan und einen Dynamikplan bietet weiterhin folgende Vorteile:

Im Bewegungsplan können für alle relevanten Zustände, die die Behandlungsaggregate während einer Fahrzeugbehandlung einnehmen sollen, in einer bestimmten Reihenfolge (i) geeignete Raumlagen der zugehörigen Zielpunkte (Z1,Z2,Z3) definiert werden, aus denen sich zugehörige Stellpositionen (Pi) der Aktoren (21,22,23) ableiten lassen. Bei diesem Planungsschritt bedarf es keiner Berücksichtigung der physikalischen Grenzen oder Betriebsgrenzen der Aktoren, sodass ein zielgerichtetes Vorgehen mit einem schnell durchführbaren und robusten Verarbeitungsprozess ermöglicht wird. Dieser Verarbeitungsprozoess kann manuell oder bevorzugt teilautomatisiert oder vollautomatisiert ausgeführt werden.

Aus den Stellpositionen (Pi) können in dem Bewegungsplan für die Mehrzahl an Aktoren (21,22,23) mit einfachen Mitteln (Funktionsauswahl, Parametrisierung, Lösung von einfachen Gleichungssystemen mit Randbedingungen) Soll-Pfade erstellt werden, was ebenfalls noch keine Berücksichtigung der physikalischen Grenzen oder Betriebsgrenzen der Aktoren erfordert. In diesen Planungsschritt können allerdings etwaige Koppelungen der Kinematik zwischen den Aktoren einfließen, sodass die Bewegungspläne bereits teilweise oder vollständig untereinander (in Bezug auf eine Ablaufvariable s) synchronisiert sein können. Eine Koppelung der Kinematik zwischen zwei Aktoren liegt vor, wenn diese an einer verketteten Kinematik für ein Behandlungsaggregat teilnehmen. Somit lässt sich zumindest für eine einfach verkettete Kinematik eine widerspruchsfreie Planung vornehmen.

Im Rahmen der Synchronisation können insbesondere in einem Soll-Pfad (U) für einen ersten Aktor (21) an solchen Werten der Ablaufvariable (s) zusätzliche Stellpositionen (Pi*) als ergänzende Stützpunkte eingefügt werden, wo eine bestimmte Soll-Raumlage eines anderen Aktors (22,23) definiert ist. Dies ist insbesondere dann hilfreich, wenn der erste Aktor und der andere Aktor kinematisch gekoppelt sind.

Kinematisch gekoppelte Bewegungen für Aktoren (21,22,23) können aus beliebigen Gründen und in einer großen Vielzahl von Ausbildungen vorliegen. Kinematisch gekoppelte Bewegungen liegen insbesondere für eine Gruppe von Aktoren (21,22,23) vor, wenn

- die Aktoren (21,22,23) für die Betätigung von zwei oder mehr Behandlungsaggregaten (6,7,12) vorgesehen sind, UND
- mindestens ein Aktor (21) in der Gruppe vorliegt, durch dessen Betätigung mindestens zwei Teilbewegungen verursacht werden, nämlich eine erste Teilbewegung für ein erstes Behandlungsaggregat (7) sowie mindestens eine weitere Teilbewegung für ein zweites Behandlungsaggregat (12).

In Figur 5 sind beispielhaft einige zusätzliche Stellpositionen (Pi*) des Portalantriebs / Führungs-Aktors (5) eingezeichnet, die als Stützpunkte eingefügt sind, beispielsweise weil dort eine Soll-Raumlage für den Zielpunkt (Z3) der Dachbürste (12) oder für den Zielpunkt (Z1) des oberen Bürstenabschnitts (6a) sinnvoll wäre.

Die aus diesen zusätzlichen Stützpunkten (Pi*) abgeleiteten Sollwerte (62) im Soll-Pfad (U) gemäß Figur 7 sind zur Erreichung mit einer bestimmten Toleranz vorgesehen.

Es ist somit möglich, für mindestens ein Behandlungsaggregat und insbesondere für zwei oder mehr Behandlungsaggregate (6,7,12) bzw. deren Zielpunkte nur für bestimmte Bereiche im Behandlungsvorgang Soll-Raumlagen (R,L) zu definieren, d.h. einen Mindest-Definitionssatz an Soll-Raumlagen, und zwar bevorzugt in Abhängigkeit der Konturerkennungsdaten (50). Das können insbesondere Bereiche sein, in denen eine starke Änderung der Fahrzeugkontur oder konkave / konvexe Krümmungen vorliegen, sowie am Anfang und Ende von im wesentlichen flachen Konturbereichen. Die Anzahl der zu planenden Soll-Raumlagen kann damit für jedes Behandlungsaggregat auf ein Minimum reduziert werden.

Für die anderen Zielpunkte können dazu entsprechende Zusatz-Raumlagen ermittelt werden und zugehörige zusätzliche Sollpositionen (Pi*), aus denen dann entsprechende zusätzliche Stützpunkte in den Soll-Pfaden der zugehörigen Aktoren ableitbar sind.

Besonders bevorzugt wird für jede Soll-Raumlage in dem Mindest-Definitionssatz ein zugehöriger Wert der Ablaufvariable (s) ermittelt (oder gesetzt) und eine Pose (Körperhaltung) für mehrere oder alle Behandlungsaggregate (6,7,12) ermittelt oder definiert. Für die Pose kann insbesondere ein Gesamtzustand aller (aktiven) Aktoren ermittelt oder definiert werden, um zugehörige Sollwerte (61,62) in den Soll-Pfaden vorzusehen. Auf diese Weise werden mehrere oder bevorzugt alle Soll-Pfade in Bezug auf die Ablaufvariable (s) zueinander synchronisiert. Zwischen den einzelnen Werten der Ablaufvariable (s), zu denen Sollwerte definiert sind, liegen dann jeweils einheitliche Abschnitte.

Alternativ können die Soll-Pfade aber auch unabhängig voneinander geplant werden. Dies kann insbesondere dann vorteilhaft sein, wenn für zwei oder mehr Aktoren keine kinematische Kopplung vorliegt. Denn in diesem Fall liegen tendenziell weniger Sollpositionen (Pi) vor, sodass die Verarbeitung bei geringeren Anforderungen an die Rechenleistung stattfinden kann.

Der Bewegungsplan (60) umfasst bevorzugt eine exakte kinematische Definition der Bewegungen der Aktoren (21,22,23) für die Durchführung der Fahrzeugbehandlung und ist dafür geeignet, bei einer einstellbaren Verarbeitungsgeschwindigkeit durchlaufen zu werden.

Durch die Zeitskalierung wird die Verarbeitungsgeschwindigkeit so festgelegt, dass die Bewegungen der Aktoren bei frei wählbaren Vorgabekriterien erfolgen kann, also beispielsweise einerseits unter Ausnutzung der maximalen Beschleunigung und andererseits unter Minimierung des Energieverbrauchs. Weiterhin kann durch die Zeitskalierung gewährleistet werden, dass die Bewegungen der Aktoren nicht die physikalischen Grenzen sowie die vorgegebenen Betriebsgrenzen überschreiten, ohne dass es der Festlegung einer Phasenbeschränkung bedarf. Besonders bei zwei- oder mehrfacher Verkettung der Kinematik können im Rahmen der Zeitskalierung Widersprüche zwischen den Einzelbewegungen dieser Aktoren und den sich daraus ergebenden Posen aufgelöst werden.

Der auf Basis der Zeitskalierung erzeugte Dynamikplan gestattet somit für jeden Moment der Fahrzeugbehandlung eine Steuerung aller (in der Planung berücksichtigten) Aktoren mit den idealen Steuerparametern (momentane SollPosition gemäß Soll-Trajektorie, momentane Soll-Geschwindigkeit, momentane Soll-Beschleunigung) gemäß den Vorgabekriterien. Dies ist insbesondere möglich, ohne dass hierfür eine Phasentrennung oder eine Separation der Steuerung / Regelung für einzelne Aktoren nötig wäre. Vielmehr kann die gesamte Behandlungsanlage (1) mit einer beliebig großen Zahl an Behandlungsaggregaten und Aktoren mit einer ganzheitlichen Steuerung bzw. Regelung aller Teilbewegungen betrieben werden, wobei in jedem Zeitpunkt die Gesamtheit der Randbedingungen eingehalten wird. Der gesamte Behandlungsvorgang kann ferner vollständig in einer Simulationsumgebung ausgeführt und visualisiert werden.

Ferner kann die Fahrzeugbehandlung für alle Teile des Fahrzeugs (3), für die bereits eine Konturerfassung (51) erfolgt ist, vollständig antizipiert werden und zwar sowohl hinsichtlich der momentanen Zustände aller Aktoren und Behandlungsaggregate, als auch hinsichtlich der Behandlungsdauer. Die Zustände können gemäß dem Dynamikplan (70) zumindest im Hinblick auf die Soll-Trajektorie (A,B,C) festgelegt sein. Bevorzugt ist zusätzlich die Soll-Geschwindigkeit (A°,B°,C°) und/oder die Soll-Beschleunigung (A°°,B°°,C°°) vorgegeben.

In den Zeichnungen sind grafische Darstellungen von Konturerfassungsdaten (51), Ablaufplan (50), Bewegungsplan (60), Dynamikplan (70) und Zeitskalierungsplan (80) gezeigt, die den Ablauf des offenbarungsgemäßen Steuerverfahrens erläutern sollen.

Alternativ oder zusätzlich zu solchen grafischen Repräsentationen können diese Inhalte in anderer Form und insbesondere in einer geordneten Datenstruktur vorliegen. Dies können insbesondere sein: mathematisch definierte Funktionen, Approximationskurven solcher Funktion, Arrays, Tabellen, Vektoren.

Eine besonders bevorzugte Ausführung sieht vor, dass zumindest der Dynamikplan (70) in einer solchen Form vorliegt, dass für jedes Zeitintervall der Durchführung des Steuerverfahrens, beispielswiese für jeden Zeitschritt der Steuerzeit, besonders bevorzugt für jede Millisekunde, je ein Wert für die Soll-Trajektorie (Position oder Winkel), und bevorzugt weiterhin für die Soll-Geschwindigkeit (translatorisch oder rotatorisch) und/oder die Soll-Beschleunigung vorliegt, wobei diese Werte an einen eine Regelung für den jeweiligen Aktor (21,22,23) übergeben werden. Der Dynamikplan umfasst dabei in einer gemeinsamen Datenstruktur Soll-Werte für mehrere Aktoren, insbesondere für eine Gruppe von Aktoren, die an der Bewegung eines Behandlungsaggregats teilhaben. Weiter bevorzugt umfasst der Dynamikplan in einer gemeinsamen Datenstruktur Soll-Werte für mehrere Aktoren, die einer ein- oder mehrfach verketteten Kinematik für die Bewegung von mindestens zwei Behandlungsaggregaten unterliegen. Die Regelung der Aktorbewegung wird gemäß dem Dynamikplan in eine tatsächliche Bewegung umgesetzt, sodass die Ist-Trajektorie der Soll-Trajektorie entspricht oder angenähert wird. Der Regler kann eine beliebige Ausbildung haben. Es kann sich beispielsweise um einen Kaskadenregler handeln. Besonders bevorzugt ist der Regler ein Zustandsregler.

Der Regler (32), insbesondere der Kaskadenregler oder Zustandsregler, ist also dazu eingerichtet, den Aktor (21,22,23) derart anzusteuern, dass die Ist-Trajektorie, und bevorzugt auch die Ist-Geschwindigkeit und/oder die Ist-Beschleunigung den Soll-Werten nachfolgen. Der Regler (32), insbesondere der Kaskadenregler oder Zustandsregler, kann etwaige Abweichungen zwischen den Ist-Werten und den Soll-Werten durch entsprechende Regeleingriffe kompensieren.

Nachfolgend werden noch etwas komplexere Beispiele erläutert, bei denen sich zusätzliche Vorteile ergeben.

Figur 14 erläutert eine Möglichkeit zur Erzeugung eines Schnittpunkt-Zwischenabschnitts (96) als Abschnitt einer variablen Zeitskalierung (82).

In diesem Beispiel sind dieselben Grundannahmen getroffen, die oben zur Figur 10 erläutert worden sind. Allerdings ist hier ein niedrigerer Verlauf der maximalen Bahngeschwindigkeit (s°max) berechnet. Ein solcher Fall kann beispielsweise eintreten, wenn die Betriebsgrenzen für die Bewegung eines Aktors herabgesetzt werden. Ein solches Herabsetzen der Betriebsgrenzen kann eine beliebige Ursache haben, bspw. die Wahl eines Waschprogramms mit höherer Einwirkzeit, oder das Übergehen der Anlage in einen Sicherheitsmodus.

Im Beispiel von Figur 14 treffen sich (im Gegensatz zu dem Beispiel von Figur 10) die Verläufe von Vorwärtsintegral (91) und Rückwärtsintegral (92) nicht. Vielmehr schneidet das Vorwärtsintegral (91) den Verlauf der maximalen Bahngeschwindigkeit (s°max) in einem Schnittpunkt (94). Und auch das Rückwärtsintegral (92) schneidet den Verlauf der maximalen Bahngeschwindigkeit (s°max) in einem Schnittpunkt (95). Die maximale Bahngeschwindigkeit (s°max) darf/soll definitionsgemäß nicht überschritten werden.

Es wird nun nach einer/der nächstgelegenen Ersatzkurve gesucht, mit der unter Einhaltung der Rand- und Übergangsbedingungen, eine möglichst große Bahnbeschleunigung (s°°) und somit auch eine möglichst große Bahngeschwindigkeit (s°) erreicht werden kann.

Ein Vorgehen zur Ermittlung der nächstgelegenen Ersatzkurve, das sich als vorteilhaft erwiesen hat, weist die folgenden Schritte auf:

- Ermitteln des Tangentialpunktes (97), an welchem bei Integration mit der maximalen Bahnbeschleunigung (s°°max) der Verlauf der maximalen Bahngeschwindigkeit (s°max) nicht überschritten, sondern nur tangential berührt wird und Ermittlung von dessen Wert (sT) der Ablaufvariable, sowie der dortigen maximalen Bahngeschwindigkeit (s°(sT)).
- Von diesem Tangentialpunkt (97) aus: Bildung eines weiteren Vorwärtsintegrals (96a) und eines weiteren Rückwärtsintegrals (97b), basierend auf dem dortigen Wert der maximalen Bahngeschwindigkeit (s°(sT)) bei maximaler Bahnbeschleunigung (s°°max).
- Die Vorwärtsintegration sowie die Rückwärtsintegration werden wieder solange durchgeführt, bis an einem bestimmten Wert der Ablaufvariable (s) ein neuer Schnittpunkt (98,99) zwischen dem weiteren Vorwärtsintegral / Rückwärtsintegral (96a,96b) mit einem Verlauf der vorherigen Vorwärtsintegrale / Rückwärtsintegrale (91, 92) gefunden wird.

Falls im letzten Schritt dieses Vorgehens KEIN weiterer Schnittpunkt (98,99) mit einem Verlauf der vorherigen Vorwärtsintegrale / Rückwärtsintegrale (91, 92) gefunden werden sollte, sondern stattdessen wieder ein Schnittpunkt mit dem Verlauf der maximalen Bahngeschwindigkeit (s°max) erreicht wird, kann das Vorgehen iteriert werden, um einen nochmals untergeordneten Schnittpunkt-Zwischenabschnitt zu finden (nicht dargestellt). Das Vorgehen kann solange wiederholt werden, bis für alle Werte der Ablaufvariable (s) ein geeigneter Abschnitt (91,92,96a,96b) gefunden ist.

Die Methode der variablen Zeitskalierung kann auch mehrere Aktoren berücksichtigen. Dazu wird für jeden (zu berücksichtigenden) Aktor die maximale Bahngeschwindigkeit (s°max) ermittelt und für die Berechnung verwendet. Ebenso wird für jeden Aktor eine maximale Bahnbeschleunigung (s°°max) berechnet. Von diesen Werten, wird dann jeweils die geringste berechnete maximale Bahngeschwindigkeit (s°max) und die geringste berechnete Bahnbeschleunigung (s°°max) verwendet und die Zeitskalierung aller (zu berücksichtigenden) Aktoren wird auf Basis dieser geringsten berechneten Werte ermittelt.

In den obigen Beispielen wurde davon ausgegangen, dass eine maximale Bahngeschwindigkeit (s°°max) basierend auf im wesentlichen statischen Werten für eine maximale Aktorgeschwindigkeit (U°max) und/oder eine maximale Aktorbeschleunigung (U°°max) berechnet werden. Es zeigt sich allerdings, dass eine maximale Aktorgeschwindigkeit (U°max) und eine maximale Aktorgeschwindigkeit (U°°max) dynamischen Einflüssen unterliegen und von der aktuellen Raumlage eines Behandlungsaggregats abhängen und/oder sich auch gegenseitig beeinflussen können. Deshalb wird eine statische Vorgabe dieser Werte in aller Regel sehr konservativ vorgenommen, sodass das wahre Leistungspotenzial der Aktoren nicht ausgenutzt wird.

Gemäß einer bevorzugten Ausführung kann ein dynamisches Modell der Behandlungsanlage bzw. der Behandlungsaggregate in die Berechnung einbezogen werden, um die physikalischen Grenzen oder Betriebsgrenzen (zumindest abschnittsweise) in Abhängigkeit von einem Zustand der Fahrzeug-Behandlungsanlage variable auszuführen. Der Zustand kann insbesondere bestimmt sein durch,

- eine Raumlage eines oder mehrerer Behandlungsaggregate (winkelabhängige Anteile der Gravitationskräfte, Corioliskräfte); und/oder
- einer momentane Geschwindigkeit oder Stellrate eines Aktors (Elastizität des Beschleunigungsvermögens). Besonders bevorzugt kann eine maximale dynamische AktorBeschleunigung als variable Größe ermittelt werden.

Hierfür kann die Dynamik der Behandlungsanlage in einem Gleichungssystem modelliert werden, bevorzugt in einer Vektor-Definition mit einer Massenträgheitsmatrix (M), einem Vektor (Vv) für die geschwindigkeitsabhängigen Coriolis- und Zentripetalkräfte, sowie einem Vektor (Vg) mit den Gravitationskräften. Daraus können nach der allgemeinen Dynamikgleichung für die jeweiligen Werte des Soll-Pfads (U) und seiner Ableitungen (U°, U°°) die momentane Aktorkraft / das Aktormoment (I) berechnet werden. Ein Beispiel mit einer geeigneten Vektor-Definition ist:

$$I = M(U) \cdot \ddot{U} + V_v\big(U, \dot{U}\big) + V_g(U)$$

Diese Gleichung kann nach U°°(U,U°) umgestellt werden. Für jeden Wert der Ablaufvariable (s) / Zeitvariable (t) können infolge der bekannten Pose und der bekannten Stellwerte (Zustandswerte) für die Aktoren also die dynamischen maximalen Aktor-Beschleunigungen ermittelt werden. Diese Werte können anstelle von U°°max / U°°min in die obigen Formeln zur Berechnung der maximalen Bahngeschwindigkeit (s°max) bzw. der maximalen Bahnbeschleunigung (s°°max) eingesetzt werden. Dann ist die Grenze U°°max / U°°min also kein fester Wert mehr, sondern abhängig von der aktuellen Position und Orientierung des jeweiligen Behandlungsaggregats sowie dem Zustand der zugeordneten Aktoren mit seinem wahren dynamischen Maximalwert berechenbar.

Durch diese variable Berechnung der dynamischen maximalen Aktorbeschleunigung können die Soll- und Ist-Geschwindigkeiten häufig massiv erhöht werden, insbesondere in solchen Abschnitten / Zeitphasen, in denen kein oder nur ein Behandlungsaggregat aktiv ist. Hierdurch lassen sich unnötige "Totzeiten" im Behandlungsvorgang minimieren, sodass ohne Einbußen in der Qualität eine schnelle Durchführung der Fahrzeugbehandlung ermöglicht wird. Das wiederum führt zu einer Erhöhung der möglichen Zahl an Fahrzeug-Behandlungen pro Betriebsphase und damit einer höheren Rentabilität.

Figuren 12 und 13 erläutern einen weiteren Vorteil, der sich aus dem vorliegenden Steuerverfahren ergibt. Oben wurde bereits ausgeführt, dass für die Planung der Bewegungen keine Phasentrennung mehr erforderlich ist. Somit können beispielsweise Vorwärts- und Rückwärtsbewegungen des Portals (4) beliebig mit den Bewegungen der Seitenbürsten (6,7) und der Dachbürste (12) kombiniert werden.

Figur 12 zeigt Diagramme, die den Darstellungen in Figur 5 ähnlich sind. In Figur 5 auf der Abszissenachse (40) die x-Koordinate gezeigt ist. Demgegenüber ist in Figur 12 und 13 auf der Abszissenachse (40) die Ablaufvariable (s) gezeigt. In Figur 12 sind auf den Ordinatenachsen nicht die y- und z-Koordinate, sondern entsprechende Stellwerte für die Raumlagen (L,R,R') abgetragen, die von den zugeordneten Aktoren (21,22,23) in einem Soll-Pfad einzunehmen sind.

Um dennoch einen räumlichen Bezug für das Nachvollziehen der Vorgänge zu ermöglichen, sind im ersten und zweiten Diagramm die Konturerfassungsdaten (51) aus Figur 5 nochmals gezeigt. Diese sind allerdings (im Vergleich zu Figur 4) in Richtung der Abszissenachse (40) zueinander versetzt. Denn in Figuren 12 und 13 sind die Zustände der Behandlungsaggregate (6,7,12), die Soll-Raumlagen (R,R',L) der Bezugspunkte (Z1,Z3) und die X-Position des Portals (4) auf dieselbe Ablaufvariable (s) bezogen und somit zueinander synchronisiert gezeigt.

Da die Zielpunkte (Z1,Z3) Seitenbürsten (6,7) gegenüber der Dachbürste (12) um einen bestimmten Abstand (Dx) in x-Richtung versetzt sind, befindet sich beispielsweise bei s=s* die Dachbürste (12) gerade in Anlage an einer Frontkontur des Fahrzeugs (3), während die Seitenbürsten (6,7) bereits im Kontakt mit einer Seitenkontur des Fahrzeugs (3) stehen. Die im ersten und zweiten Diagramm gezeigten Verläufe der Konturerkennungsdaten (51) sind daher um diesen Abstand (Dx) zueinander versetzt.

Die Frontkontur des Fahrzeugs (3) weist im unteren Bereich eine konkave Formgebung und einen nach innen zurückspringenden Bereich auf. Derartige Karosserieformen bereiten für die Reinigung mit bisherigen Steuerverfahren Schwierigkeiten, weil sich das Portal bei Geltung einer Phasenbeschränkung während eines Fahrtzyklus nur monoton in eine Richtung bewegen darf, hier also von vorne nach hinten. Das führt dazu, dass die Dachbürste (12) bei bisherigen Steuerverfahren nicht bis in den konkaven Bereich zugestellt werden darf. Dementsprechend werden solche Bereich bisher nur unzureichend gereinigt.

Durch das vorliegende Steuerverfahren bedarf es keiner Phasentrennung mehr. Es ist möglich, dass ein Behandlungsaggregat bzw. dessen Zielpunkt in konkave Konturen eines zu behandelnden Fahrzeugs (3) eintaucht. Dieses Eintauchen kann insbesondere in eine konkave Front-Kontur unterhalb eines Alkoven und/oder in eine konkave Front-Kontur oder eine konkave Heck-Kontur unterhalb einer Stoßstange, und/oder in eine konkave Kontur eine Dachaufbaus erfolgen, der über die Frontscheibe oder Heckscheibe des Fahrzeugs ragt.

Eine bevorzugte Ausführung sieht vor, dass für die Erstellung eines Ablaufplans (50) für eine Mehrzahl von Behandlungsaggregaten (6,7,12) Zielpunkte (Z1,Z2,Z3) vorgesehen sind, deren momentane Raumlagen (R,L) in Koordinaten (x,y,z) definierbar oder definiert sind, und wobei zueinander räumlich koordinierte Soll-Raumlagen (Ri,Li) dieser Zielpunkte (Z1,Z2) als eine Soll-Posenfolge (K) geplant werden. Diese Soll-Posenfolge illustriert Figur 12.

Sie umfasst nun Bereiche, in denen das Portal hin und her, d.h. in positiver X-Richtung, wieder in negativer X-Richtung und erneut in positiver X-Richtung verfährt. Dementsprechend weist das unterste Diagramm in Figur 12 Abschnitte auf, in denen die X-Position des Portals und damit der Sollwert für den ersten Aktor (21) / Führungs-Aktor (5) erst steigt, dann wieder fällt und erneut wieder steigt.

Im ersten und zweiten Diagramm sind Soll-Raumlagen (Ri,Li) der Dachbürste (6) und der Seitenbürste (12) mit gestrichelten Linien gezeigt, an denen eine Umkehr der Bewegungsrichtung des Portals (5) erfolgt.

Eine erste Hin- und Herbewegung des Portals ist vorgesehen, während die beiden Seitenbürsten (6,7) eine sogenannte Übermittenwäsche ausführen. In diesem Abschnitt der Behandlung ist die Dachbürste noch nicht im Eingriff mit dem Fahrzeug (3).

Bei bisherigen Steuerungen für Fahrzeug-Behandlungsanlagen wird eine Übermittenwäsche in der Regel durch ein separates Unterprogramm durchgeführt, sodass dieser Teil der Behandlung als separate Zeitphase abgetrennt werden muss. Von Beginn bis zum Ende der Übermittenwäsche muss das Portal in bisherigen Behandlungsanlagen in der Regel still stehen. Durch das vorliegende Steuerverfahren ist eine solche Trennung nicht mehr notwendig. Vielmehr können Beschleunigungsphasen bei der Annährung an eine Fahrzeugfront direkt und fließend in eine Oberflächenbehandlung der Fahrzeugfront übergehen. Auch während der Übermittenwäsche kann das Portal bewegt werden und zum Ende der Übermittenwäsche kann ein direkter und fließender Übergang in die Oberflächenbehandlung der Seitenkontur erfolgen. Dies wird nachfolgend erläutert.

Während der Übermittenwäsche kann das Portal (4) um ein geringes Maß hin und her bewegt werden, damit die Seitenwaschbürste (6) die konvex gekrümmte Frontkontur des Fahrzeugs im Querschnitt bei einem idealen Waschabstand überfahren kann. Gegebenenfalls kann hier zusätzlich eine Neigung der Bürstenabschnitte (6a,6b) vorgesehen werden, um eine möglichst gute Anpassung an die Fahrzeugkontur zu ermöglichen.

Die von der Seitenbürste (6) einzunehmenden Soll-Raumlagen (Ri) werden dabei gemäß ihrer Reihenfolge (i) geplant und so entlang der Ablaufvariable (s) mit Sollpositionen für den Führungs-Aktor (5) und den Schiebe-Aktor (8) geplant, dass die geplanten Soll-Raumlagen nach und nach entlang der konkaven Kontur eingenommen werden.

Eine weitere Hin- und Herbewegung des Portals ist für das Reinigen der Konkaven Kontur im unteren Bereich der Frontschürze (vgl. oberes Diagramm) vorgesehen. Die vorzunehmenden Planungsschritte sind ergänzend in Figur 13 erläutert. Figur 13 zeigt eine Abfolge von Zuständen, die die Umkehrpunkte der in Figur 12 benannten Hin- und Herbewegung des Portals (4) illustrieren.

Wir nehmen an, dass zunächst eine Bewegung des Portals (4) in x-Richtung vorgesehen ist, damit die Dachbürste (12) in einem ersten Zustand (siehe oberes Diagramm in Figur 13) die Soll-Raumlage (L3) gelangt, also in Kontakt mit dem konkaven Abschnitt der Frontschürze. Hier muss das Portal eine Richtungsumkehr ausführen.

In der rechts daneben gezeigten Zustands-Darstellung ist die Bewegung der Dachbürste (12) von innerhalb des konkaven Abschnitt der Frontkontur, das heißt ausgehend von der Soll-Raumlage (L3'), zu einer nachfolgenden Soll-Raumlage (L4) in Kontakt mit der Fahrzeugspitze gezeigt.

Da die Diagramme nach der gemeinsamen Ablaufvariable (s) strukturiert sind, und sich das Portal (5) in x-Gegenrichtung bewegt, ist für diesen Bewegungsanteil der relevante Abschnitt der Frontkontur um die Hochachse gespiegelt gezeigt. Im unteren Diagramm ist die Rückbewegung des Portals an dem fallen Verlauf der X-Koordinate der Portalbewegung ersichtlich.

Im mittleren Diagramm ist wiederum gezeigt, welche zusätzlichen Soll-Raumlagen (R3, R3', R4) für die Seitenbürste (6) zu diesen Zuständen vorzusehen sind. Sie ergeben sich aus der der Planvorgabe, die Seitenbürste entlang der Seitenkontur des Fahrzeugs zu bewegen.

In der nochmals weiter rechts gezeigten Zustands-Darstellung ist die sich weiter anschließende Bewegung der Dachbürste von der Fahrzeugspitze (Soll-Raumlage L4') entlang der Höhenkontur der Motorhaube gezeigt. Vom Zustand mit Soll-Raumlage (L4') zum Zustand mit Soll-Raumlage (L5) bewegt sich das Portal wieder in x-Richtung und zwar im gezeigten Beispiel um die Bewegungsweite, um die es zuvor in x-Gegenrichtung bewegt wurde.

Im mittleren Diagramm ist gezeigt, welche zusätzlichen Soll-Raumlagen (R4', R5) für die Seitenbürste (6) zu diesen Zuständen vorzusehen sind. Die Soll-Raumlage (R5) entspricht dabei identisch der Soll-Raumlage (R3), nur dass sie zu einem späteren Wert der Ablaufvariable (s) eben nochmals geplant ist.

Im Anschluss ist der Vorgang analog zu den obigen Erläuterungen.

Aus dem Beispiel der Figuren 12, 13 ist ersichtlich, dass mithilfe des vorliegenden Steuerverfahrens wesentliche Einschränkungen überwunden werden, die bisher für die Bewegung der Behandlungsaggregate (6,7,9) galten. Somit wird es prinzipiell möglich, auch solche Fahrzeuge mit einem automatisierten Verfahren zu behandeln, die bisher abgelehnt werden mussten, beispielsweise Fahrzeuge mit einem Dachträger und Fahrzeuge mit Alkoven.

Das Steuerverfahren ermöglicht es weiterhin, auch die Bewegungen von Behandlungsaggregaten mit einer sehr genau definierten Kontur-Nachführung zu planen, deren Aktoren eine mehrfach verkettete Kinematik haben. In dem Beispiel von Figuren 1 bis 3 hängt die Raumlage des Zielpunkts (Z2) des unteren Bürstenabschnitts (6b) ab von den Stellpositionen

- des Führungs-Aktors (5) (Portalbewegung),
- des Schiebeaktors (8) (Schlittenbewegung),
- des Neigungsaktors (16) (Neigung des oberen Bürstenabschnitts 6a um Neigungs-Gelenk 15), sowie
- des Knick-Aktors (18) (Schwenken des unteren Bürstenabschnitts 6b um Knick-Gelenk 15).

Bisherige Steuerverfahren waren nicht in der Lage für eine solche Kinematik eine flüssige und geschmeidige Bewegung vorzusehen. Durch die Trennung der Planung in die Erstellung eines Ablaufplans und eines Bewegungsplans ist dies jedoch möglich. Dies gilt insbesondere, wenn der Ablaufplan auf Basis einer Reihe von geplanten Posen für alle Behandlungsaggregate (6a,6b,7,12) erfolgt, die an einem Behandlungszyklus aktiv teilnehmen, und einer entsprechenden Ableitung von Stellpositionen für die beteiligten Aktoren (5,8,16,18).

Das vorliegend offenbarte Steuerverfahren kann für beliebige Anzahlen von Behandlungsaggregaten und beliebige Strukturen von Stützgliedern und Aktoren durchgeführt werden. Dazu gehören Strukturen mit

- einem oder mehreren translatorischen Aktoren, und/oder
- einem oder mehreren rotatorischen Aktoren.

Soweit im Rahmen der vorliegenden Offenbarung Verfahrensschritte beschrieben sind, die ausgeführt werden, ist damit zumindest auch eine Ausführung auf einer Datenverarbeitungseinrichtung gemeint. Die Datenverarbeitungseinrichtung ist dazu ausgebildet, die entsprechenden Verfahrensschritte durchzuführen. Dabei kann es sich um eine spezifische Datenverarbeitungsarchitektur handeln, wie beispielsweise eine angepasste elektronische Schaltung oder einen ASIC (application specific integrated circuit). Alternativ oder zusätzliche kann es sich um eine standardisierte Datenverarbeitungsarchitektur handeln, wie beispielsweise eine programmierbare Steuerung oder ein Computer. Es kann ein Softwareprodukt vorgesehen sein, welches Anweisungen enthält, die bei Ausführung auf einer Datenverarbeitungseinrichtung die Schritte des Verfahrens ausführen. Das Softwareprodukt kann auf einem physischen Datenträger gespeichert und/oder über eine elektronische Schnittstelle versendet oder empfangen sein (Software-Streaming).

Abwandlungen der Erfindung sind in verschiedener Weise möglich. Insbesondere können die zu den jeweiligen Ausführungsbeispielen gezeigten, beschriebenen oder beanspruchten Merkmale in beliebiger Weise miteinander kombiniert, gegeneinander ersetzt, ergänzt oder weggelassen werden.

Das Planungsverfahren und das Steuerverfahren wurden in der obigen Erläuterung der Ausführungsbeispiele für einen Behandlungsprozess beschrieben, der sich über die Gesamtlänge des Fahrzeugs erstreckt. Die Erfindung ist nicht auf solche Behandlungsprozesse über die Gesamtlänge des Fahrzeugs beschränkt. Es ist insbesondere nicht erforderlich, die Schritte des Steuerverfahrens und/oder des Planungsverfahrens vollständig durchzuführen, bevor die Behandlung des Fahrzeugs startet.

Die Schritte des Steuerverfahrens und des Ablaufverfahrens können jeweils abschnittsweise durchgeführt werden, wobei der Ablaufplan und/oder der Bewegungsplan und/oder der Dynamikplan erst nach und nach erzeugt werden. So kann beispielsweise für einen ersten Ausführungsabschnitt nur ein Teil-Datensatz mit Konturerfassungsdaten vorliegen, der nur einen Teil der Fahrzeuglänge erfasst, insbesondere nur etwa 30% oder 50% der Fahrzeuglänge. Basierend auf diesem Teil-Datensatz kann ein Teil-Ablaufplan erzeugt werden. Alternativ kann für einen ersten Ausführungsabschnitt nur ein Teil-Datensatz mit Konturerfassungsdaten eingelesen werden und/oder ein Teil-Ablaufplan eingelesen werden.

Dementsprechend können in einem ersten Ausführungsabschnitt des Steuerverfahrens ein Teil-Bewegungsplan und ein Teil-Dynamikplan erzeugt werden.

Für die Planung und/oder Durchführung einer Gesamt-Fahrzeugbehandlung können beliebig viele Ausführungsabschnitte nacheinander oder zeitlich überlappend ausgeführt werden. Die dabei erzeugten Teil-Pläne (Teil-Ablaufpläne, Teil-Bewegungspläne, Teil-Dynamikpläne) können zeitlich und/oder räumlich aneinander angrenzen und/oder miteinander zeitlich oder räumlich überlappen.

Eine besonders bevorzugte Ausführung sieht vor, dass eine Mindest-Erfassungsweite festgelegt wird als ein Längenmaß entlang der Relativbewegung von Fahrzeug und Behandlungszone. Die Mindest-Erfassungsweise kann beliebig definiert sein, beispielsweise als der maximale Bremsweg, innerhalb dessen die Relativbewegung zwischen einem Fahrzeug und einem Haupt-Träger (Portal) der ein oder mehreren Behandlungsaggregate ausgehend von einer Maximalgeschwindigkeit auf Null abbremsbar ist. Alternativ kann die Mindest-Erfassungsweite als ein maximaler Bremsweg zuzüglich eines Sicherheits-Aufschlags definiert sein.

Die Planung und/oder Durchführung einer Gesamt-Fahrzeugbehandlung kann in mehrere Ausführungsabschnitte unterteilt werden, die jeweils eine solche Mindest-Erfassungsweite überdecken. Auf diese Weise ist eine noch zügigere Einleitung der Behandlung eines Fahrzeugs möglich.

Wenn die Behandlungsanlage als eine Portal-Waschanlage ausgebildet ist, kann beispielsweise bereits während der Einfahrt eines Fahrzeugs in die Behandlungszone die Frontpartie des Fahrzeugs sensorisch erfasst werden. Die Konturerfassung kann bspw. durch Sensoren erfolgen, die an einem beweglichen Portal angeordnet sind. Das Portal kann ein oder mehrere der Behandlungsaggregate tragen. Auf Basis der teilweisen Erfassung der Fahrzeugkontur können noch während der Einfahrt oder direkt nach Erreichen der vorgesehenen Abstellposition ein Teil-Ablaufplan, ein Teil-Bewegungsplan und ein Teil-Dynamikplan erzeugt werden, mit denen sofort ein erster Abschnitt der Fahrzeug-Behandlung ausführbar ist. Während dieses ersten Abschnitts der Fahrzeug-Behandlung kann eine Bewegung der Sensorik relativ zum stehenden Fahrzeug erfolgen, wobei eine weitere Partie des Fahrzeugs sensorisch erfasst wird, insbesondere eine Mittelpartie. Auf Basis dieser weiteren Konturerfassungsdaten können entsprechend je ein nachfolgender Teil-Ablaufplan, ein Teil-Bewegungsplan und ein Teil-Dynamikplan erzeugt werden. Die Fahrzeugbehandlung kann nach Abschluss der Behandlung der Frontpartie mit diesen nachfolgenden Teil-Plänen fortgesetzt werden. Wenn die Fahrzeugbehandlung mit diesen weiteren Teil-Plänen fortgesetzt wird, kann erneut eine Bewegung der Sensorik relativ zum stehenden Fahrzeug erfolgen und nun eine weitere oder letzte Partie des Fahrzeugs (Heckpartie) sensorisch erfasst werden. Für diese Heckpartie kann dann in einem dritten Ausführungsabschnitt nochmals je ein Teil-Plan erzeugt werden, auf deren Basis die Behandlung abgeschlossen wird.

Während einer (Teil-)Behandlung können etwaige Änderungen in den Konturerfassungsdaten, die erst verzögert bekannt werden, in eine Änderung oder Anpassung der Soll-Werte eines derzeit angewendeten Teil-Plans oder eines nachfolgenden Teil-Plans umgesetzt werden, sodass insgesamt eine einheitliche Folge von Soll-Werten geschaffen wird.

Wenn das Steuerverfahren in Bezug auf nur ein Behandlungsaggregat ausgeführt wird,

- umfasst der Ablaufplan bevorzugt Stellpositionen für zumindest eine Mehrzahl derjenigen Aktoren, die an der Bewegung des einen Behandlungsaggregats beteiligt sind; UND/ODER
- umfasst der Bewegungsplan bevorzugt je einen Soll-Pfad, eine Soll-Stellrate und eine Soll-Stellratenänderung für zumindest eine Mehrzahl derjenigen Aktoren, die an der Bewegung des einen Behandlungsaggregats beteiligt sind; UND/ODER
- umfasst der Dynamikplan bevorzugt zumindest je eine Soll-Trajektorie für zumindest eine Mehrzahl derjenigen Aktoren, die an der Bewegung des einen Behandlungsaggregats beteiligt sind.

Insbesondere: Wenn das Steuerverfahren in Bezug auf nur ein Behandlungsaggregat ausgeführt wird,

- umfasst der Ablaufplan bevorzugt Stellpositionen für all diejenigen Aktoren, die an der Bewegung des einen Behandlungsaggregats beteiligt sind; UND/ODER
- umfasst der Bewegungsplan bevorzugt je einen Soll-Pfad, eine Soll-Stellrate und eine Soll-Stellratenänderung für all diejenigen Aktoren, die an der Bewegung des einen Behandlungsaggregats beteiligt sind; UND/ODER
- umfasst der Dynamikplan bevorzugt zumindest je eine Soll-Trajektorie für all diejenigen Aktoren, die an der Bewegung des einen Behandlungsaggregats beteiligt sind.

Wenn das Steuerverfahren in Bezug auf zwei oder mehr Behandlungsaggregate ausgeführt wird, umfassen der Ablaufplan, der Bewegungsplan und der Dynamikplan bevorzugt entsprechende Abbildungen (Soll-Werte) für noch weitere Aktoren, die an der Bewegung der zwei oder mehr Behandlungsaggregate beteiligt sind, insbesondere für all diejenigen Aktoren, die an der Bewegung der zwei oder mehr Behandlungsaggregate beteiligt sind.

Gemäß einer bevorzugten Ausführung werden die Schritte des Planungsverfahrens, das den Ablaufplan erzeugt, teil- oder vollautomatisch und als ein Bestandteil des Steuerverfahrens ausgeführt. Als Eingangsgröße für das Planungsverfahren können Konturerfassungsdaten über das zu behandelnde Fahrzeug dienen. Diese Konturerfassungsdaten können aus einer beliebigen Datenquelle stammen. Beispielsweise kann die Fahrzeugbehandlungsanlage eine eigene Konturerfassungs-Sensorik umfassen oder mit einer externen Sensorik verbunden sein. Alternativ können bereits im Vorfeld erzeugte Konturerfassungsdaten von einem Datenträger eingelesen werden.

Bei der Fahrzeug-Behandlungsanlage gemäß dem zweiten Aspekt der Offenbarung ist bevorzugt für das mindestens eine Behandlungsaggregat ein Zielpunkt definiert, und die Soll-Werte des Dynamikplans (70) sind für die zugehörige Gruppe der Aktoren derart definiert, dass der Zielpunkt des Behandlungsaggregats einem Pfad folgt, der während einer Oberflächenbehandlung einen festen Geometriebezug gegenüber einer Kontur des zu behandelnden Fahrzeugs einhält, insbesondere einen festen senkrechten Abstand zur Fahrzeug-Oberfläche.

Weiterhin bevorzugt ist die Fahrzeug-Behandlungsanlage derart ausgebildet, dass eine multidimensionale Stellbewegung des Behandlungsaggregats während eines Behandlungs-Abschnitts mit einer ein- oder mehrfahren umkehrenden Bewegungsrichtung eines Portals der Fahrzeug-Behandlungsanlage erfolgt.

Weiterhin bevorzugt ist die Fahrzeug-Behandlungsanlage derart ausgebildet, dass eine multidimensionale Stellbewegung des Behandlungsaggregats während eines Behandlungs-Abschnitts ein temporäres Eintauchen des Zielpunktes in eine konkave Front-Kontur oder Heck-Kontur des zu behandelnden Fahrzeugs umfasst, insbesondere

- in eine konkave Kontur unterhalb eines Alkoven, ODER
- in eine konkave Kontur unterhalb einer Stoßstange, ODER
- in eine konkave Kontur unterhalb eines Dachaufbaus, der über die Frontscheibe oder Heckscheibe des Fahrzeugs ragt.

Nachfolgend werden vorteilhafte Unteraspekte der vorliegenden Offenbarung in knapper Formulierung wiederholt, die mit den offenbarten Verfahren und Vorrichtungen kombinierbar sind. Diese Unteraspekte sind ferner in beliebiger Unterkombination nutzbar sind.

Das Steuerverfahren gemäß der vorliegenden Offenbarung umfasst bevorzugt folgenden Schritt: Erstellen des Bewegungsplans (60) mit einer Kette von abschnittsweise definierten Funktionen (U_links, U_rechts) zwischen je zwei aufeinander folgenden Stellpositionen (Pi,Qi), wobei die Parameter dieser Funktionen (U_links, U_rechts) mittels Rand- und Übergangsbedingungen an den Stellpositionen (Pi,Qi) bestimmt werden. Die Fahrzeug-Behandlungsanlage und/oder das Softwareprodukt und/oder das Steuergerät gemäß der vorliegenden Offenbarung haben bevorzugt eine entsprechende Ausbildung und sind dazu vorgehen und geeignet, diesen Schritt auszuführen.

Das Steuerverfahren gemäß der vorliegenden Offenbarung umfasst bevorzugt folgenden Schritt: Ein Soll-Pfad (U,V,W) ist/wird aus einer Kette von abschnittsweise definierten und parametrierbaren Funktionen (U_links, U_rechts) gebildet, die zweifach oder dreifach differenzierbar sind und insbesondere umfassen:

- Polynome dritten Grades, UND/ODER

- Polynome fünften Grades, UND/ODER

- Polynome siebten Grades, UND/ODER

- Geradenabschnitte mit parabolischen Enden;

Die Fahrzeug-Behandlungsanlage und/oder das Softwareprodukt und/oder das Steuergerät gemäß der vorliegenden Offenbarung haben bevorzugt eine entsprechende Ausbildung und sind dazu vorgehen und geeignet, diesen Schritt auszuführen.

Das Steuerverfahren gemäß der vorliegenden Offenbarung umfasst bevorzugt folgenden Schritt: Für die Definition der Zeitskalierung (s=s(t)) ist/wird ein Zeitskalierungsplan (80) erstellt, der die Ablaufvariable (s) als eine Funktion der Zeitvariable (t) definiert. Die Fahrzeug-Behandlungsanlage und/oder das Softwareprodukt und/oder das Steuergerät gemäß der vorliegenden Offenbarung haben bevorzugt eine entsprechende Ausbildung und sind dazu vorgehen und geeignet, diesen Schritt auszuführen.

Das Steuerverfahren gemäß der vorliegenden Offenbarung umfasst bevorzugt folgenden Schritt: Ein zeitabhängiger Verlauf der Ablaufvariable (s=s(t)) ist/wird abschnittsweise auf Basis einer Integration der Bahngeschwindigkeit (s°) und/oder der Bahnbeschleunigung (s°°) gebildet; und die Bahngeschwindigkeit (s°) und die Bahnbeschleunigung (s°°) sind/werden auf Basis von bekannten oder physikalischen Grenzen und/oder vorgegebenen Betriebsgrenzen des zugehörigen Aktors (21,22,23) oder der Behandlungsanlage (1) oder der Behandlungsaggregate (6,7,12) berechnet. Die physikalischen Grenzen und/oder Betriebsgrenzen können insbesondere umfassen:

- ein maximales Beschleunigungsvermögen (U°°max) eines Aktors (21,22,23), UND/ODER

- eine maximale Geschwindigkeit (U°max) eines Aktors (21,22,23);

Die Fahrzeug-Behandlungsanlage und/oder das Softwareprodukt und/oder das Steuergerät gemäß der vorliegenden Offenbarung haben bevorzugt eine entsprechende Ausbildung und sind dazu vorgehen und geeignet, diesen Schritt auszuführen.

Das Steuerverfahren gemäß der vorliegenden Offenbarung umfasst bevorzugt folgenden Schritt: Für eine variable Skalierung (82) ist/wird der zeitabhängige Verlauf der Ablaufvariable (s=s(t)) aus dem Integral einer Kette (100) von Abbildungen (91,92) gebildet, wobei die Abbildungen (91,92) den Verlauf der Bahngeschwindigkeit (s°) in einem Zustandsraum beschreiben und wobei die Kette (100) der Abbildungen Vorwärtsintegrale (91, 96a) und Rückwärtsintegrale (92, 96b) der maximalen Bahnbeschleunigung (s°°max) ausgehend von Rand- und Übergangsbedingungen an den Bereichsgrenzen umfasst; Weiterhin kann bevorzugt gelten: die Kette (100) der Abbildungen umfasst, wenn sich Vorwärtsintegral (91) und Rückwärtsintegral (92) nicht direkt schneiden, zusätzlich eine Ersatzkurve, wobei die Ersatzkurve insbesondere

- der Verlauf der maximalen Bahngeschwindigkeit (s°max) für den entsprechenden Abschnitt der Ablaufvariable (s) ist, ODER
- durch einen Schnittpunkt-Zwischenabschnitt (96) gebildet ist, mit dem die nächstliegende Ersatzkurve an die maximale Bahngeschwindigkeit (s°max) eingehalten werden kann, ohne die sonstigen physikalischen Grenzen und Betriebsgrenzen zu überschreiten;

Die Fahrzeug-Behandlungsanlage und/oder das Softwareprodukt und/oder das Steuergerät gemäß der vorliegenden Offenbarung haben bevorzugt eine entsprechende Ausbildung und sind dazu vorgehen und geeignet, diesen Schritt auszuführen.

Das Steuerverfahren gemäß der vorliegenden Offenbarung umfasst bevorzugt folgenden Schritt: Für eine variable Skalierung sind/werden eine maximale Bahnbeschleunigung (s°°max) und eine maximale Bahngeschwindigkeit (s°max) auf Basis von bekannten physikalischen Grenzen und/oder vorgegebenen Betriebsgrenzen des zugehörigen Aktors (21,22,23) oder der Behandlungsanlage (1) oder der Behandlungsaggregate (6,7,12) berechnet. Die Fahrzeug-Behandlungsanlage und/oder das Softwareprodukt und/oder das Steuergerät gemäß der vorliegenden Offenbarung haben bevorzugt eine entsprechende Ausbildung und sind dazu vorgehen und geeignet, diesen Schritt auszuführen.

Das Steuerverfahren gemäß der vorliegenden Offenbarung umfasst bevorzugt folgenden Schritt: Es liegt mindestens ein Regelsatz und/oder ein Satz mit Funktions-Vorlagen für bestimmte Teile des Behandlungsprozesses vor, und der Regelsatz oder Satz mit Funktions-Vorlagen sieht für einzelne oder alle beteiligten Aktoren (21,22,23) bestimmte charakteristische Stellpositionen nach Art und Reihenfolge vor und zwischen diesen vorgesehenen Stellpositionen sind oder werden geeignete Funktionen und/oder zugehörige Rand- oder Übergangsbedingungen vordefiniert; Bevorzugt gilt weiterhin, dass für die Erstellung eines Bewegungsplans (60) eine Regel oder eine Funktions-Vorlage auf Basis der Konturerkennung (31) ausgewählt und für den konkreten Behandlungsvorgang parametrisiert wird. Die Fahrzeug-Behandlungsanlage und/oder das Softwareprodukt und/oder das Steuergerät gemäß der vorliegenden Offenbarung haben bevorzugt eine entsprechende Ausbildung und sind dazu vorgehen und geeignet, diesen Schritt auszuführen.

BEZUGSZEICHENLISTE

| | |
|---|---|
| 1 | Fahrzeugbehandlungsanlage |
| 2 | Behandlungszone |
| 3 | Fahrzeug |
| 4 | Portal / Stützglied |
| 5 | Portalantrieb / Führungs-Aktor |
| 6 | Seitenwaschbürste (erste) / Behandlungsaggregat |
| 6a | Erstes Bürstensegment (oberes) / Behandlungsaggregat |
| 6b | Zweites Bürstensegment (unteres) / Behandlungsaggregat |
| 6c | Bürstengestänge / Stützglied |
| 7 | Seitenwaschbürste (zweite) / Behandlungsaggregat |
| 7a | Bürstensegment (oberes) / Behandlungsaggregat |
| 7b | Bürstensegment (unteres) / Behandlungsaggregat |
| 7c | Bürstengestänge / Stützglied |
| 8 | Erster Schlitten |
| 9 | Schiebe-Aktor |
| 10 | Zweiter Schlitten |
| 11 | Zweiter Schiebe-Aktor |
| 12 | Dachbürste / Behandlungsaggregat |
| 13 | Hubführung |
| 14 | Hubantrieb / Aktor |
| 15 | Neigungsgelenk |
| 16 | Neigungs-Aktor, zweiter Aktor |
| 17 | Knickgelenk |
| 18 | Knick-Aktor |
| 21 | Erster Aktor |
| 22 | Zweiter Aktor |
| 23 | Dritter Aktor |
| 30 | Steuergerät / Steuerung |
| 31 | Konturerkennung / Konturerkennungseinrichtung mit Sensorik |
| 32 | Regler / Zustandsregler |
| 40 | Abszissenachse |
| 41 | Ordinatenachse |
| 50 | Ablaufplan |
| 51 | Konturerkennungsdaten |
| 52 | Bezugspunkt |
| 53 | Konturlinie |
| 60 | Bewegungsplan (bezogen auf Ablaufvariable s) |
| 61 | Stellwert für Aktor in Soll-Pfad, exakt zu erreichen |
| 62 | Stellwert für Aktor in Soll-Pfad, mit Toleranz |
| 70 | Dynamikplan (bezogen auf Zeitvariable t) |
| 80 | Zeitskalierungsplan (s = s(t)) |
| 81 | konstante Skalierung (abschnittsweise konstant) |
| 82 | variable Skalierung |

| | |
|---|---|
| 82' | Abschnitte der variablen Skalierung mit negativer Steigung |
| 90 | Zustandsraum-Diagramm |
| 91 | Vorwärtsintegral |
| 92 | Rückwärtsintegral |
| 93 | Schnittpunkt von Vorwärts- und Rückwärtsintegral |
| 94 | Schnittpunkt von Vorwärtsintegral mit maximaler Bahngeschwindigkeit (s°max) |
| 95 | Schnittpunkt von Rückwärtsintegral mit maximaler Bahngeschwindigkeit (s°max) |
| 96 | Schnittpunkt-Zwischenabschnitt |
| 96a | Schnittpunkt-Zwischenabschnitt, erster Teil; Vorwärts für nächstliegende Ersatzkurve |
| 96b | Schnittpunkt-Zwischenabschnitt, zweiter Teil; Rückwärtsintegral für nächstliegende Ersatzkurve |
| 97 | Tangentialpunkt |
| 98 | Schnittpunkt |
| 99 | Schnittpunkt |
| 100 | Kette von Abbildungen |
| a | Neigungswinkel |
| i | Reihenfolge / Zählvariable |
| ki | Beschleunigungsphase |
| m | Kette von Beschleunigungsphasen |
| n | Kette von Beschleunigungsphasen |
| s | Ablaufvariable, s(t) |
| s° | Bahngeschwindigkeit |
| s°° | Bahnbeschleunigung |
| t | Zeitvariable |
| ti | Übereinstimmende Zeitpunkte für Beginn und Ende einer Beschleunigung |
| x | x-Koordinate - Längsrichtung der Fahrzeug-Behandlungsanlage |
| y | y-Koordinate - Querrichtung der Fahrzeug-Behandlungsanlag- |
| z | z-Koordinate - Hochachse |
| A | Soll-Trajektorie erster Aktor (bezogen auf Zeitvariable) |
| A° | Soll-Geschwindigkeit erster Aktor |
| A°° | Soll-Beschleunigung erster Aktor |
| B | Soll-Trajektorie zweiter Aktor |
| B° | Soll-Geschwindigkeit zweiter Aktor |
| B°° | Soll-Beschleunigung zweiter Aktor |
| C | Soll-Trajektorie dritter Aktor |
| C° | Soll-Geschwindigkeit dritter Aktor |
| C°° | Soll-Beschleunigung dritter Aktor |
| Dx | x-Abstand der Zielpunkte Z1, Z3 (ggfs. variabel) |
| K | Soll-Posenfolge = Aggregation von auf übereinstimmende Zustände koordinierte Soll-Raumlagen mehrerer Behandlungsaggregate |
| L | Raumlage (Position und/oder Orientierung) der Dachbürste |
| Pi | Stellpositionen erster Aktor (abgeleitet aus Soll-Raumlage des zugehörigen Zielpunkts) |
| Pi* | Zusätzliche Stellposition (als Stützpunkt, weil Soll-Raumlage für kinematisch gekoppelten Aktor vorliegt) |
| Qi | Stellpositionen in Beispiel |
| R | Raumlage (Position) des Zielpunkts Z1 |
| R' | Raumlage (Orientierung) des Zielpunkts Z1 |
| Ri | Soll-Raumlage des Zielpunkts Z1 |
| U | Soll-Pfad erster Aktor (bezogen auf Ablaufvariable s) |
| U' | Soll-Stellrate erster Aktor |
| U" | Soll-Stellratenänderung erster Aktor |
| U_links, | abschnittsweise definierte Funktion für einen |
| U_rechts | Soll-Pfad in einem Bewegungsplan |
| U°max | maximale Geschwindigkeit eines Aktors (physikalisch bedingt oder aus Betriebsgrenze vorgegeben) |
| U°°max | maximales Beschleunigungsvermögen eines Aktors (physikalisch bedingt oder aus Betriebsgrenze vorgegeben) |
| V | Soll-Pfad zweiter Aktor |
| V' | Soll-Stellrate zweiter Aktor |
| V" | Soll-Stellratenänderung zweiter Aktor |
| W | Soll-Pfad dritter Aktor |

W'        Soll-Stellrate dritter Aktor
W"        Soll-Stellratenänderung dritter Aktor
X(s)      Portalposition entlang x-Koordinate (bezogen auf Ablaufvariable)
Z1        Erster Zielpunkt
Z2        Zweiter Zielpunkt
Z3        Dritter Zielpunkt

**Patentansprüche**

1.  Steuerverfahren für eine Fahrzeug-Behandlungsanlage (1) mit ein, zwei oder mehr Behandlungsaggregaten (6, 7, 12), die durch steuerbare Aktoren (21, 22, 23) relativ zu einem Fahrzeug (3) bewegbar sind, um eine Oberflächenbehandlung des Fahrzeugs (3) auszuführen, **dadurch gekennzeichnet, dass** das Steuerverfahren die folgenden Schritte umfasst:

    - Erstellen oder Einlesen eines Ablaufplans (50) für eine Fahrzeugbehandlung wobei der Ablaufplan (50) Stellpositionen (Pi) für eine Mehrzahl von Aktoren (21,22,23) als Sollwerte in einer vorgegebenen Reihenfolge (i) aufweist;
    - Erstellen eines Bewegungsplans (60) für die Fahrzeugbehandlung, wobei der Bewegungsplan einen Soll-Pfad (U,V,W), eine Soll-Stellrate (U',V',W') und bevorzugt eine Soll-Stellratenänderung (U",V",W") für die Mehrzahl der Aktoren (21,22,23) umfasst und zwar als Funktionen in Bezug auf eine Ablaufvariable (s);
    - Erstellen eines Dynamikplans (70) für die Fahrzeugbehandlung, wobei der Dynamikplan Soll-Werte für die Bewegungen der mehreren Aktoren in Bezug auf eine Zeitvariable (t) umfasst;
    - und wobei der Dynamikplan aus dem Bewegungsplan durch eine lokale Streckung und/oder Stauchung mittels einer Zeitskalierung (81,82) (s=s(t)) erzeugt wird.

2.  Steuerverfahren nach Anspruch 1, wobei die Soll-Werte des Dynamikplans in Form von zumindest einer der folgenden Bewegungsgrößen vorliegen:

    - Soll-Trajektorie (A,B,C) für die Mehrzahl der Aktoren in Bezug auf eine Zeitvariable (t), UND/ODER
    - Soll-Geschwindigkeit (A°,B°,C°) für die Mehrzahl der Aktoren in Bezug auf die Zeitvariable (t), UND/ODER
    - Soll-Beschleunigung (A°°,B°°,C°°) für die Mehrzahl der Aktoren in Bezug auf die Zeitvariable (t), UND/ODER
    - Soll-Ruck für die Mehrzahl der Aktoren in Bezug auf die Zeitvariable (t).

3.  Steuerverfahren nach einem der vorhergehenden Ansprüche, weiterhin umfassend den Schritt:

    - Ansteuern der Aktoren (21, 22, 23) während der Durchführung der Fahrzeugbehandlung mit einer Regelung, insbesondere einer Zustandsregelung, auf Basis der Soll-Werte des Dynamikplans (70).

4.  Steuerverfahren nach einem der vorhergehenden Ansprüche, wobei für die Erstellung eines Ablaufplans (50) folgende Schritte ausgeführt werden:

    - für mindestens ein Behandlungsaggregat (6,7,12): Definition eines Zielpunktes (Z1, Z2, Z3) als einen geometrischen Bezugspunkt des Behandlungsaggregats (6,7,12), dessen Raumlage (R) in Koordinaten (x,y,z) definierbar ist;
    - Festlegen einer Reihenfolge (i = 0,1,2,...) von Soll-Raumlagen (Ri,R0,R1,R2,...) des Zielpunktes (Z1), die während einer Fahrzeugbehandlung einzunehmen sind, wobei die Festlegung der Reihenfolge von Soll-Raumlagen insbesondere basierend auf Konturerkennungsdaten (51) des zu behandelnden Fahrzeugs (3) erfolgt;
    - Bestimmen von Stellpositionen (Pi,P0,P1,P2,...) mindestens eines Aktors (21,22,23), der an der Bewegung des Zielpunktes (Z1) beteiligt ist, auf Basis einer bekannten Geometrie der Fahrzeug-Behandlungsanlage (1), sodass die Stellpositionen (Pi,P0,P1,P2,...) mit den Soll-Raumlagen (Ri,R0,R1,R2,...) des Zielpunktes (Z1) korrelieren.

5.  Steuerverfahren nach dem vorhergehenden Anspruch, wobei für die Erstellung eines Ablaufplans (50) für eine Mehrzahl von Behandlungsaggregaten (6,7,12) Zielpunkte (Z1,Z2,Z3) vorgesehen sind, deren momentane Raumlagen (R,L) in Koordinaten (x,y,z) definierbar sind, und wobei zueinander räumlich koordinierte Soll-Raumlagen (Ri,Li) dieser Zielpunkte (Z1,Z2) der Mehrzahl von Behandlungsaggregaten (6,7,12) als eine Soll-Posenfolge (K) geplant werden.

6. Steuerverfahren nach einem der vorhergehenden Ansprüche, wobei

   - die Zeitskalierung zumindest abschnittsweise eine konstante Skalierung (81) als Streckung bei einem Zeitskalierungs-Faktor (F) vorsieht; UND/ODER
   - die Zeitskalierung zumindest abschnittsweise eine variable Skalierung (82) vorsieht, wobei die variable Skalierung in einem Zustandsraum durch eine Kette von Integralen über einem Bereich der Ablaufvariable (s) gebildet ist, und wobei die Integralbildung

       ◦ auf Basis von Randbedingen an den Bereichsgrenzen, UND
       ◦ auf Basis von vorbekannten physikalischen Grenzen und/oder definierten Betriebsgrenzen für die Aktorbewegung erfolgt, insbesondere der maximalen Geschwindigkeit (U°max) und/oder der maximalen Beschleunigung (U°°max) eines Aktors (21,22,23).

7. Steuerverfahren nach einem der vorhergehenden Ansprüche, wobei für eine Gruppe von Aktoren (21,22,23), deren Bewegungen kinematisch oder logisch gekoppelt sind, synchronisierte Bewegungs-Pfade (U,V,W) und/oder synchronisierte Trajektorien (A,B,C) erstellt werden.

8. Steuerverfahren nach einem der vorhergehenden Ansprüche, wobei kinematisch gekoppelte Bewegungen für eine Gruppe von Aktoren (21,22,23) vorliegen, wenn

   - diese Aktoren (21,22,23) für die Betätigung von zwei oder mehr Behandlungsaggregaten (6,7,12) vorgesehen sind, UND
   - mindestens ein Aktor (21) in der Gruppe vorliegt, durch dessen Betätigung mindestens zwei Teilbewegungen verursacht werden, nämlich eine erste Teilbewegung für ein erstes Behandlungsaggregat (7) sowie mindestens eine weitere Teilbewegung für ein zweites Behandlungsaggregat (12).

9. Softwareprodukt für eine Fahrzeug-Behandlungsanlage, wobei das Softwareprodukt auf einem Datenträger gespeichert oder durch eine Datenschnittstelle übertragen ist, **dadurch gekennzeichnet, dass** das Softwareprodukt Anweisungen umfasst, die dazu ausgebildet sind, bei der Ausführung auf einer elektronischen Datenverarbeitungseinrichtung, insbesondere einem Steuergerät (30) einer Fahrzeugbehandlungsanlage (1), ein Steuerverfahren nach einem der vorhergehenden Ansprüche auszuführen.

10. Steuergerät für eine Fahrzeug-Behandlungsanlage (1), wobei das Steuergerät Schnittstellen aufweist, um das Steuergerät mit einer Mehrzahl von Aktoren (21,22,23) der Fahrzeug-Behandlungsanlage (1) zu verbinden, **dadurch gekennzeichnet, dass** das Steuergerät (30) Anweisungen umfasst, die dazu ausgebildet sind, ein Steuerverfahren nach einem der vorhergehenden Ansprüche auszuführen.

11. Fahrzeug-Behandlungsanlage (1) mit zwei oder mehr Behandlungsaggregaten (6,7,12), die durch steuerbare Aktoren (21, 22, 23) bewegbar sind, um eine Oberflächenbehandlung eines Fahrzeugs (3) auszuführen, wobei die Fahrzeug-Behandlungsanlage (1) eine Steuerung (30) und eine Konturerfassung (31) zur Erfassung einer Kontur des zu behandelnden Fahrzeugs (3) umfasst, **dadurch gekennzeichnet, dass** die Steuerung (30) dazu ausgebildet ist, ein Steuerverfahren nach einem der vorhergehenden Ansprüche auszuführen.

12. Fahrzeug-Behandlungsanlage nach dem vorhergehenden Anspruch, wobei mindestes eines der Behandlungsaggregate (6,7,12) durch Betätigung von zwei oder mehr Aktoren (21,22,23) relativ zu dem Fahrzeug (3) bewegbar ist, und wobei die Bewegungen einer Gruppe von Aktoren (21,22,23) ein- oder mehrfach gekoppelt sind, sodass mindestens ein Aktor (21) vorliegt, durch dessen Betätigung Teilbewegungen für zwei oder mehr der Behandlungsaggregate (6,7,12) verursacht werden.

13. Fahrzeug-Behandlungsanlage (1) nach einem der vorhergehenden Ansprüche, wobei mindestens eine Gruppe von Aktoren (21, 22, 23) vorliegt, die dazu ausgebildet sind, gemeinsam das Behandlungsaggregat (6,7,12) relativ zu einem zu behandelnden Fahrzeug (3) in eine multidimensionale Stellbewegung zu versetzen, wobei die Fahrzeug-Behandlungsanlage (1) mindestens einen Regler (32) umfasst und die Steuerung Soll-Werte an den mindestens einen Regler (32) übergibt, auf deren Basis der Regler (32) ein oder mehrere Stell-Signale für die Ansteuerung der Aktoren erzeugt, **dadurch gekennzeichnet, dass**

    - die Steuerung mindestens einen Dynamikplan (70) umfasst, der in einer geordneten Datenstruktur eine Mehrzahl von Soll-Werten für die Bewegungen der mehreren Aktoren (21, 22, 23) in Bezug auf eine Zeitvariable (t) definiert, wobei die Soll-Werte mindestens eine Bewegungsgröße (A,B,C / A°,B°,C° / A°°,B°°,C°°) des jeweiligen Aktors (21, 22, 23) über die Dauer eines Behandlungs-Abschnitts definieren,

- und dass für das Behandlungsaggregat (6, 7, 12) ein Zielpunkt (Z1,Z2,Z3) definiert ist, und die Soll-Werte des Dynamikplans (70) für die zugehörige Gruppe der Aktoren (21,22,23) derart definiert sind, dass der Zielpunkt (Z1,Z2,Z3) des Behandlungsaggregats (6,7,12) bei einer multidimensionalen Stellbewegung einem Pfadverlauf folgt, der während einer Oberflächenbehandlung einen Geometriebezug gegenüber einem Konturverlauf des zu behandelnden Fahrzeugs einhält,

- und dass der Dynamikplan (70) während der Dauer des Behandlungs-Abschnitts für jede Phase mit einer multidimensionalen Stellbewegung des Behandlungsaggregats für die Aktoren (21,22,23) der Gruppe zueinander synchronisierte Beschleunigungen (A°°,B°°,C°°) definiert, sodass sich bei der Ausführung der multidimensionalen Stellbewegung übereinstimmende Beschleunigungsphasen (ki) für die mehreren Aktoren (21,22,23) ergeben.

**14.** Fahrzeug-Behandlungsanlage (1) nach einem der vorhergehenden Ansprüche, wobei

- die Soll-Werte mindestens eine Bewegungsgröße (A,B,C / A°,B°,C° / A°°,B°°,C°°) des jeweiligen Aktors (21, 22, 23) so definiert sind, dass sie eine momentane sowie eine zukünftige Bewegung des jeweiligen Aktors (21, 22, 23) beschreiben; UND/ODER
- die Soll-Werte des Dynamikplans für die Aktoren der Gruppe zueinander vollsynchronisierte Beschleunigungen definieren, die in übereinstimmenden Zeitphasen zueinander proportional sind; UND/ODER
- die übereinstimmenden Beschleunigungsphasen (ki) der Aktoren (21,22,23) der Gruppe für jeden Aktor (21, 22, 23) zu übereinstimmenden Zeitpunkten (ti) beginnen und enden; UND/ODER
- der Zielpunkt (Z1,Z2,Z3) für das Behandlungsaggregat (6, 7, 12) die momentane Raumlage (L) des Behandlungsaggregats (6, 7, 12) definiert, insbesondere eine translatorische Raumlage und/oder eine rotatorische Raumlage; UND/ODER wobei
- wobei der Geometriebezug des Zielpunktes (Z1,Z2,Z3) gegenüber dem Konturverlauf des zu behandelnden Fahrzeugs:

   ◦ ein fester senkrechter Abstand zur Fahrzeug-Oberfläche ist, UND/ODER
   ◦ ein fester Abstand zur Fahrzeug-Oberfläche unter einem vorgegebenen Einwirkwinkel relativ zur Fahrzeug-Oberfläche ist.

**15.** Fahrzeug-Behandlungsanlage (1) nach einem der vorhergehenden Ansprüche, wobei

- eine multidimensionale Stellbewegung des Behandlungsaggregats während eines Behandlungs-Abschnitts mit einer ein- oder mehrfach umkehrenden Bewegungsrichtung eines Portals der Fahrzeug-Behandlungsanlage erfolgt; UND/ODER
- eine multidimensionale Stellbewegung des Behandlungsaggregats während eines Behandlungs-Abschnitts ein temporäres Eintauchen des Zielpunktes (Z1,Z2,Z3) in eine konkave Kontur des zu behandelnden Fahrzeugs umfasst, insbesondere

   ◦ in eine konkave Front-Kontur unterhalb eines Alkoven, UND/ODER
   ◦ in eine konkave Front-Kontur oder Heck-Kontur unterhalb einer Stoßstange, UND/ODER
   ◦ in eine konkave Kontur unterhalb eines Dachaufbaus, der über die Frontscheibe oder Heckscheibe des Fahrzeugs ragt.

**Claims**

**1.** Control method for a vehicle treatment system (1) having one, two or more treatment units (6, 7, 12) which can be moved by controllable actuators (21, 22, 23) relative to a vehicle (3) in order to carry out a surface treatment of the vehicle (3), **characterized in that** the control method comprises the following steps:

- creating or reading in a schedule (50) for a vehicle treatment, wherein the schedule (50) has adjustment positions (Pi) for a plurality of actuators (21,22,23) as target values in a predefined sequence (i);
- creating a movement plan (60) for the vehicle treatment, wherein the movement plan comprises a target path (U,V,W), a target adjustment rate (U',V',W') and preferably a target adjustment rate change (U'',V'',W'') for the plurality of actuators (21,22,23), specifically as functions with respect to a flow variable (s);

- creating a dynamic plan (70) for the vehicle treatment, wherein the dynamic plan comprises target values for the movements of the plurality of actuators in relation to a time variable (t);
- and wherein the dynamic plan is generated from the movement plan by local stretching and/or compression by means of time scaling (81,82) (s=s(t)).

2.  Control method according to Claim 1, wherein the target values of the dynamic plan are present in the form of at least one of the following movement variables:

    - target trajectory (A,B,C) for the plurality of actuators in relation to a time variable (t), AND/OR
    - target speed (A°,B°,C°) for the plurality of actuators in relation to the time variable (t), AND/OR
    - target acceleration (A°°,B°°,C°°) for the plurality of actuators in relation to the time variable (t), AND/OR
    - target jerk for the plurality of actuators in relation to the time variable (t).

3.  Control method according to one of the preceding claims, further comprising the step of:

    - actuating the actuators (21, 22, 23) while carrying out the vehicle treatment with a regulating system, in particular a state regulating system, based on the target values of the dynamic plan (70).

4.  Control method according to one of the preceding claims, wherein the following steps are carried out in order to create a schedule (50):

    - for at least one treatment unit (6,7,12): defining a target point (Z1, Z2, Z3) as a geometric reference point of the treatment unit (6,7,12) whose spatial position (R) can be defined in coordinates (x,y,z);
    - stipulating a sequence (i = 0,1,2,...) of target spatial positions (Ri, R0, R1, R2,...) of the target point (Z1) to be adopted during a vehicle treatment, wherein the sequence of target spatial positions is stipulated, in particular, on the basis of contour recognition data (51) relating to the vehicle (3) to be treated;
    - determining adjustment positions (Pi, P0, P1, P2,...) of at least one actuator (21,22,23), which is involved in the movement of the target point (Z1), based on a known geometry of the vehicle treatment system (1), such that the adjustment positions (Pi, P0, P1, P2,...) correlate with the target spatial positions (Ri,R0,R1,R2,...) of the target point (Z1).

5.  Control method according to the preceding claim, wherein, in order to create a schedule (50) for a plurality of treatment units (6,7,12), target points (Z1,Z2,Z3) whose instantaneous spatial positions (R,L) can be defined in coordinates (x,y,z) are provided, and wherein spatially coordinated target spatial positions (Ri,Li) of these target points (Z1,Z2) of the plurality of treatment units (6,7,12) are planned as a target pose sequence (K).

6.  Control method according to one of the preceding claims, wherein

    - the time scaling at least in sections provides constant scaling (81) as stretching in the case of a time scaling factor (F); AND/OR
    - the time scaling at least in sections provides variable scaling (82), wherein the variable scaling is formed in a state space by a chain of integrals over a range of the flow variable (s), and wherein the integrals are formed
    O on the basis of boundary conditions at the range limits, AND
    O on the basis of previously known physical limits and/or defined operating limits for the actuator movement, in particular the maximum speed (U°max) and/or the maximum acceleration (U°°max) of an actuator (21,22,23).

7.  Control method according to one of the preceding claims, wherein synchronized movement paths (U,V,W) and/or synchronized trajectories (A,B,C) are created for a group of actuators (21,22,23), the movements of which are kinematically or logically coupled.

8.  Control method according to one of the preceding claims, wherein kinematically coupled movements are available for a group of actuators (21,22,23) when

    - these actuators (21,22,23) are intended for the operation of two or more treatment units (6,7,12), AND
    - there is at least one actuator (21) in the group, the operation of which causes at least two partial movements, specifically a first partial movement for a first treatment unit (7) and at least one further partial movement for a second treatment unit (12).

9. Software product for a vehicle treatment system, wherein the software product is stored on a data carrier or transmitted by a data interface, **characterized in that** the software product comprises instructions which are designed to carry out a control method according to one of the preceding claims when executed on an electronic data processing device, in particular a control device (30) of a vehicle treatment system (1).

10. Control device for a vehicle treatment system (1), wherein the control unit has interfaces in order to connect the control device to a plurality of actuators (21,22,23) of the vehicle treatment system (1), **characterized in that** the control device (30) comprises instructions which are designed to carry out a control method according to one of the preceding claims.

11. Vehicle treatment system (1) having two or more treatment units (6,7,12) which can be moved by controllable actuators (21, 22, 23) to carry out a surface treatment of a vehicle (3), wherein the vehicle treatment system (1) comprises a controller (30) and a contour detection means (31) for detecting a contour of the vehicle (3) to be treated, **characterized in that** the controller (30) is designed to carry out a control method according to one of the preceding claims.

12. Vehicle treatment system according to the preceding claim, wherein at least one of the treatment units (6,7,12) is movable relative to the vehicle (3) by operation of two or more actuators (21,22,23), and wherein the movements of a group of actuators (21,22,23) are coupled one or more times, such that there is at least one actuator (21), the operation of which causes partial movements for two or more of the treatment units (6,7,12).

13. Vehicle treatment system (1) according to one of the preceding claims, wherein there is at least one group of actuators (21, 22, 23) designed to jointly move the treatment unit (6,7,12) relative to a vehicle (3) to be treated in a multidimensional adjustment movement, wherein the vehicle treatment system (1) comprises at least one regulator (32) and the controller transfers target values to the at least one regulator (32), on the basis of which the regulator (32) generates one or more adjustment signals for actuating the actuators, **characterized in that**

> - the controller comprises at least one dynamic plan (70) which, in an ordered data structure, defines a plurality of target values for the movements of the plurality of actuators (21, 22, 23) in relation to a time variable (t), wherein the target values define at least one movement variable (A,B,C / A°,B°,C° / A°°,B°°,C°°) of the respective actuator (21, 22, 23) over the duration of a treatment section,
> - and **in that** a target point (Z1,Z2,Z3) is defined for the treatment unit (6, 7, 12), and the target values of the dynamic plan (70) for the associated group of actuators (21,22,23) are defined in such a way that the target point (Z1,Z2,Z3) of the treatment unit (6,7,12), during a multidimensional adjustment movement, follows a path course which maintains a geometry reference with respect to a contour profile of the vehicle to be treated during a surface treatment,
> - and **in that** the dynamic plan (70), for the duration of the treatment section, defines mutually synchronized accelerations (A°°,B°°,C°°) for each phase with a multidimensional adjustment movement of the treatment unit for the actuators (21,22,23) in the group, with the result that matching acceleration phases (ki) result for the plurality of actuators (21,22,23) when carrying out the multidimensional adjustment movement.

14. Vehicle treatment system (1) according to one of the preceding claims, wherein

> - the target values define at least one movement variable (A,B,C / A°,B°,C° / A°°,B°°,C°°) of the respective actuator (21, 22, 23) in such a way that they describe a current and a future movement of the respective actuator (21, 22, 23); AND/OR
> - the target values of the dynamic plan define, for the actuators in the group, mutually fully synchronized accelerations that are proportional to each other in matching time phases; AND/OR
> - the matching acceleration phases (ki) of the actuators (21,22,23) in the group begin and end at matching times (ti) for each actuator (21, 22, 23); AND/OR
> - the target point (Z1,Z2,Z3) for the treatment unit (6, 7, 12) defines the current spatial position (L) of the treatment unit (6, 7, 12), in particular a translational spatial position and/or a rotational spatial position; AND/OR wherein
> - the geometry reference of the target point (Z1,Z2,Z3) relative to the contour profile of the vehicle to be treated:
>
>> O is a fixed vertical distance from the vehicle surface, AND/OR
>> O is a fixed distance from the vehicle surface at a predefined effective angle relative to the vehicle surface.

15. Vehicle treatment system (1) according to one of the preceding claims, wherein

- a multidimensional adjustment movement of the treatment unit takes place during a treatment section with a direction of movement of a portal of the vehicle treatment system that reverses one or more times; AND/OR
- a multidimensional adjustment movement of the treatment unit during a treatment section comprises temporary immersion of the target point (Z1,Z2,Z3) in a concave contour of the vehicle to be treated, in particular

O in a concave front contour below an alcove, AND/OR

O in a concave front contour or rear contour below a bumper, AND/OR

O in a concave contour below a roof structure that projects beyond the windscreen or rear window of the vehicle.

**Revendications**

1. Procédé de commande pour une installation (1) de traitement de véhicule comprenant un, deux ou plusieurs groupes de traitement (6, 7, 12) qui sont aptes à être déplacés par rapport à un véhicule (3) au moyen d'actionneurs commandables (21, 22, 23) afin d'effectuer un traitement de surface du véhicule (3), **caractérisé en ce que** le procédé de commande comprend les étapes suivantes :

   - établir ou lire un plan de déroulement (50) pour un traitement de véhicule, le plan de déroulement (50) présentant des positions de réglage (Pi) pour une pluralité d'actionneurs (21, 22, 23) en tant que valeurs de consigne dans un ordre prédéfini (i) ;
   - établir un plan de déplacement (60) pour le traitement de véhicule, le plan de déplacement comprenant un cheminement de consigne (U, V, W), un taux de positionnement de consigne (U', V', W') et de préférence une modification du taux de positionnement de consigne (U", V", W") pour la pluralité d'actionneurs (21, 22, 23) et ce, en tant que fonctions par rapport à une variable de déroulement (s) ;
   - établir un plan dynamique (70) pour le traitement de véhicule, le plan dynamique comprenant des valeurs de consigne pour les mouvements de la pluralité d'actionneurs par rapport à une variable temporelle (t) ;
   - et dans lequel le plan dynamique est généré à partir du plan de déplacement par un étirement et/ou une compression locale au moyen d'une mise à l'échelle temporelle (81, 82) (s=s(t)).

2. Procédé de commande selon la revendication 1, dans lequel les valeurs de consigne du plan dynamique se présentent sous la forme d'au moins une des grandeurs de mouvement suivantes :

   - trajectoire de consigne (A, B, C) pour la pluralité d'actionneurs par rapport à une variable temporelle (t), ET/OU
   - vitesse de consigne (A°, B°, C°) pour la pluralité d'actionneurs en fonction de la variable temporelle (t), ET/OU
   - accélération de consigne (A°°, B°°, C°°) pour la pluralité d'actionneurs en fonction de la variable temporelle (t), ET/OU
   - impulsion de consigne pour la pluralité d'actionneurs en fonction de la variable temporelle (t).

3. Procédé de commande selon l'une des revendications précédentes, comprenant en outre l'étape consistant à :

   - piloter les actionneurs (21, 22, 23) pendant la réalisation du traitement de véhicule avec une régulation, notamment une régulation d'état, sur la base des valeurs de consigne du plan dynamique (70).

4. Procédé de commande selon l'une des revendications précédentes, dans lequel, pour l'établissement d'un plan de déroulement (50), on met en œuvre les étapes suivantes :

   - pour au moins un groupe de traitement (6, 7, 12) :
   - définition d'un point cible (Z1, Z2, Z3) comme point de référence géométrique du groupe de traitement (6, 7, 12), dont la position spatiale (R) est apte à être définie en coordonnées (x, y, z) ;
   - détermination d'une séquence (i = 0, 1, 2, ...) de positions spatiales de consigne (Ri, R0, R1, R2, ...) du point cible (Z1) à prendre pendant un traitement de véhicule, la détermination de la séquence de positions spatiales de consigne s'effectuant notamment sur la base de données de reconnaissance de contour (51) du véhicule (3) à traiter ;
   - détermination des positions de réglage (Pi, P0, P1, P2, ...) d'au moins un actionneur (21, 22, 23) impliqué dans le déplacement du point cible (Z1) sur la base d'une géométrie connue de l'installation (1) de traitement de véhicule, de sorte que les positions de réglage (Pi, P0, P1, P2, ...) soient en corrélation avec les positions spatiales de consigne (Ri, R0, R1, R2, ...) du point cible (Z1).

5. Procédé de commande selon la revendication précédente, dans lequel, pour l'établissement d'un plan de déroulement (50) pour une pluralité de groupes de traitement (6, 7, 12), il est prévu des points cibles (Z1, Z2, Z3) dont les positions spatiales momentanées (R, L) sont aptes à être définies en coordonnées (x, y, z), et dans lequel des positions spatiales de consigne (Ri, Li) de ces points cibles (Z1, Z2) de la pluralité de groupes de traitement (6, 7, 12), coordonnées spatialement les unes par rapport aux autres, sont planifiées sous la forme d'une séquence de poses de consigne (K).

6.  Procédé de commande selon l'une des revendications précédentes, dans lequel

- la mise à l'échelle temporelle prévoit, au moins partiellement, une mise à l'échelle constante (81) en tant qu'étirement à un facteur de mise à l'échelle temporelle (F) ; ET/OU
- la mise à l'échelle temporelle prévoit au moins partiellement une mise à l'échelle variable (82), la mise à l'échelle variable étant formée dans un espace d'état par une chaîne d'intégrales sur une plage de la variable de déroulement (s), et dans lequel la formation d'intégrales se fait
o sur la base de conditions marginales aux limites de la plage, ET
o sur la base de limites physiques connues au préalable et/ou de limites de fonctionnement définies pour le mouvement de l'actionneur, notamment la vitesse maximale (U°max) et/ou l'accélération maximale (U°°max) d'un actionneur (21, 22, 23).

7.  Procédé de commande selon l'une des revendications précédentes, dans lequel des trajectoires de déplacement synchronisées (U, V, W) et/ou des trajectoires synchronisées (A, B, C) sont établies pour un groupe d'actionneurs (21, 22, 23) dont les mouvements sont reliés cinématiquement ou logiquement.

8.  Procédé de commande selon l'une des revendications précédentes, dans lequel il existe des mouvements reliés cinématiquement pour un groupe d'actionneurs (21, 22, 23), lorsque

- ces actionneurs (21, 22, 23) sont prévus pour l'actionnement de deux ou plusieurs groupes de traitement (6, 7, 12), ET
- il existe dans le groupe au moins un actionneur (21) dont l'actionnement provoque au moins deux mouvements partiels, à savoir un premier mouvement partiel pour un premier groupe de traitement (7) ainsi qu'au moins un autre mouvement partiel pour un deuxième groupe de traitement (12).

9.  Produit logiciel pour une installation de traitement de véhicule, le produit logiciel étant enregistré sur un support de données ou transmis par une interface de données, **caractérisé en ce que** le produit logiciel comprend des instructions qui sont conçues pour exécuter, lors de l'exécution sur un dispositif électronique de traitement de données, notamment un appareil de commande (30) d'une installation (1) de traitement de véhicule, un procédé de commande selon l'une des revendications précédentes.

10. Appareil de commande pour une installation (1) de traitement de véhicule, l'appareil de commande présentant des interfaces pour relier l'appareil de commande à une pluralité d'actionneurs (21, 22, 23) de l'installation (1) de traitement de véhicule, **caractérisé en ce que** l'appareil de commande (30) comprend des instructions qui sont adaptées pour mettre en œuvre un procédé de commande selon l'une des revendications précédentes.

11. Installation (1) de traitement de véhicule comprenant deux ou plusieurs groupes de traitement (6, 7, 12) déplaçables par des actionneurs commandables (21, 22, 23) afin d'effectuer un traitement de surface d'un véhicule (3), l'installation (1) de traitement de véhicule comprenant une commande (30) et une détection de contour (31) pour détecter un contour du véhicule (3) à traiter, **caractérisée en ce que** la commande (30) est adaptée pour mettre en œuvre un procédé de commande selon l'une des revendications précédentes.

12. Installation de traitement de véhicule selon la revendication précédente, dans laquelle au moins un des groupes de traitement (6, 7, 12) est apte à être déplacé par rapport au véhicule (3) en actionnant deux ou plusieurs actionneurs (21, 22, 23), et dans laquelle les mouvements d'un groupe d'actionneurs (21, 22, 23) sont couplés une ou plusieurs fois, de sorte qu'il existe au moins un actionneur (21) dont l'actionnement provoque des mouvements partiels pour deux ou plusieurs des groupes de traitement (6, 7, 12).

13. Installation de traitement de véhicules (1) selon l'une des revendications précédentes, dans laquelle il existe au moins un groupe d'actionneurs (21, 22, 23) qui sont conçus pour mettre en commun le groupe de traitement (6, 7, 12) dans un mouvement de réglage multidimensionnel par rapport à un véhicule (3) à traiter, l'installation (1) de traitement de véhicule comprenant au moins un régulateur (32) et la commande transmettant des valeurs de consigne audit au moins un régulateur (32), sur la base desquelles le régulateur (32) génère un ou plusieurs signaux de réglage pour la commande des actionneurs, **caractérisée en ce que**

- la commande comprend au moins un plan dynamique (70) qui définit dans une structure de données ordonnée une pluralité de valeurs de consigne pour les mouvements de la pluralité d'actionneurs (21, 22, 23) par rapport à une variable temporelle (t), les valeurs de consigne définissant au moins une grandeur de mouvement (A, B, C / A°, B°, C° / A°°, B°°, C°°) de l'actionneur respectif (21, 22, 23) sur la durée d'une partie de traitement,
- et **en ce qu'**un point cible (Z1, Z2, Z3) est défini pour le groupe de traitement (6, 7, 12), et les valeurs de consigne du plan dynamique (70) pour le groupe associé d'actionneurs (21, 22, 23) sont définies de telle sorte que le point cible (Z1, Z2, Z3) du groupe de traitement (6, 7, 12) suit, lors d'un mouvement de réglage multidimensionnel, un tracé de trajectoire qui, pendant un traitement de surface, respecte une traction géométrique par rapport à un tracé de contour du véhicule à traiter,
- et **en ce que** le plan dynamique (70) définit, pendant la durée de la partie de traitement, des accélérations (A°°, B°°, C°°) synchronisées entre elles pour les actionneurs (21, 22, 23) du groupe pour chaque phase avec un mouvement de positionnement multidimensionnel de l'ensemble de traitement, de sorte qu'il en résulte des phases d'accélération (ki) concordantes pour les plusieurs actionneurs (21, 22, 23) lors de l'exécution du mouvement de positionnement multidimensionnel.

**14.** Installation (1) de traitement de véhicule selon l'une des revendications précédentes, dans laquelle

- les valeurs de consigne d'au moins une grandeur de mouvement (A, B, C / A°, B°, C° / A°°, B°°, C°°) de l'actionneur respectif (21, 22, 23) sont définies de telle sorte qu'elles décrivent un mouvement momentané ainsi qu'un mouvement futur de l'actionneur respectif (21, 22, 23) ; ET/OU
- les valeurs de consigne du plan dynamique pour les actionneurs du groupe définissent des accélérations entièrement synchronisées les unes par rapport aux autres, qui sont proportionnelles les unes aux autres dans des phases temporelles concordantes ; ET/OU
- les phases d'accélération concordantes (ki) des actionneurs (21, 22, 23) du groupe commencent et se terminent à des instants concordants (ti) pour chaque actionneur (21, 22, 23) ; ET/OU
- le point cible (Z1, Z2, Z3) pour le groupe de traitement (6, 7, 12) définit la position spatiale momentanée (L) du groupe de traitement (6, 7, 12), en particulier une position spatiale en translation et/ou une position spatiale en rotation ; ET/OU
- le tracé géométrique du point cible (Z1, Z2, Z3) par rapport au tracé du contour du véhicule à traiter :

  o est une distance perpendiculaire fixe par rapport à la surface du véhicule, ET/OU
  o est une distance fixe par rapport à la surface du véhicule sous un angle d'incidence prédéterminé par rapport à la surface du véhicule.

**15.** Installation (1) de traitement de véhicule selon l'une des revendications précédentes, dans laquelle

- un mouvement de positionnement multidimensionnel de l'ensemble de traitement est effectué pendant une partie de traitement avec un sens de déplacement d'un portique de l'installation de traitement de véhicule qui s'inverse une ou plusieurs fois ; ET/OU
- un mouvement de positionnement multidimensionnel de l'unité de traitement pendant une partie de traitement comprend une immersion temporaire du point cible (Z1, Z2, Z3) dans un contour concave du véhicule à traiter, en particulier
  o dans un contour avant concave sous une alcôve, ET/OU
  o dans un contour avant concave ou un contour arrière concave sous un pare-chocs, ET/OU
  o dans un contour concave situé en dessous d'une structure de toit dépassant du pare-brise ou de la lunette arrière du véhicule.

Fig. 1

Fig. 2

# **Fig. 3**

# **Fig. 4**

# Fig. 5

## Fig. 6

## Fig. 7

Fig. 8

# Fig. 9

80

s° = ds/dt

s 41

4

3

2

81

ds
dt

82

82'

1

40

0

0    4    8    12    16    20    t

# Fig. 10

s°max,fix

s°max (variabel)

90

s° 41

16

12

8

91

93

92

4

40

0

0    0.2    0.4    0.6    0.8    1    s

100

# Fig. 11

# Fig. 12

Z3

Z1

Dx

7    6

Z2

12   4

K

L(Z3)   41

Dx

Li

(Portal fährt hin und her)
(Portal moves back and forth)

s

R(Z1)

s*

Ri

40

s

R'(Z1)    Q2

s

X/Pi

s

s

# Fig. 13

Z3

Z1

Dx

Z2

51

P(Z1)

L3　L3'　L4　L4'　L5

s

R(Z3)　R3　R3'　R4　R4'　R5

s

X(s)

s

(Portal fährt in Gegen-x-Richtung!)
*(Portal moves in anti-x-direction)*

## Fig. 14

## Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3936392 A1
- US 2008300724 A1